(19) Europäisches Patentamt
European Patent Office
Office européen des brevets

(11) EP 2 898 367 B1

(12) # EUROPEAN PATENT SPECIFICATION

(45) Date of publication and mention of the grant of the patent:
**11.01.2017 Bulletin 2017/02**

(21) Application number: **13838186.8**

(22) Date of filing: **12.09.2013**

(51) Int Cl.:
***G11B 9/06*** (2006.01) ***G02F 1/167*** (2006.01)

(86) International application number:
**PCT/JP2013/075381**

(87) International publication number:
**WO 2014/046217 (27.03.2014 Gazette 2014/13)**

(54) **RECORDING MEDIUM, IMAGE RECORDING APPARATUS, AND IMAGE RECORDING SET**

AUFZEICHNUNGSMEDIUM, BILDAUFZEICHNUNGSVORRICHTUNG UND BILDAUFZEICHNUNGSSATZ

SUPPORT D'ENREGISTREMENT, APPAREIL D'ENREGISTREMENT D'IMAGES ET ENSEMBLE D'ENREGISTREMENT D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2012 JP 2012204304**
**11.06.2013 JP 2013122907**

(43) Date of publication of application:
**29.07.2015 Bulletin 2015/31**

(73) Proprietor: **Ricoh Company, Ltd.**
**Tokyo 143-8555 (JP)**

(72) Inventors:
- **TAMOTO, Nozomu**
**Tokyo 143-8555 (JP)**
- **OHTANI, Shinji**
**Tokyo 143-8555 (JP)**
- **YAMASHITA, Daiki**
**Tokyo 143-8555 (JP)**

(74) Representative: **Lamb, Martin John Carstairs**
**Marks & Clerk LLP**
**90 Long Acre**
**London WC2E 9RA (GB)**

(56) References cited:
**JP-A- 2007 011 342**
**JP-A- 2008 139 632**
**JP-B1- 5 014 507**
**JP-B1- 5 014 507**
**US-A1- 2007 002 428**

EP 2 898 367 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a rewritable recording medium to which writing is performed by an image recording apparatus that externally drives the recording medium, and relates to an image recording set.

### Background Art

In recent years, electronic paper that has visibility and portability close to that of a printed material, does not require a backlight, and is low in power consumption, thin, and lightweight, has been put into practical use and gained attention. Electronic paper is classified into internally-driven paper-like display (hereinafter may be referred to as PLD) that includes a drive element inside and can display images by itself, and externally-driven rewritable paper using a recording medium on which writing is performed by a printer. The rewritable paper includes all recording media such as paper and sheets on which rewriting can be repeatedly performed, and is synonymous with a rewritable recording medium included in the present invention.

Various systems of electronic paper have been proposed, and among them, as a PLD, an electrophoretic system, that performs display by changing an optical reflectance by causing white and/or colored particles charged in a liquid to migrate to the surface side or the opposite direction of a display medium by an electric field is known as a most practical system. As an example of the electronic paper of such system, disclosed are a display or recording device, in which an electric field is applied to a mixed multi particle dispersion containing particles that migrate in opposite directions depending on the electric field, to optically shield certain particles, to thereby change optical reflection characteristics of the dispersion system (see PTL 1).

There also has been disclosed an electrophoretic display device, in which a large number of microcapsules each encapsulating a dispersion system obtained by dispersing electrophoretic particles in a colored dispersion medium is provided between a pair of counter electrode plates (see PTL 2).

Furthermore, there has been disclosed an ink, in which an electric field is applied to microcapsules each containing first particles and second particles having reverse polarity to that of the first particles to thereby migrate either the first or second particles to the surface (see PTL 3). As described above, the electrophoretic system, particularly a microcapsule electrophoretic system, has been already been put into practical use as electronic paper, and has gained much attention.

These electrophoretic electronic papers can retain displayed content without requiring electric power after displaying the content once, and this is recognized as one of the advantages, however, there are problems in image retentiveness because if an image is left without application of an electric field after it is displayed, the image density changes with time, and if the image is influenced by static electricity and pressure, from the outside, the image quality is deteriorated.

To solve these problems, for example, a method for controlling a solubility parameter in a dispersion medium by making walls of microcapsules from a graft copolymer (see PTL 4) and a method for dissolving or dispersing a polymer that does not increase viscosity in a suspending fluid (see PTL 5) have been disclosed.

These technologies are effective for improving the image retentiveness required for PLD. However, these are not sufficient for realizing image retentiveness required for rewritable paper.

The reason for this is differences in structure and purpose of use between the PLD and the rewritable paper. In case of the PLD, bases each having an electrically conductive layer are respectively provided, as electrodes, at the bottom and top of a display layer that is a region where electrophoretic particles move, and the PLD has a structure covered by a housing. Therefore, it is hardly influenced from the outside, and a voltage can be applied thereto as appropriate, and accordingly, the PLD can retain an image.

However, the rewritable paper is not covered by a housing and is easily influenced from the outside, and in addition, a recording medium does not include an element or power source for applying a voltage, so that it is impossible to retain an image for a long period of time from the outside. Although the influence from the outside can be reduced by a covering by a protective layer, in some cases, this is not sufficient as an effect of enhancing image retentiveness.

Rewriting frequency of the PLD is high in use, so that the extent of demand for image retentiveness is not so high, however, the rewritable paper is highly demanded to retain records for a long period of time like paper, so that semipermanent image retentiveness must be realized.

As a technology for significantly enhancing image retentiveness, a number of methods for fixing colored particles have been disclosed in which the viscosity of a dispersion medium in which electrophoretic particles are dispersed is controlled by temperature, in particular, recording is performed by reducing the viscosity by heating, followed by cooling to fix colored particles.

For example, disclosed are a method using a resin, rubber, wax, or synthetic wax that are solids at normal

temperatures and are softened by applying heat or a solvent (see PTL 1), a method in which two phases of liquid and solid coexist in a dispersion liquid containing electrophoretic particles, a dispersion medium, a dye, and a dispersant when the dispersion medium is at a normal temperature, and when the electrophoretic particles electrophoretically migrate, the solid phase is dissolved and the two phases are converted into a uniform liquid phase (see PTL 6), a method in which a heat-meltable substance that is solid when it is not heated and becomes liquid when it is heated, specifically, waxes, saturated fatty acid, higher alcohols, and electrophoretic particles are encapsulated into microcapsules (see PTL 7), a method using a mixture that has fluidity at an electrophoretic operating temperature, and becomes an optically opaque solid at a temperature lower than the electrophoretic operating temperature, specifically, a mixture of a substance selected from long-chain alcohols, phenols, aromatic ketones, decanes, and dodecanes, and a substance selected from paraffin, solders, waxes, and saturated hydrocarbons (see PTL 8), a method using higher paraffin hydrocarbons, solders, waxes, or aromatic hydrocarbons as a dispersion medium that is solid at normal temperatures and becomes liquid by heating (see PTL 9), and a method in which a dispersion medium is composed mostly of rice wax and contains a surfactant (see PTL 10).

Thus, a dispersion medium that is solid at normal temperatures and becomes liquid when being heated is very effective for improvement in image retentiveness because electrophoretic particles are fixed by cooling after recording.

However, in these technologies, waxes, solders, and saturated fatty acids are added to the dispersion medium, so that the temperature responsiveness in transition between the solid state and the liquid state is low, the rewriting speed decreases, and the viscosity of the dispersion medium is not sufficiently lowered even by heating, the contrast deteriorates, and image quality deteriorates due to repeated rewriting. Therefore, satisfactory performance is not obtained. Further, there are various problems that dispersibility of the electrophoretic particles is low compared to the case where the solvent is used as the dispersion medium, electrophoretic properties may be impaired, or image quality is deteriorated due to aggregation of particles.

A method using a dispersion medium that turns into a gel in a PLD is disclosed. For example, a thermal writing system is disclosed which includes a dispersion medium that turns into a gel and a sol (liquid) reversibly according to temperature and electrophoretic particles, and locally causes the electrophoretic particles to migrate by locally converting the dispersion medium into a sol (see PTL 11).

However, with this technology, as a dispersion medium that turns into a gel and a sol, specifically, a high-molecular substance whose solvent becomes a poor solvent is used, however, the high-molecular substance is dissolved when the temperature of the solvent is high, and the high-molecular substance becomes insoluble and turns into a gel when the temperature is low. Therefore, the temperature responsiveness in transition between a gel and a sol is low, so that the display speed and image quality are not satisfactory.

In addition, a display gel for electrophoretic display including a dispersion medium, white particles, colored particles, and a gelling agent has been disclosed (see PTL 12).

However, in this technology, although a gelling agent is contained in the dispersion medium, thermal reversibility is not described, and it is described that, due to gelatinization, the dispersion medium is substantially equally divided into continuous and/or discontinuous minute regions and turns into a gel, and the particles electrophoretically migrate by the action of an electric field in the dispersion medium in a gel state. Therefore, the problems in the rewriting speed and contrast are not solved, and a solution to the problems is still not attained.

On the other hand, a display medium for electrophoretic display containing a liquid system, a set of a thermoreversible gelling agent and colored particles in the PLD has been disclosed (see PTL 13). With this technology, by containing the thermoreversible gelling agent, the display medium turns into non-gel and is reduced in viscosity at temperature close to or higher than a melting point of the thermoreversible gelling agent, so that images can be formed in a display device.

When the display device is cooled after an image is formed, the medium turns into a gel, so that even without applying an electric field, the image is stably maintained. In the method using a thermoreversible gelling agent, the gelling agent itself causes gelatinization, so that the temperature responsiveness is higher and more stable than in the conventional technologies in which waxes and solders are added or gelatinization is controlled by solubility of a high-molecular substance in a solvent, so that this method is very excellent for enhancing image retentiveness.

However, as long as the thermoreversible gelling agent is also controlled by temperature, the influence of reduction in rewriting speed on use with frequent image rewriting increases. As described above, this technology described in PLT 13 using a thermoreversible gelling agent is premised on that it is used for a display device having two parallel transparent conductor electrode panels, that is, a PLD, so that the disadvantage of deterioration in display responsiveness becomes greater than the advantage of semipermanent image retentiveness by using a thermoreversible gelling agent. In addition, a heating unit and a cooling unit must be provided inside the device, so that the thickness and weight of the PLD increase, and this is also a big disadvantage.

Therefore, the effect of use of the thermoreversible gelling agent has not been sufficiently utilized, and has not been applied to a PLD in actuality.

In addition to image retentiveness, the electronic paper is important to be capable of stably outputting an image

even when displaying and recording are repeatedly performed. Accordingly, it is necessary to improve electrophoretic particles, for example, to enhance charging retentiveness and dispersibility, or to decrease interparticle interactions.

In recent years, there have been attempts to use electret particles (may be referred to as "permanent charge particles" or "permanently charged particles") as the electrophoretic particles. The electret particles have a deeper charge-trapping level compared to in the case of frictional charged resin, thus can stably hold charges. Therefore, electrification charges are constantly uniform and stable even when displaying and recording are repeatedly performed, which can improve image stability for repetitive rewriting.

As related arts using the electret particles, there have been proposed a method in which a sample to both sides of which high voltage has been applied is heat-melted and then cooled and solidified while keeping the voltage, and a method in which high voltage is applied to an external electrode and discharge to a sample (see PTL 14). However, the above-proposed technologies have a disadvantage in that particles are not uniform in charge amount, particle diameter, and shape (i.e., particles are not processed so as to have uniform shape after being pulverized), so that, in the case of being used repeatedly, particles are unevenly distributed in a panel or changed in flowability, which makes impossible to always maintain a stable image displaying state.

There has been also proposed a method in which electret particles are obtained by discharging a liquid containing a resin and a coloring agent from an oscillating nozzle; applying a DC potential to an electrode facing the nozzle; positively or negatively charging droplets sprayed from the nozzle by an induction phenomenon; and drying and solidifying the droplets on which charges remain (see PTL 15). The above-proposed method results in a substantially spherical shape. However, in actually, there have been problems with respect to limitation in a size of a discharging nozzle, adhesion or aggregation of sprayed particles with each other. Therefore, there is a limit to micronization of particles, which makes difficult to efficient production.

The need for image retentiveness and stability required for rewritable paper is higher than that for PLD as described above. The PLD is configured as a device in order to perform rewriting, so that the rewriting frequency is naturally high. Therefore, it hardly requires semipermanent image retentiveness. On the other hand, the rewritable paper is rewritable, however, on the assumption that it is used instead of paper in the case of a still image, high image retentiveness and stability are required. In addition, flexible rewritable paper that is not covered by a housing is more easily influenced by static electricity and pressures from the outside than the PLD covered by a housing. Therefore, image retentiveness and image stability for repetitive rewriting is a very important issue for rewritable paper rather than for PLD.

As described above, related arts to solve various problems with respect to electronic paper are mainly for the PLD, and the rewritable paper has not been studied sufficiently. The rewritable paper has different needs from the PLD. Especially, it has been strongly required to improve image retentiveness and image stability for repetitive rewriting which are essential properties to achieve a rewritable paper.

US 2007/002428 A1 is the US patent application corresponding to PTL13.

JP 5014507 B1 relates to fine electret particles that are evenly charged. Specifically, the particles are core-shell type fine electret particles each comprising a core part and a shell part. They are characterized in that the core part contains a material in which pigments can be dispersed and the shell part comprises an electret resin, which is a fluorine-containing resin. The resin is brought into an electret state by irradiation with electron beams, irradiation with radiation, or a corona discharge.

Citation List

Patent Literature

[PTL 1] Japanese Patent Application Publication (JP-B) No. 50-15115
[PTL 2] Japanese Patent (JP-B) No. 2551783
[PTL 3] JP-B No. 4410135
[PTL 4] Japanese Patent Application Laid-Open (JP-A) No. 2007-286124
[PTL 5] JP-A No. 2010-2933
[PTL 6] JP-B No. 4168556
[PTL 7] JP-A No. 2001-301325
[PTL 8] JP-B No. 4114374
[PTL 9] JP-A No. 2003-91022
[PTL 10] JP-A No. 2007-140367
[PTL 11] JP-A No. 02-196227
[PTL 12] JP-A No. 2003-149691

[PTL 13] JP-A No. 2007-11342
[PTL 14] JP-A No. 2005-31189
[PTL 15] JP-A No. 2007-206570

Summary of Invention

Technical Problem

An object of the present invention is to provide an externally driven rewritable recording medium which is improved in image retentiveness and image stability for repetitive rewriting, and achieves high visibility and flexibility. Note that, the recording medium according to the present invention basically refers to a recording medium capable of repeatedly carrying out recording and erasing of an image, but the recording medium according to the present invention includes a recording medium which has the same structure to that of the present invention with which a rewritable function is restricted, due to high image retentiveness.

Solution to Problem

As means for solving the aforementioned problems, a recording medium of the present invention includes the features of appended independent claim 1.

Advantageous Effects of Invention

The present invention can solve the above existing problems and provide a rewritable recording medium which is improved in image retentiveness and image stability for repetitive rewriting, and achieves high visibility and flexibility.

Brief Description of Drawings

FIG. 1A is a schematic diagram illustrating one example of a shape of a cell used in an image recording layer of the recording medium of the present invention using cells.
FIG. 1B is a schematic diagram illustrating another example of a shape of a cell used in an image recording layer of the recording medium of the present invention using cells.
FIG. 1C is a schematic diagram illustrating another example of a shape of a cell used in an image recording layer of the recording medium of the present invention using cells.
FIG. 2 is a schematic diagram illustrating one example of the recording medium of the present invention.
FIG. 3 is a schematic diagram illustrating another example of the recording medium of the present invention.
FIG. 4 is a schematic diagram illustrating one example of the recording medium of the present invention using cells.
FIG. 5 is a schematic diagram illustrating another example of the recording medium of the present invention using cells.
FIG. 6 is a schematic diagram illustrating one example of the recording medium of the present invention using microcapsules.
FIG. 7 is a schematic diagram illustrating another example of the recording medium of the present invention using microcapsules.
FIG. 8 is a schematic diagram illustrating an example where a cross-sectional shape of the microcapsule is an ellipse in the recording medium of the present invention.
FIG. 9 is a schematic diagram illustrating an example where a cross-sectional shape of the microcapsule is a polygon in the recording medium of the present invention.
FIG. 10 is a schematic diagram illustrating an example of the recording medium of the present invention in which an electrically conductive layer is formed between the image recording layer and the base.
FIG. 11 is a schematic diagram illustrating another example of the recording medium of the present invention in which an electrically conductive layer is formed between the image recording layer and the base.
FIG. 12 is a schematic diagram illustrating one example of the recording medium of the present invention in which an electrically conductive base is used as a base.
FIG. 13 is a schematic diagram illustrating another example of the recording medium of the present invention, in which an electrically conductive layer is formed between the image recording layer and the base.
FIG. 14 is a schematic diagram illustrating another example of the recording medium of the present invention, in which an electrically conductive layer is formed between the image recording layer and the base.

FIG. 15 is a schematic diagram illustrating one example of the recording medium of the present invention, in which an electrically conductive layer is formed between the image recording layer and the base, and which includes an electrically conductive base.

FIG. 16 is a schematic diagram illustrating one example of a method for producing a recording medium used in the present invention.

FIG. 17 is a schematic diagram illustrating another example of a method for producing a recording medium used in the present invention.

FIG. 18 is a schematic diagram illustrating one example of a heating unit of an image recording apparatus in the image recording set of the present invention.

FIG. 19 is a schematic diagram illustrating another example of a heating unit of an image recording apparatus in the image recording set of the present invention.

FIG. 20 is a schematic diagram illustrating an example of an electric field applying unit of an image recording apparatus in the image recording set of the present invention.

FIG. 21 is a schematic diagram illustrating another example of an electric field applying unit of an image recording apparatus in the image recording set of the present invention.

FIG. 22 is a schematic diagram illustrating an example of an image recording apparatus in the image recording set of the present invention.

FIG. 23 is a schematic diagram illustrating another example of an image recording apparatus in the image recording set of the present invention.

FIG. 24 is a schematic diagram illustrating another example of an image recording apparatus in the image recording set of the present invention.

FIG. 25 is a schematic diagram illustrating another example of an image recording apparatus in the image recording set of the present invention.

FIG. 26 is a schematic diagram illustrating another example of an image recording apparatus in the image recording set of the present invention.

FIG. 27 is a schematic diagram illustrating another example of an image recording apparatus in the image recording set of the present invention.

FIG. 28 is a diagram illustrating an example of an image recording set of the present invention where a recording medium and an image recording apparatus are integrated together.

FIG. 29 is a diagram illustrating another example of an image recording set of the present invention where a recording medium and an image recording apparatus are integrated together.

## Description of Embodiments

### (Recording Medium)

A recording medium of the present invention includes a first base, a second base, and an image recording layer provided between the first base and the second base, and may further include other members, if necessary.

The recording medium is different from an internally driven paper like display (PLD), which contains a driving element therein and is capable of displaying an image by itself. The recording medium is an externally driven recording medium capable of repeatedly carrying out recording and erasing of an image by an external image recording apparatus, and is synonymous with rewritable paper. Specifically, recording and erasing of an image on the recording medium is carried out by an image recording apparatus, which is not present in the recording medium and is externally set. Accordingly, the recording medium does not necessarily require a driving element or a power source, which is required for displaying an image to PLD.

The image recording layer contains at least electrophoretic particles; a dispersion medium; and a thermoreversible gelling agent. At least one type of the electrophoretic particles is electret particles.

The electret particles are permanently charged particles, and, when an electric field is externally applied thereto, can migrate through the dispersion medium by the action of the electric field. In the present invention, although electret particles are used as the electrophoretic particles, a mixture of the electret particles and other electrophoretic particles may be used. For example, in the case where one type (color) of electrophoretic particles is contained in the image recording layer, electret particles are used as the electrophoretic particles. On the other hand, in the case where two or more types (colors) of electrophoretic particles are contained in the image recording layer, the electret particles may be used alone or in combination with other electrophoretic particles.

The dispersion medium is a dispersion medium, in which the electrophoretic particles containing at least the electret particles are dispersed.

The thermoreversible gelling agent is a material, which turns the dispersion medium into a sol (liquidizes the dispersion medium) when the temperature thereof exceed a certain temperature, turns the dispersion medium into a

gel (solidifies the dispersion medium) when the temperature thereof becomes a certain temperature or lower, and can reversibly induces sol-gel transition depending on temperature.

The recording medium contains, in the image recording layer, a thermoreversible gelling agent, which turns the dispersion medium into a gel during displaying an image or storing an image at normal temperature (e.g., room temperature), and turns the dispersion medium into liquid when an image is recorded (written) at temperature higher than room temperature. Use of the thermoreversible gelling agent enables to turn the dispersion medium into a gel during displaying an image or storing an image, and therefore movements of the electrophoretic particles containing at least electret particles are suppressed in the image recording layer, which prevents a change in image quality during storage over a long period. Even in a case where the recording medium is externally influenced by static electricity or pressure, high image retentiveness can be attained. Moreover, the dispersion medium is liquidized when it is heated at the time of recording (writing). When recording is performed by an image recording apparatus, therefore, the electrophoretic particles containing at least electret particles can freely move in the image recording layer, hence enabling to repeatedly record an image.

In the case where the thermoreversible gelling agent is used in PLD, which requires a high writing speed as a display device, such PLD has not had sufficient display speed. In the case of a recording medium, which is required to be used like paper, it is sufficiently applicable with recording (writing) speed as obtained when the thermoreversible gelling agent is used in the recording medium.

In the case where the image recording layer containing the thermoreversible gelling agent is used as an internally driven PLD having a driving element therein and capable of displaying an image by itself as a conventional technique, it is necessary to house, in the display, a heating device or a cooling device as well as a display driving device configured to apply an electric field, and thus a size and weight of the display increase. In addition, it is necessary to increase and decrease the temperature every time the display is rewritten, and therefore there are problems that display speed is slow, and it is difficult to attain a sufficient display contrast ratio.

However, the recording medium of the present invention is not PLD, and is a recording medium to which recording of a still image is performed by an external image recording apparatus. Therefore, it is not necessary to provide a heating device, a cooling device, and a power supply to the recording medium itself, and these devices can be provided in an external image recording apparatus, which is separate from the recording medium. Accordingly, the problems caused with PLD, i.e., low display speed, and insufficient display contrast ratio, can be solved. Specifically, the recording medium can be formed into the shape or state similar to paper.

In addition to solving a problem of low display speed caused by using a thermoreversible gelling agent, which has been a disadvantage of PLD, the recording medium of the present invention can attain a large advantage that semipermanent image retentiveness can be realized by using the thermoreversible gelling agent.

A recording medium of the present invention includes the image recording layer. The image recording layer includes at least electrophoretic particles, a dispersion medium, and a thermoreversible gelling agent. At least one type of the electrophoretic particles is electret particles. The image recording layer has any configuration as long as it is provided between bases, but preferably has a configuration in which a plurality of small cells are arrayed which each contains at least electrophoretic particles containing at least electret particles, a dispersion medium, and a thermoreversible gelling agent, which configuration greatly reduces uneven distribution of electrophoretic particles containing at least electret particles and maintains a gap of the image recording layer to thereby enhance image retentiveness and image stability for repetitive rewriting. In the case where the cells are not formed, there is a possibility that bending of the recording medium causes a crack in a gel to thereby to potentially lead to deterioration in image quality. However, the above problem may be solved by using the cells.

The cells may have any shape. For example, as illustrated in FIG. 1, there can be provided cells having various shapes such as a circle, an oval, or a polygon. However, in the case where an interior angle formed by the cell walls is too small, the electrophoretic particles containing at least electret particles may be accumulated at the corners of the cells and the particles do not migrate, which may deteriorate image quality. Also, in the case where the cells are circular, the cells are increased in volume, which may deteriorate image contrast. Thus, the cells have most preferably a hexagonal honeycomb shape. The cells having the honeycomb shape can further give an effect of enhancing the strength of media.

It is possible and effective that microcapsules which each contains electrophoretic particles containing at least electret particles, a dispersion medium, and a thermoreversible gelling agent are used as the cell. Incorporation of the thermoreversible gelling agent used in the present invention into the microcapsules in combination with electrophoretic particles containing at least electret particles and a dispersion medium allows thermoreversibly so-gel transition of the dispersion medium in the microcapsules. Therefore, at the temperature higher than a room temperature, the dispersion medium in the microcapsules is immediately turned into a liquid, so that the electrophoretic particles containing at least electret particles can migrate by the action of electric field. When it is cooled, the dispersion medium in the microcapsules is turned into a gel, so that the electrophoretic particles containing at least electret particles cannot migrate even when an electric field is applied thereto. Thus, semi-permanent image retentiveness can be achieved.

The dispersion medium is almost not evaporated from the microcapsules, which is very effective for improving

image stability for repetitive rewriting. Also, the microcapsules can be formed by applying a microcapsule layer onto the base, so that they are advantageous in that they can be produced at low cost using a simple method such as a roll-to-roll method.

<Base>

A material of the base is appropriately selected depending on the intended purpose without any limitation, and examples thereof include: plastic, such as a synthetic resin, and a natural resin; paper; waterproof paper; synthetic paper; glass; a wood board; and a metal plate. Among them, a synthetic resin is preferable from the viewpoints of flexibility and transparency.

The synthetic resin is appropriately selected depending on the intended purpose without any limitation, and examples thereof include polyethylene, chlorinated polyethylene, ethylene-vinyl acetate copolymer, ethylene-ethyl acrylate copolymer, polypropylene, polybutadiene, an AS (acrylonitrile-styrene copolymer) resin, an ABS (acrylonitrile-butadiene-styrene copolymer) resin, a methyl methacrylate resin, a vinyl chloride resin, vinyl chloride-vinyl acetate copolymer, vinyl chloride-vinylidene chloride copolymer, vinyl chloride-acrylic ester copolymer, vinyl chloride-methacrylic acid copolymer, vinyl chloride-acrylonitrile copolymer, ethylene-vinyl alcohol-vinyl chloride copolymer, propylene-vinyl chloride copolymer, a vinylidene chloride resin, a vinyl acetate resin, methacrylic acid-styrene copolymer, a polybutylene resin, methyl methacrylate-butadiene-styrene copolymer, polyvinyl alcohol, polyvinyl formal, a cellulose-based resin, a polyamide-based resin, a polyacetal resin, a polycarbonate resin, a urethane-based resin, a polyester resin (e.g., a polyethylene terephthalate resin, and a polybutylene terephthalate resin), a polyphenylene oxide resin, a polysulfone resin, a polyamideimide resin, a polyamino bismaleimide resin, a polyether sulfone resin, a polyphenylene sulfone resin, a polyacrylate resin, a grafted polyphenylene ether resin, a polyether ether ketone resin, a polyether imide resin, a fluorine-based resin (e.g., a polytetrafluoroethylene resin, a polyfluoroethylene propylene resin, tetrafluoroethylene-perfluoroalkoxy ethylene copolymer, ethylene-tetrafluoroethylene copolymer, polyvinylidene fluoride, polychlorotrifluoroethylene, and fluoro rubber), and a silicone-based resin (e.g., a silicone resin, and silicone rubber). These may be used alone, or in combination.

For the purpose of enhancing scratch resistance and wear resistance of the recording medium, the base may be made of a resin which is cured by light, heat, and electron beam. Examples of such resin include a photocurable resin and a thermosetting resin. For example, an acrylic resin, a methacrylic resin, a diallyl-phthalate resin, an epoxy-based resin, a urethane resin, a melamine resin, and alkyd resin cane be used.

A commercially available molded resin film may also used and are effective. Examples thereof include polyolefin-based resin films such as a polyethylene film, a polypropylene film, and an ethylene polymer film; polyester-based films such as polyethylene terephthalate, polyethylene naphthalate, and an aromatic polyester; polyamide-based films such as nylon 6, MXD 6, and aramid; and other films such as a polyimide film, a polyetherimide film, a polyether ether ketone film, a polyether sulfone film, a polyphenylene sulfide film, a triacetylcellulose film, a polycarbonate film, a polystyrene film, a polyacrylonitrile film, a polyvinyl chloride film, a polyvinylidene chloride film, a polyvinyl alcohol film, a polyvinyl butyral film, an ethylene-vinyl acetate copolymer film, an ethylene-vinyl alcohol copolymer film, an ethylene-methacrylic acid copolymer film, an ionomer resin film, an acrylic film, a polyurethane film, and a fluororesin film.

A uniaxial- or biaxial-oriented film thereof can also be effectively used based on the property of the above-listed resin films that, when the films are stretched in a certain direction while heating, molecules therein are arranged in a stretched direction to thereby increase strength of the films. Also, the above-listed resin film may be surface-treated with corona treatment, plasma treatment, flame treatment, or acid-alkali treatment on one or both sides, which is effective. Further, it is possible and effective that the above-listed resin films may be coated with various coating agents by applying, depositing, or ion-plating them onto one or both sides thereof. The methods can impart antireflection effect or fingerprint adhesion-resistance effect, enhance wear-resistance or scratch-resistance, or impart antistatic property, which is very effective in the present invention.

Among them, preferred are polyethylene terephthalate, polyethylene naphthalate, polyamide (nylon), polyimide and acrylic resin, because they have high transparency and flexibility, and excellent heat resistance and film forming properties for practical use.

The base includes a first base and a second base, and used in a configuration in which the image recording layer is sandwiched between the first base and the second base. In this case, the image recording layer may be in any state as long as it is covered with the base. For example, a binder resin used in the image recording layer may serve as the base. Also, a material of the first base may be the same as or different from that of the second base.

A shape of the first base and the second base is appropriately selected depending on the intended purpose without any limitation, and example thereof includes a sheet-like shape.

Moreover, it is also possible and effective to give the base itself electric conductivity. When the electrically conductive base is used, reduction in voltage caused by the base can be inhibited, and the electric field strength of the image recording layer can be enhanced, and therefore n image with high contrast can be attained with lower driving

voltage. Note that, the electric conductivity means characteristics for passing through electricity, and is indicated with electric conduction rate or specific resistance (inverse number of electric conduction rate). When the measurement is performed by means of a resistivity meter, surface resistivity or volume resistivity can be determined. Examples of a commercial product of a measuring device of the resistivity include HIRESTA or LORESTA manufactured by Mitsubishi Chemical Analytech Co., Ltd.

The electrically conductive base is roughly classified into a base of which surface has been made electrically conductive, and a base which itself is electrically conductive. The base of which surface has been made electrically conductive can be obtained by providing an electrically conductive film on an insulating base formed of the aforementioned plastic films or glass. Examples of the electrically conductive film include metal or metal foil (e.g., indium-tin oxide (ITO), zinc oxide, gold, silver, copper, aluminum, chromium, tin, and nickel), plated metal, metal deposit, silver nanowire, graphene, carbon nanotube, and electrically conductive polymer. As the electrically conductive film, any of these materials may be formed into a film on the base. Conventionally known methods such as a spattering, vaporization, and coating can be used for forming the film. The surface resistivity of the electrically conductive film is preferably $10^7$ Ω·cm or less, more preferably $10^3$ Ω·cm or less, further preferably $10^1$ Ω·cm or less. The base provided to the side from which the recording medium is viewed is preferably transparent. In this case, a transparent base on a surface of which a transparent electrically conductive film has been provided is preferably used.

Moreover, the base which itself is electrically conductive is also preferably used. Such base may be effective, because it is not necessary to separately provide an electrode, as long as the base itself is electrically conductive. However, most of the bases, which are electrically conductive, are not transparent. In this case, the base which itself is electrically conductive is preferably used as a base provided on an opposite side to the side from which the recording medium is viewed. The base, which is electrically conductive, is appropriately selected depending on the intended purpose without any limitation, provided that the base itself is electrically conductive, and examples thereof include: a metal plate, metal sheet, or metal foil formed of gold, silver, copper, aluminum, chromium, tin, nickel, or iron; a carbon sheet or carbon paper formed of carbon or graphite; a film or sheet for shielding electromagnetic waves; electrically conductive paper; electrically conductive cloth; electrically conductive glass; and electrically conductive plate.

As the electrically conductive base, electrically conductive filler-containing bases are also preferably used. The filler may be referred to as a filling material or a filling, and any solid content contained in a base can be considered to be the filler. Examples of the filler include metal particles, metal flake, metal fiber, metal fiber resin, metal-coated fiber, and metal-coated particles made of metals such as copper, silver, gold, aluminium, nickel, iron, steel, platinum, or zinc; metal oxides such as silica, titanium oxide, magnesium oxide, tin oxide, or indium oxide; electrically conductive metal oxides which are obtained by doping the above-listed metal oxides with antimony, tin, or aluminium; carbon powder, carbon fiber, flake-shaped carbon compounds such as plumbago, carbon black, carbon nanotube, fullerene or graphite; and conventional known electrically conductive fillers, any of which can be used.

The fillers may have various shapes such as spherical, flaky, fibrous, or acicular, any of which are suitably used. However, the fillers more preferably have anisotropic shapes. The term "anisotropic shape" refers to a shape which has different cross-sections depending on axes therealong, unsimilar to an isotropic shape which has the same cross-sections along any axes such as a spherical particles. That is, the anisotropic shape is acicular or fibrous which has a long-axis length different from a short-axis length. An aspect ratio is defined as a ratio of major axis to minor axis when approximately represented as ellipsoids in the case of being particulate matter, and a ratio of length to diameter in the case of fibrous matter. The filler having the anisotropic shape more preferably has a high aspect ratio. This is because of the following reason. Electric conductivity of a base is exerted by contacting the filler which contained in the base with each other. Therefore, in order to enhance the electric conductivity, an amount of the filler contained in the base should be increased. However, when the amount of the filler is significantly increased, a film serving as the base may become brittle, that is, become inflexible. When the filler having the anisotropic shape is used, the number of contact points between fillers is decreased, so that even a small amount of filler can enhance the electric conductivity. Notably, the aspect ratio can be determined by, for example, cutting a filler-containing base in a perpendicular direction, enlarging a section thereof about 1,000 times using an electron microscope, measuring long-axis lengths, short-axis lengths, and diameters of particles existing on the section, taking an average thereof.

The filler-containing base can be obtained by mixing a filler with various synthetic resins, monomers, and oligomers to thereby obtain a dispersion liquid; applying the dispersion liquid to form a film; and, if necessary, curing the film. The filler may be dispersed using conventional known methods such as a bead mill, a ball mill, a roll mill, or an ultrasonication. Also, the filler may be applied by means of conventional known methods such as a dip coating, a blade coating, a wire bar coating, a roll coating, a spray coating, a nozzle coating, or a spin coating. If necessary, various additives such as a dispersing agent, a surfactant, a surface modifier may be added to the dispersion liquid. Commercially available filler-containing resin films or sheets may be effectively used as the filler-containing base.

In the case where the base which itself is electrically conductive is provided, it is not necessary to separately provide an electrode, but low volume resistivity as well as low surface resistivity are required. The volume resistivity of such base is preferably $10^7$ Ω·cm or less, more preferably $10^3$ Ω·cm or less, further preferably $10^1$ Ω·cm or less.

Regardless of types of electrically conductive bases, a base a surface of which has been made electrically conductive, or an electrically conductive base in which the base itself has electric conductivity, these electrically conductive bases are preferably formed in contact with the image recording layer, and at the same time, these electrically conductive bases are formed in a manner that these bases are electrically connected with an exterior of the recording medium. In the case where the electrically conductive base includes an electrically conductive layer on a surface of the base, the following method can be used. Specifically, an electrode is provided in an exterior of the recording medium to electrically connect the electrode with the electrically conductive layer. Owing to the aforementioned configuration, an electric field can be directly applied to the image recording layer from an image recording apparatus.

Moreover, the electrically conductive base for use in the recording medium may be formed as either the first base or the second base, or both the first base and the second base are formed with the electrically conductive base. Use of the electrically conductive base enables to provide a high contrast image at lower driving voltage. In the case where an image recording system is used in which an entire surface of the recording medium is heated and an electric field is applied to the area in which an image is recorded to thereby record an image, an image may not be recorded or image deletion may be caused, if an electrically conductive base is used for the base provided at the position where the electric field is applied to perform image recording. Accordingly, the electrically conductive base is preferably used only for the base provided at the opposite side to the side at which an electric field is applied. On the other hand, in the case where a system is used in which an area of the recording medium to which an image is recorded is heated while applying an electric field to an entire surface of the recording medium to thereby record an image, there is not the above-described restriction, and therefore it is preferred that the electrically conductive base is used for both the first base and the second base. A configuration in which the electronic conductive base is used for both the first base and the second base is more effective for achieving high contrast, low driving voltage, and high duration of the recording medium than a configuration in which the electronic conductive base is used for either the first base or the second base. Accordingly, the recording medium of the former configuration is more preferable in the present invention.

These bases may be a single layer or a laminate in which a plurality of films are laminated. For example, a laminate in which a plurality of films having different functions are laminated on top of another or a laminate in which a distinct film is formed on a plastic film can be considered as one base, which are effective for achieving the effect of the present invention.

As the base, at least the base provided at the side from which the recording medium is viewed is preferably transparent. On the other hand, the base provided on the opposite side to the side from which the recording medium is viewed may be transparent, translucent, or opaque. Visibility and expressiveness can be effectively enhanced by providing an opaque (e.g., white, black, and monocolor) base at the opposite side to the side from which the recording medium is viewed. In this case, the recording medium can be produced by using a transparent base for the first base, which is provided at the side from which the recording medium is viewed, and using a translucent or opaque base for the second base, which is provided an the opposite side to the side from which the recording medium is viewed. Moreover, it is possible and effective to use waterproof paper and synthetic paper as well as colored synthetic resin film as the opaque base.

Effective examples of a method for obtaining the opaque base include a method in which fillers such as titanium oxide, carbon black, or various coloring pigments are incorporated into the base. Specifically, a white base can be obtained by incorporating titanium oxide into the base. A black base can be obtained by incorporating carbon black into the base. Other conventional known various pigments or particles may be incorporated into the base. Alternative effective method for obtaining the white base is a method in which many flat voids are formed in the base, and a color of the base is made white by the action of multiplex reflection at interfaces of the flat voids.

The average thickness of the base is appropriately selected depending on the intended purpose without any limitation, but it is preferably 1 μm to 1,000 μm, more preferably 5 μm to 500 μm, particularly preferably 10 μm to 200 μm. In this case, the average thickness of the first base may be the same as or different from that of the second base.

When the average thickness of the base is less than 1 μm, wrinkles and bends may be formed, and image defects may be caused in the case where the wrinkles and bends are formed. On the other hand, when the average thickness of the base is greater than 1,000 μm, flexibility and portability (thin film, light weight) may be insufficient, or it may be necessary to apply high voltage at the time of recording (writing).

<Image Recording Layer>

The image recording layer contains at least electret particles, a dispersion medium, a thermoreversible gelling agent; and, if necessary, further contains electrophoretic particles other than the electret particles and other components.

The image recording layer is formed between the first base and the second base. The image recording layer may have a configuration in which a dispersion liquid which contains electrophoretic particles containing electret particles, a dispersion medium, and a thermoreversible gelling agent is directly sandwiched between the bases. More preferably, the image recording layer may have a configuration in which the dispersion liquid is encapsulated into a plurality of cells.

Further preferably, the image recording layer may have a configuration in which the dispersion liquid is formed into microcapsules and disposed onto the base. Use of the microcapsules can prevent evaporation of the dispersion medium, and as a result, the recording medium can be stably used for a long period. Especially, the recording medium of the present invention is heated every time when recording or erasing is performed, and therefore to prevent evaporation of the dispersion medium is very important for achieving high image quality, high stability, and long service life of the recording medium. To this end, use of the microcapsules is more preferable. Moreover, slurry of the microcapsules can be applied by a coating process in the production of the recording medium, which is effective in low cost production of the recording medium.

The microcapsules formed on the base need to be fixed thereon, and are preferably fixed with a binder resin. The binder resin has a function of ensuring insulating properties of the image recording layer, in addition to a purpose of fixing the microcapsules. Especially in the case where electrically conductive layers or electrically conductive bases are provided above and below the microcapsules, an electric field cannot be applied to the image recording layer when the image recording layer does not have insulating properties. As a result, recording cannot be performed by allowing the particles to migrate within the image recording layer.

As for the binder resin, suitably used is a resin having excellent insulating properties, and having high affinity or adhesion to a base, electronic conductive layer, or microcapsules. A type of the resin for use is not particularly limited, and examples thereof include a thermoplastic resin, and a curable resin known in the art. The resin for use is more preferably a thermo- or photo-curable resin. The microcapsule layer can be easily formed on the base by mixing any of these binder resins with the microcapsules, applying the mixture onto the base, and drying, and thus an insulating image recording layer can be provided.

In the case where the microcapsules are not mixed with water, various resin materials can be used. In the case of slurry in which the microcapsules are mixed with water, an aqueous resin is preferably used. Among the aqueous resin, a resin to which a hydrophilic group or hydrophilic segment has been provided, an emulsion in which a hydrophilic resin is forcibly emulsified using a surfactant, a prepolymer which is blocked with a blocking agent having an hydrophilic group, or a blocked prepolymer to which a hydrophilic segment has been provided are preferable, and an aqueous urethane resin having these functions is particularly preferable.

It is preferred that the image recording layer be insulated only with the binder resin which has been mixed with the microcapsules. In the case where insulating properties are not sufficient, however, it is possible to further apply an insulating resin onto the microcapsule layer to form an image recording layer, and this method may be effective for maintaining insulating properties of the image recording layer. As long as the microcapsules can be formed into a film with the aqueous resin on a base, even when the microcapsules are used in the form of slurry where the microcapsules and water are mixed, a resin which has been mixed with an organic solvent can be used as a resin formed thereon. Therefore, the insulating resin can be selected from a wide range of resins. In this case, if a thickness of the insulating resin is significantly greater than the thickness of the microcapsule layer, the image recording layer becomes thick and electric field intensity is decreased, potentially leading to low contrast. Accordingly, it is desirable that the thickness of the insulating resin is not greatly thicker than the thickness of the microcapsule layer.

«Electret Particles»

The electret particles are appropriately selected depending on the intended purpose without any limitation as long as they are permanently charged particles.

Example of a method for determining whether the particles are permanently charged includes a method in which a charge amount of the particles is measured by Faraday gauge. Surface charges which have been charged through friction are gradually decreased, and, finally, no longer decreased, charge amount at the time point of which can be determined as a charge amount of the electret particles. However, in the case of highly electret particles, the above method may be very time-consuming. Example of a method for determining whether the particles are permanently charged in a short time includes a thermal stimulating surface-potential decay method based on a property in which as higher electret particles, the higher the temperature at which the surface charges begin to decrease is. For example, the following method can be used. A metal plate which is grounded and on which electret particles (a sample) are arranged in a circular shape is placed on a hot plate which is increased in temperature at a constant rate. The sample is measured for the temperature and the surface potential to thereby evaluate the temperature at which the surface potentials begin to decrease by heating and the potential decay rate at 100°C.

A more simple method is also used in which electret particles are left to stand for a long period of time, and then the electrophoretic property is evaluated. For example, the following method can be used. After a recording medium which has been produced using electret particles is left to stand for 1 month or more, the recording medium is heated and an electric field is applied thereto again. Then, an electrophoretic property before being left to stand is compared with that of after being left to stand to thereby simply determine whether the particles are permanently charged.

The electret particles are charged by polarization of materials or externally ion charge-implantation, which is

different from those in which charges are held on surfaces of particles. Therefore, a charge-trapping level is deep and the particles can stably keep holding charges. Generally, it is possible to permanently polarize the particles with keeping dipole orientation by melting insulating materials, in particular, polymer materials, and then cooling and freezing them while high voltage is applied thereto.

In the present invention, particularly preferable are electret particles which are made to have an electret property by means of at least one of electron beam irradiation, radiation irradiation and corona discharge.

The electret particles preferably contain at least a fluorine-containing compound, which can result in uniformly charged electret particles.

Any fluorine-containing compounds can be used without any limitation, provided that it is a compound containing fluorine in structure thereof. Examples thereof include fluorine-containing resins, fluorine-based elastomers, fluorocoating varnishes, polymerizable fluororesins, fluorine-containing oils and fluorine-containing adhesives.

Examples of the fluorine-containing resin include polytetrafluoroethylene (PTFE), polychlorotrifluoroethylene (PCTFE), polyvinylidene fluoride (PVDF), polyvinyl fluoride (PVF), perfluoro-polyether (PFPE) or copolymers thereof. These may be used alone or in combination.

The polytetrafluoroethylene (PTFE) is represented by the following General Formula.

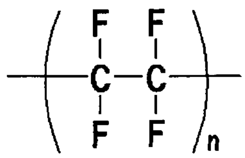

where n denotes a degree of polymerization.

A fluorine substitution rate of the PTFE is 100%.

Notably, the fluorine substitution rate in the present invention is a rate of the number of substituted fluorine atoms to the number of hydrogen atoms attached to carbon atoms in the unsubstituted structure $-(CH_2\text{-}CH_2)_n-$, $-(CH_2\text{-}CH_2\text{-}CH_2\text{-}O)_n-$, or $-(CH_2\text{-}CH(CH_3))_n-$, and is calculated according to the following equation:

$$\text{Fluorine substitution rate (\%)} = \{(\text{number of fluorine atom substituted for hydrogen atom}) \div (\text{number of hydrogen atom attached to carbon atom in unsubstituted hydrocarbon structure})\} \times 100$$

Examples of the PTFE include "POLYFLON PTFE" (manufactured by DAIKIN INDUSTRIES, LTD), and "TEFLON (registered trademark) PTFE" (manufactured by Du Pont-Mitsui Fluorochemicals Company, Ltd.).

The polychlorotrifluoroethylene (PCTFE) is represented by the following General Formula.

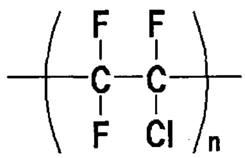

where n denotes a degree of polymerization.

The fluorine substitution rate of the PCTFE is 75% as calculated according to the above equation.

Example of the PCTFE includes "NEOFLON PCTFE" (manufactured by DAIKIN INDUSTRIES, LTD).

The polyvinylidene fluoride (PVDF) is represented by the following General Formula.

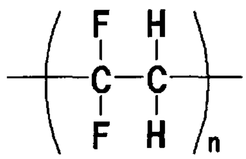

where n denotes a degree of polymerization.

The fluorine substitution rate of the PVDF is 50% as calculated according to the above equation.

Examples of the PVDF include "KF polymer" (manufactured by KUREHA CORPORATION), and "NEOFLON PVDF" (manufactured by DAIKIN INDUSTRIES, LTD).

The polyvinyl fluoride (PVF) is represented by the following General Formula.

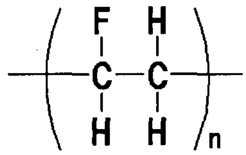

where n denotes a degree of polymerization.

The fluorine substitution rate of the PVF is 25% as calculated according to the above equation.

Example of the PVF includes "TEDLAR" (manufactured by Solvay Solexis, Inc).

The perfluoro-polyether (PFPE) is represented by the following General Formula.

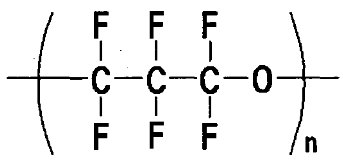

where n denotes a degree of polymerization.

The fluorine substitution rate of the PFPE is 100% as calculated according to the above equation.

Example of the PFPE includes "DEMNUM" (manufactured by DAIKIN INDUSTRIES, LTD).

Examples of copolymers containing any of the fluorine-containing resin as a copolymer component include tetrafluoroethylene-perfluoroalkoxy vinyl ether copolymer (PFA), tetrafluoroethylene-hexafluoro propylene copolymer (FEP), tetrafluoroethylene-ethylene copolymer (ETFE), chlorotrifluoroethylene-ethylene copolymer (ECTFE), vinylidene fluoride-tetrafluoroethylene copolymer, and vinylidene fluoride-hexafluoro propylene-tetrafluoroethylene terpolymer. These may be used alone or in combination. Among them, particularly preferable is vinylidene fluoride-hexafluoro propylene-tetrafluoroethylene terpolymer from the viewpoint of uniform and excellent chargeability.

The tetrafluoroethylene-perfluoroalkoxy vinyl ether copolymer (PFA) is represented by the following General Formula.

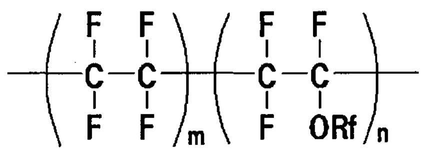

where Rf denotes a fluoroalkyl group, and m and n each denotes a copolymerization ratio of each of units.

The fluorine substitution rate of the tetrafluoroethylene unit is 100% and the fluorine substitution rate of the perfluoroalkoxy vinyl ether unit is 75%, so that the fluorine substitution rate of the PFA varies depending on the copolymerization ratios m and n.

Examples of the PFA include "TEFLON (registered trademark) PFA" (manufactured by Du Pont-Mitsui Fluorochemicals Company, Ltd.), "NEOFLON PFA" (manufactured by DAIKIN INDUSTRIES, LTD), and "FLUON PFA" (manufactured by ASAHI GLASS CO., LTD.).

The tetrafluoroethylene-hexafluoro propylene copolymer (FEP) is represented by the following General Formula.

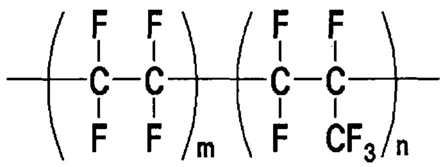

where m and n each denotes a copolymerization ratio of each of units.

The fluorine substitution rate of the tetrafluoroethylene unit is 100% and the fluorine substitution rate of the hexafluoro propylene unit is 100%, so that the fluorine substitution rate of the FEP is 100%.

Examples of the FEP include "NEOFLON FEP」 (manufactured by DAIKIN INDUSTRIES, LTD), "TEFLON (registered trademark) FEP" (manufactured by Du Pont-Mitsui Fluorochemicals Company, Ltd.), and "DYNEON FEP" (manufactured by Sumitomo 3M Limited).

The tetrafluoroethylene-ethylene copolymer (ETFE) is represented by the following General Formula.

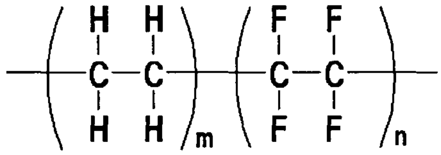

where m and n each denotes a copolymerization ratio of each of units.

The fluorine substitution rate of the tetrafluoroethylene unit is 100% and the fluorine substitution rate of the ethylene unit is 0%, so that the fluorine substitution rate of the ETFE varies depending on the copolymerization ratios m and n.

Examples of the ETFE include "FLUON ETFE" (manufactured by ASAHI GLASS CO., LTD.), "NEOFLON ETFE" (manufactured by DAIKIN INDUSTRIES, LTD), and "DYNEON ETFE" (manufactured by Sumitomo 3M Limited).

The chlorotrifluoroethylene-ethylene copolymer (ECTFE) is represented by the following General Formula.

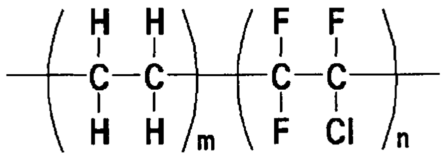

where m and n each denotes a copolymerization ratio of each of units.

The fluorine substitution rate of the chlorotrifluoroethylene unit is 75% and the fluorine substitution rate of the ethylene unit is 0%, so that the fluorine substitution rate of the ECTFE varies depending on the copolymerization ratios m and n.

Example of the ECTFE includes "HALAR" (manufactured by Solvay Solexis, Ink).

The vinylidene fluoride-tetrafluoroethylene copolymer is a copolymer of the vinylidene fluoride unit (fluorine substitution rate: 50%) and the tetrafluoroethylene unit (fluorine substitution rate: 100%), and the fluorine substitution rate of the vinylidene fluoride-tetrafluoroethylene copolymer varies depending on the copolymerization ratios of each of the units.

The vinylidene fluoride-hexafluoro propylene-tetrafluoroethylene terpolymer is a terpolymer of the vinylidene fluoride unit (fluorine substitution rate: 50%), the hexafluoro propylene unit (fluorine substitution rate: 100%), and the tetrafluoroethylene unit (fluorine substitution rate: 100%). The fluorine substitution rate of the terpolymer varies depending on the copolymerization ratios of each of the units.

Example of the vinylidene fluoride-hexafluoro propylene-tetrafluoroethylene terpolymer includes "VT470" (manufactured by DAIKIN INDUSTRIES, LTD).

Specific examples of fluorine-based elastomers, fluorocoating varnishes, polymerizable fluororesins, fluorine-containing oils and fluorine-containing adhesives include the following materials.

Examples of the fluorine-based elastomers include linear fluoropolyether compounds, such as "SIFEL 3590-N", "SIFEL 2610", and "SIFEL 8470" (manufactured by Shin-Etsu Chemical Co., Ltd.).

Examples of the fluorocoating varnishes include tetrafluoride ethylene/vinyl monomer copolymer, such as "ZEFFLE" (manufactured by DAIKIN INDUSTRIES, LTD).

Examples of the polymerizable fluororesins include polymerizable amorphous fluororesin, such as "CYTOP" (manufactured by Asahi Glass Co., Ltd.).

Examples of the fluorine-containing oils include perfluoropolyether oil, and ethylene chloride trifluoride lower polymer. Examples of the perfluoropolyether oil include "DEMNUM" (manufactured by DAIKIN INDUSTRIES, LTD).

Examples of the ethylene chloride trifluoride lower polymer include "DAIFLOIL" (manufactured by DAIKIN INDUSTRIES, LTD).

Example of the fluorine-based adhesives includes ultraviolet curable fluorinated epoxy adhesives, such as "OPTODYNE" (manufactured by DAIKIN INDUSTRIES, LTD).

Among these fluorine-containing compounds, preferred are fluorine-containing resins or copolymers, fluorine-based elastomers, fluorocoating varnishes, and polymerizable fluororesins, more preferred are PTFE, FEP, PFA, ETFE,

vinylidene fluoride-tetrafluoroethylene copolymer, and vinylidene fluoride-hexafluoro propylene-tetrafluoroethylene terpolymer, particularly preferred is vinylidene fluoride-hexafluoro propylene-tetrafluoroethylene terpolymer from the viewpoint of achieving high charging uniformity and more excellent electrophoretic property. These may be used alone or in combination.

Each of the electret particles used in the present invention may have a core-shell structure. The core-shell structure can improve charging uniformity, achieve excellent electrophoretic property, as well as improve dispersibility of the electret particles, and allows to produce electret particles having various colors, so that a recording medium which can perform recording with various colors can be obtained. The electret particles each of which does not have the core-shell structure can also contain a pigment. However, electret particles each having the core-shell structure can provide greater effects such as improved pigment dispersibility, the electret particles with brighter color, charging uniformity, and high electrophoretic property, because, in the case of the core-shell structure, an electret portion is functionally separated from a portion in which a pigment is dispersed.

For example, the shell mainly has electret property and the core mainly contains various pigments. In order to maximize the effect of improving charging uniformity, both of the core and the shell may contain the fluorine-containing compounds, but preferably, at least the shell contains the fluorine-containing compounds.

The above-listed fluorine-containing compounds can be contained in the shell. Among them, preferred are fluorine-containing resins or copolymers. Particularly preferable are PTFE, PCTFE, PVDF, PVF, PFPE, PFA, FEP, ETFE, ECTFE, vinylidene fluoride-tetrafluoroethylene copolymers and vinylidene fluoride-hexafluoro propylene-tetrafluoroethylene terpolymers. Further, the linear fluoropolyether compounds (e.g., "SIFEL") and polymerizable amorphous fluorine resins (e.g., "CYTOP") are also preferred.

The fluorine substitution rate of the fluorine-containing resins or copolymers is appropriately selected depending on the intended purpose without any limitation, but is preferably 10% or more, more preferably 20% or more, most preferably 25% to 100%.

The fluorine-containing resins or copolymers may be used alone or in combination. For example, other fluorine-containing compounds may be mix therewith.

The shell may consist of the fluorine-containing compounds, in particular, the fluorine-containing resins or copolymers; but, if necessary, appropriately contains known materials such as a dispersing agent, a pigment, a pigment derivative, and a stabilizer. A thickness of the shell is appropriately selected depending on the intended purpose without any limitation. However, the shell is preferably uniform in thickness from the viewpoint of charging uniformity.

The core preferably contains a pigment and a resin in which the pigment is dispersible (hereinafter may be referred to as "pigment-dispersible resin"), which allows pigments of various colors to disperse into the core to thereby achieve electret particles of various colors. Thus, a recording medium which can perform recording with various colors can be obtained.

The pigment-dispersible resin is not particularly limited, and may be the fluorine-containing resins or known resins. Example thereof include an acrylic resin, a polystyrene resin, a polyester resin, a polyurethane resin, a polyolefin resin (e.g., polyethylene and polypropylene), a chlorinated polyolefin resin, a vinyl chloride-vinyl acetate copolymer resin, a polyvinyl butyral resin, an alkyd resin, a petroleum resin, a ketone resin, an epoxy resin, a melamine resin, a silicone resin, a cellulose derivative, and a rubbery resin. These may be used alone or in combination. Among them, preferred are an acrylic resin, a polystyrene resin, and a polyurethane resin.

The resins may be a commercial products sold as colored or uncolored resin particles. Examples of acrylic resin particles include "TAFTIC series" (manufactured by TOYOBO CO., LTD.), "ART PEARL GR series" (manufactured by Negami Chemical Industrial Co., Ltd), "CHEMISNOW MX series" (manufactured by Soken Chemical & Engineering Co., LTD.), "RUBCOULEUR series" (manufactured by Dainichiseika Color & Chemicals Mfg. Co., Ltd.), and "TECHNOPOLYMER MB series" (manufactured by SEKISUI CHEMICAL CO., LTD.). Examples of polystyrene resin particles include "TECHNOPOLYMER SBX series" (manufactured by SEKISUI CHEMICAL CO., LTD.), and "CHEMISNOW SX series" (manufactured by Soken Chemical & Engineering Co., LTD.). Example of polyurethane resin particles includes "ART PEARL C series" (manufactured by Negami Chemical Industrial Co., Ltd).

The pigment to be dispersed in the core is not particularly limited, and may be known pigments. The pigment to be dispersed in the core may be inorganic pigments or organic pigments. Examples of the inorganic pigments include black pigments containing carbon as a main component (e.g., carbon black, lamp black, bone black, or botanical black) and white pigments (e.g., titanium oxide, zinc oxide, calcium carbonate, barium sulfate, and silicon oxide).

Examples of organic pigments include azo pigments such as β-naphthol-based pigments, naphthol AS-based pigments, acetoacetic acid-based pigments, aryl amide-based pigments, pyrazolone-based pigments, acetoacetic acid-aryl amide-based pigments, β-oxynaphthoic acid-based pigments (BON acid-based pigments), or acetoacetic acid allylide-based pigments; and polycyclic pigments, such as phthalocyanine-based pigments, anthraquinone-based pigments (threne-based pigments), perylene-based pigments, perinone-based pigments, indigo-based pigments, thioindigo-based pigments, quinacridone-based pigments, dioxazine-based pigments, isoindolinone-based pigments, quinophthalone-based pigments, metal complex pigments, methine-based pigments, azo methine-based pigments, and diketopyrrolopyrrole-based pigments. In addition, azine pigments, daylight fluorescent pigments (dye-resin solid solution), hollow resin pigments, nitroso pigments, nitro pigments, and natural pigments may also be used. Specific examples of commercial products thereof include "SYMULER FAST YELLOW 4GO", "FASDTOGEN SUPER MAGENTA RG", and "FASDTOGEN BLUE TGR" (manufactured by DIC Corporation), and "FUJI FAST RED 7R3300E" and "FUJI FAST CARMINE 527" (manufactured by Fuji Shikiso K.K.).

An amount of the pigment contained in the core is appropriately selected depending on the intended purpose without any limitation, but is preferably 1% by mass to 30% by mass, more preferably 5% by mass to 20% by mass.

The core may be composed of two components: the pigment and the pigment-dispersible resin; but, if necessary, further contains any materials such as a fluorine-containing compound, a dispersing agent, and a stabilizer. Examples of the fluorine-containing compound include the above-listed fluororesins, which may improve charging uniformity.

The core may be composed of independent spherical particles or aggregates of a plurality of spherical particles. That is, the electret particles used in the present invention may have a structure in which each of spherical particles serving as the core is coated with the shell or a structure in which each of aggregates of a plurality of spherical particles serving as the core is coated with the shell. Also, the core may be composed of non-spherical particles such as polygon particles, as well as spherical particles.

The electret particles may be negatively charged or positively charged. For example, the negatively or positively charged electret particles can be obtained by controlling electreting methods (e.g., electron beam irradiation, radiation irradiation, or corona discharge) or conditions thereof. Also the electret particles may contain materials which cause electron- or hole-trap to enhance the effect of the electret particles, which is effective.

-Production Method of Electret Particles-

The electret particles used in the present invention are appropriately selected depending on the intended purpose without any limitation. For example, the following method can be use.

The electret particles can be produced by emulsifying a fluorine-containing compound, which is in a liquid state under atmospheric or elevated pressure, in a liquid which is incompatible with the fluorine-containing compound, to thereby obtain emulsified particles; and subjecting the emulsified particles to electron beam irradiation, radiation irradiation, or corona discharge. A suitable example of the fluorine-containing compound in a liquid state under elevated pressure includes a fluorine-containing compound in a liquid state at a temperature of about 0°C to about 100°C, and a pressure of about 5 bar to about 30 bar. When this compound is used, the emulsified particles are prepared in the condition under which the compound is in a liquid state.

The emulsified particles can be prepared by a method including (1) a first step of stirring an oil phase in which the fluorine-containing compound is dissolved into a solvent such as ethyl acetate, methyl ethyl ketone or acetone; (2) a second step of stirring an aqueous phase which is a mixture of an emulsifier and a liquid which is incompatible with the fluorine-containing compound; and (3) a third step of mixing the aqueous phase with the oil phase while stirring to thereby prepare emulsified particles.

Examples of the fluorine-containing compound include the fluorine-containing resins or copolymers, the fluorine-containing oils, and the fluorine-containing adhesives. Also, colored emulsified particle can be obtained by incorporating a hydrophobic pigment into the fluorine-containing compound in advance.

Examples of the liquid which is incompatible with the fluorine-containing compound include water, ethylene glycol (EG), propylene glycol (PG), glycerin, and silicone oil. Fluorine-containing oils or below-described dispersion media also can be used. Examples of the emulsifiers used for emulsifying include polyvinyl alcohol and ethylene maleic anhydride.

The emulsified particles may be made to have an electret property by directly subjecting to electron beam irradiation, radiation irradiation or corona discharge. Alternatively, the emulsified particles may be made to have an electret property by subjecting to the above-listed methods after mixing the emulsified particles with a dispersion medium and a thermoreversible gelling agent, and forming into microcapsules as described below. The latter method is effective.

The electret particles can also be obtained by using a fluorine-containing polymerizable compound instead of the fluorine-containing compound in the above production method to thereby obtain emulsified particles, followed by curing the emulsified particles, and subjecting to electron beam irradiation, radiation irradiation or corona discharge in the same manner as in the above production method. Examples of the fluorine-containing polymerizable compound include the above-listed fluorine-based elastomers, fluorocoating varnishes, and polymerizable fluororesins. The emulsified particles can be cured by, for example, heating or UV irradiation.

The conditions under which the electron beam irradiation, radiation irradiation or corona discharge is performed are appropriately selected depending on the intended purpose without any limitation, provided that the particles can be made to have an electret property. The electron beam is preferably irradiated by, for example, using an electron beam accelerator at 1 kGy to 1,000 kGy, more preferably 10 kGy to 100 kGy. The radiation is preferably, for example, gamma rays at 1 kGy to 15 kGy. Also, the corona discharge is preferably performed by a method in which a corona charger is

set on target particles which have been placed on a base equipped with an electrode, and then high voltage at 6 kV to 8 kV is applied to an electric discharge wire.

Meanwhile, electret particles having the core-shell structure can be produced by the following method. However, a method for producing the electret particles having the core-shell structure is not limited thereto.

The electret particles having the core-shell structure can be produced by forming a core-shell construct consisting of a core which mainly contains a pigment-dispersible resin and a shell which contains a fluorine-containing compound, and then subjecting the core-shell construct to at least one of electron beam irradiation, radiation irradiation, and corona discharge.

One example of a method for forming the core-shell construct includes a method including (1) a first step of stirring a pigment-dispersible resin and a pigment to thereby obtain a pigment dispersion; (2) a second step of adding a fluorine-containing compound to the pigment dispersion and stirring to thereby obtain a mixed liquid; (3) a third step of adding a curing agent or a polymerization initiator to the mixed liquid and stirring to thereby obtain a solution; and (4) a fourth step of adding the solution obtained in (3) to an aqueous phase to which an emulsifier has been added and stirred and stirring to thereby obtain the core-shell construct.

In forming the core-shell construct, known mixers such as a mixer, a homogenizer, and a dissolver can be used for stirring, which are effective. In the above procedures, curing or polymerization of the core-shell construct is initiated by heating and stirring in the fourth step. The reaction should be controlled so as not to initiate the curing and polymerization in the previous steps (i.e., in the first step to the third step). Also, the pigment can be pulverized by a ball mill or a bead mill. Further, an average particle diameter of electret particles can be controlled by adjusting stirring conditions.

Examples of the emulsifier include polyvinyl alcohol or ethylene-maleic anhydride.

Additionally, electret particles can also be produced by previously preparing colored or uncolored resin particles (e.g., acrylic resin particles, polystyrene resin particles, or polyurethane resin particles), and then coating each of surfaces of the resin particles serving as the core with a shell which contains a fluorine-containing compound. This method is effective because spherical electret particles can be obtained.

The resultant core-shell construct can be made to have an electret property by subjecting to electron beam irradiation, radiation irradiation, or corona discharge in a suspension state, in a powder state which is obtained by removing the core-shell construct from the suspension, or in a dispersion state which is obtained by dispersing the powder into a dispersion medium.

The conditions under which the electron beam irradiation, radiation irradiation or corona discharge is performed are appropriately selected depending on the intended purpose without any limitation, provided that the particles can be made to have an electret property. The electron beam is preferably irradiated by, for example, using an electron beam accelerator at 1 kGy to 1,000 kGy, more preferably 10 kGy to 100 kGy. The radiation is preferably, for example, gamma rays at 1 kGy to 15 kGy. Also, the corona discharge is preferably performed by a method in which a corona charger is set on target particles which have been placed on a base equipped with an electrode, and then high voltage at 6 kV to 8 kV is applied to an electric discharge wire.

An average particle diameter of the electret particles is appropriately selected depending on the intended purpose without any limitation, but it is preferably 0.01 μm to 20 μm, more preferably 0.03 μm to 5 μm, particularly preferably 0.1 μm to 1 μm. When the average particle diameter is greater than 20 μm, the particles may be deteriorated in electrophoretic property, potentially leading to low image contrast. When the average particle diameter is smaller than 0.01 μm, the particles may aggregate with each other or image density may be deteriorated.

The average particle diameter means a particle diameter of an average primary particle which is representive of a group of particles, and represented as a number average particle diameter. Specifically, particles are directly taken out, or the recording medium is cut and the cross-section thereof is directly observed under an electron microscope. Then, primary particle diameters of the particles are determined, and the average value thereof (for example, the average value of 100 particles) is taken and determined as the average particle diameter.

-Electrophoretic Particles-

In the present invention the electret particles are used as at least on type of the electrophoretic particles. However, the electret particles can be mixed with electrophoretic particles which are not the electret particles. Especially, in the case where a mixture of two or more types of electrophoretic particles is used, electrophoretic property may be affected by interparticle interactions. Therefore, greater effects may be attained by using a mixture of the electret particles and electrophoretic particles which are not the electret particles.

The electrophoretic particles which are not the electret particles are appropriately selected depending on the intended purpose without any limitation, provided that they are particles that can electrophoretically migrate through a liquid dispersion medium upon application of electric field, and examples thereof include an organic pigment, and an inorganic pigment. A type of the pigment may be selected depending on a color of an image to be recorded in the recording medium.

Examples of white electrophoretic particles include: metal oxide, such as titanium oxide, zinc oxide, antimony oxide, aluminum oxide, and silicon dioxide; barium titanate; and barium sulfate.

Examples of black electrophoretic particles include carbon black, aniline black, titanium black, furnace black, lamp black and black iron oxide.

Examples of red electrophoretic particles include rhodamine 6G lake, dimethyl quinacridone, watching red, lake red C, brilliant carmine 6B, rose bengal, rhodamine B, alizarin lake, lithol red, permanent red 4R, and benzidine red.

Examples of yellow electrophoretic particles include chrome yellow, benzidine yellow, hansa yellow, naphthol yellow, molybdenum orange, quinoline yellow and tartrazine.

Examples of blue electrophoretic particles include phthalocyanine blue, methylene blue, cobalt blue, victoria blue, methyl violet, aniline blue, ultramarine blue, sky blue, indanthrene blue and cerulean blue.

Examples of green electrophoretic particles include phthalocyanine green, malachite green lake, naphthol green, emerald green, viridian, cobalt green and chrome oxide.

Examples of purple electrophoretic particles include fast violet, methyl violet lake, indigo, mineral violet and cobalt violet.

Examples of brown electrophoretic particles include toluidine maroon, indanthrene red violet RH, burnt umber and iron oxide.

These may be used alone, or in combination.

It is also possible to use white electrophoretic particles, which have been colored with various colorants, such as the aforementioned pigments or dyes.

For the purpose of enhancing dispersibility of the electrophoretic particles in the dispersion medium, preventing aggregations of the electrophoretic particles, and achieving stable electrophoresis, it is preferred that a surface treatment be performed on surfaces of the electrophoretic particles.

A coupling agent is mainly used for the surface treatment. Examples of the coupling agent include a chromium-based coupling agent, a silane-based coupling agent, a titanate-based coupling agent, an aluminum-based coupling agent, a zirconium-based coupling agent, a zircon-aluminates coupling agent and a fluorine-based coupling agent.

As for the surface treatment, also effective are a method for forming graft chains on surfaces of the electrophoretic particles, and a method for coating surfaces of the electrophoretic particles with polymer.

The average particle diameter of the electrophoretic particles is appropriately selected depending on the intended purpose without any limitation, but it is preferably 0.01 μm to 20 μm, more preferably 0.03 μm to 5 μm, and particularly preferably 0.1 μm to 1 μm. When the average particle diameter thereof is too greater, the particles maybe deteriorated in electrophoretic property, leading to low image contrast. When the average particle diameter thereof is too small, the particles may be aggregated to each other, or image density of a resulting image may be low.

The average particle diameter means a particle diameter of an average primary particle which is representing of a group of particles, and represented as a number average particle diameter. Specifically, particles are directly taken out, or the recording medium is cut and the cross-section thereof is directly observed under an electron microscope. Then, primary particle diameters of the particles are determined, and the average value of these primary particle diameters (for example, the average value of 100 particles) is calculated and determined as the average particle diameter.

An amount of the electrophoretic particles contained in the image recording layer is appropriately selected depending on the intended purpose without any limitation.

«Dispersion Medium»

The dispersion medium is appropriately selected depending on the intended purpose without any limitation, provided that it can disperse therein the electrophoretic particles including the electret particles. Examples of the dispersion medium include an organic solvent, and silicone oil.

Examples of the organic solvent include: an alcohol-based solvent, such as methanol, ethanol, and isopropyl alcohol; chain or cyclic aliphatic hydrocarbon, such as pentane, hexane, heptane, octane, nonane, decane, dodecane, isohexane, isooctane, isododecane, tetradecane, dodecylbenzene, cyclohexane, kerosene, ISOPAR (registered trade mark), naphthene, liquid paraffin, and petroleum; aromatic hydrocarbon, such as benzene, toluene, xylene, alkyl benzene, solvent naphtha, phenylxylyl ethane, diisopropyl naphtalene; and halogenated hydrocarbon, such as carbon tetrachloride, chloroform, dichloromethane, ethyl bromide, trichloroethylene, tetrachloroethylene, trifluoroethylene, tetrafluoroethylene, trichlorotrifluoroethylene, and tetrachlorodifluoroethylene. Also, a fluorine-based solvent such as hydrofluoroether and perfluoropolyether can be used. These may be used alone or in combination. Among them, a non-polar solvent is preferable, and aliphatic hydrocarbon is more preferable.

Examples of the silicone oil include: various modified silicone oils, such as dialkyl silicone oil (e.g., dimethyl silicone oil), cyclic dialkyl silicone oil, alkylphenyl silicone oil, cyclic alkylphenyl silicone oil, and alkylaralkyl silicone oil.

Examples of the alkylphenyl silicone oil include methyl phenyl silicone oil, ethyl phenyl silicone oil, propyl phenyl silicone oil, butyl phenyl silicone oil, hexyl phenyl silicone oil, octyl phenyl silicone oil, lauryl phenyl silicone oil, and stearyl

phenyl silicone oil.

Examples of the cyclic alkylphenyl silicone oil include cyclic polymethylphenyl siloxane, cyclic polyethylphenyl siloxane, cyclic polybutylphenyl siloxane, cyclic polyhexylphenyl siloxane, cyclic polymethylchlorophenyl siloxane, and cyclic polymethylbromophenyl siloxane.

Examples of the alkylaralkyl silicone oil include benzyl-modified silicone oil, and methylstyryl-modified silicone oil.

The silicone oil may be a commercial product. Examples of a commercial product of the silicone oil include: KF96 series, KF50 series, KF54, and KF56 manufactured by Shin-Etsu Chemical Co., Ltd.; AK series, AS series, AR series, AP series, and PDM series, manufactured by Wacker Asahikasei Silicone Co., Ltd.; TSF451 series, TSF456 series, TSF405, TSF4427, TSF431, TSF433, TSF437, and TSF456 series, manufactured by GE Toshiba Silicone Co., Ltd.; and SH200 series, SH510, SH550, SH556, SH702, SH704, and SH705 manufactured by Dow Corning Toray Co., Ltd.

As for the dispersion medium, one type thereof may be used alone, or two or more types thereof may be used in combination.

Among these dispersion media, it is preferably a dispersion medium having a boiling point of 50 °C or higher, more preferably 80°C or higher, further preferably 150°C or higher. When a boiling point of the dispersion medium is too low, the dispersion medium is evaporated during repeatedly recording or erasing by applying heat and electric field. As a result, electrophoretic property of the particles may be deteriorated, leading to forming an abnormal image or low image contrast. Alternatively, the dispersion medium may stay as a gel without turning into a sol when heated so that the image may not be able to be rewritten.

The dispersion medium may be tinted by dissolving, in the dispersion medium, a dye having a color the same as or different from that of the electrophoretic particles and/or the electret particles. For example, when the dispersion medium is tinted with a different color from that of electrophoretic particles, the electrophoretic particles consisting of the electret particles can form an image.

The dye is appropriately selected depending on the intended purpose without any limitation, and for example, an oil-soluble dye is suitably used. The oil-soluble dye is appropriately selected depending on the intended purpose without any limitation. Examples of the oil-soluble dye include spirit black (SB, SSBB, AB), nigrosine base (SA, SAP, SAPL, EE, EEL, EX, EXBP, EB), oil yellow (105, 107, 129, 3G, GGS), oil orange (201, PS, PR), fast orange, oil red (5B, RR, OG), oil scarlet, oil pink 312, oil violet #730, Macrolex blue RR, Sumiplast green G, oil brown (GR, 416), Sudan black X60, oil green (502, BG), oil blue (613, 2N, BOS), oil black (HBB, 860, BS), Valifast yellow (1101, 1105, 3108, 4120), Valifast orange (3209, 3210), Valifast red (1306, 1355, 2303, 3304, 3306, 3320), Valifast pink 2310N, Valifast brown (2402, 3405), Valifast blue (3405, 1501, 1603, 1605, 1607, 2606, 2610), Valifast violet (1701, 1702), and Valifast black (1802, 1807, 3804, 3810, 3820, 3830). These may be used alone, or in combination.

An amount of the dispersion medium contained in the image recording layer is appropriately selected depending on the intended purpose without any limitation.

«Thermoreversible Gelling Agent»

The thermoreversible gelling agent is appropriately selected within the limitations given in appended independent claim 1 and depending on the intended purpose , and provided that it enables to turn the dispersion medium into a gel during displaying an image or storing an image and enables to turn the dispersion medium into liquid when an image is recorded at temperature higher than the temperature during displaying an image or storing an image. Further, as the thermoreversible gelling agent, a thermoreversible gelling agent having higher temperature responsiveness is preferable, and a thermoreversible gelling agent that turns the dispersion medium into a sol immediately when the temperature becomes higher than a certain temperature, and turns the dispersion medium into a gel immediately when the temperature becomes the certain temperature or lower, is more suitable.

Here, "during displaying an image" means a state where person views image information recorded on the recording medium, and "during storing an image" means a state where image information is stored in the recording medium. In other words, "during displaying an image or storing an image" means a situation at a normal temperature, and for example, a state at temperature of 10°C or higher but lower than 40°C.

In the present invention, a gel means a state where the dispersion medium has lost its fluidity, so that the electrophoretic particles containing at least electret particles dispersed in the dispersion medium is prevented from migrating to thereby be fixed. In the present invention, a gel is preferably has elasticity for providing the recording medium with flexibility. On the other hand, a liquid means a state where the dispersion medium has fluidity, to thereby allow the electrophoretic particles containing at least electret particles dispersed in the dispersion medium to migrate freely. In the present invention, a liquid preferably has a sufficiently low viscosity so as not to prevent the electrophoretic particles containing at least electret particles from migrating.

The thermoreversible gelling agent forms a three-dimensional network structure by hydrogen bonding, the van

der Waals' force, hydrophobic interaction, electrostatic interaction, and π-π interaction. By incorporating the dispersion medium into the three-dimensional network structure, the dispersion medium is turned into a gel. On the other hand, the three-dimensional network structure is easily cut by heating, so that it is believed that the dispersion medium is returned to a liquid by heating. The three-dimensional network structure is formed in such a manner that, for example, the thermoreversible gelling agent molecules self-aggregate due to hydrogen bonding to form fibrous aggregates by intermolecular interaction, and further, the fibrous aggregates grow due to the van der Waals' force and hydrophobic or electrostatic interaction, and the fibrous aggregates tangle with each other. By incorporating the dispersion medium molecules into the three-dimensional network structure, gelatinization of the dispersion medium progresses.

The thermoreversible gelling agent is appropriately selected depending on the intended purpose without any limitation. Examples thereof include organogel and hydrogel.

The organogel is a thermoreversible gelling agent which can turn an organic solvent or silicone oil serving as the dispersion medium into a gel. Accordingly, in the case where an organic solvent or silicone oil is used as the dispersion medium, the organogel is suitably used.

Examples of the organogel include

1,2,3,4-dibenzylidene-D-sorbitol, 12-hydroxystearic acid, N-lauroyl-L-glutamate-a,y-bis-n-butylamide, spin-labeled steroids, cholesterol derivatives, aluminum dialkylphosphate, phenol-based cyclic oligomers, 2,3-bis-n-hexadecyloxy anthracene, cyclic depsipeptides, partially fluorinated alkanes, cystine derivatives, bis(2-ethylhexyl)sodium sulfosuccinate, triphenylamine derivatives, butyrolactone derivatives, quaternary ammonium salts, fluorinated alkylated oligomers, urea derivatives, vitamin H derivatives, gluconamide derivatives, cholic acid derivatives, L-alanine derivatives, L-isoleucine derivatives, L-valine derivatives, cyclic dipeptide derivatives, oligo(α-amino acid), cyclohexane diamine derivatives, 1,3,5-cyclohexane tricarboxylic acid derivatives, double-headed amino acid derivatives, and barbituric acid derivative/triaminopyridine derivatives. These may be used alone or in combination.

Moreover, a polymer or oligomer thermoreversible gelling agent has been known and useful. A low molecular thermoreversible gelling agent may be turned into a crystal depending on a structure thereof during being left for a long period, which may lower stability. On the other hand, the polymer or oligomer thermoreversible gelling agent may be effective, because it does not crystallize owing to molecular weight distribution thereof or movements of a flexuous chain thereof. The polymer or oligomer thermoreversible gelling agent can be obtained, for example, by introducing a gelling component that induces gelation to a polymer component that prevents crystallization.

In the recording medium, the image recording layer contains the thermoreversible gelling agent. Therefore, it is important that the thermoreversible gelling agent has high temperature responsiveness to sol-gel transition (promptly turn the dispersion medium into a liquid when heated, and immediately turns the dispersion medium into a gel when the temperature is returned to room temperature), and the thermoreversible gelling agent stably functions without being crystallized and collapsing a gel, even after sol-gel transition thereof is repeated. Examples of the particularly effective gelling agents for use as the thermoreversible gelling agent are as follows.

It is important that the thermoreversible, gelling agent rapidly forms aggregates due to hydrogen bonding. Accordingly, the thermoreversible gelling agent according to the present invention has an amide bond (-NHCO-) (preferably a plurality of amide bonds) in a molecule thereof. The energy source for the thermoreversible gelling agent to turn the dispersion medium into a gel is formation of hydrogen bonding between N-H and C=O of the amide bond. Formation of a gel with high temperature responsiveness depends on reactivity of the hydrogen bonding, and therefore the thermoreversible gelling agent preferably has an amide bond in a molecule thereof.

More preferred is the thermoreversible gelling agent having a urethane bond (-NHCOO-) in a molecule thereof. The thermoreversible gelling agent having the urethane bond has higher temperature responsiveness to sol-gel transition than that of the thermoreversible gelling agent only having an amide bond. Additionally, a difference between a sol-gel transition temperature and a gel transition temperature of the dispersion medium is decreased, leading to low hysteresis. Therefore the thermoreversible gelling agent having a urethane bond is very effective in the present invention.

The thermoreversible gelling agent can form hydrogen bonding with each other even when it has only one amide bond or urethane bond in a molecular thereof. However, in order to rapidly form a gel, the thermoreversible gelling agent preferably has a plurality of amide bonds and/or urethane bonds in a molecule thereof. The larger the number of the amide bonds and/or urethane bonds contained in the molecule thereof is more preferable. By having more amide bonds or urethane bonds, gelation capability is enhanced and temperature responsiveness to sol-gel transition becomes higher. Therefore, it is effective in the present invention.

More preferably, the thermoreversible gelling agent has a siloxane bond in a molecule thereof. The siloxane bond is a structure in which silicon (Si) and oxygen (O) are alternately bonded. Examples of the thermoreversible gelling agent having a siloxane bond are as follows:

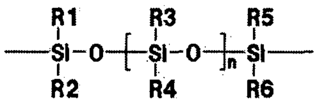
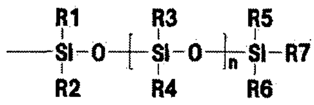
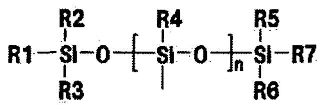

In the General formulae above, R1 to R7 each denote a C8-C20 alkyl group, and R1 to R7 may be the same or different to each other, and n denotes an integer of 0 to 80.

The thermoreversible gelling agent having the siloxane bond hardly crystallizes, and can enhance the stability of a gel. In addition, the gel tends to be softened, and this is effective for enhancing flexibility of the recording medium.

As the siloxane bond in the thermoreversible gelling agent becomes longer, the gel becomes softer, and the sol-gel transition temperature of the dispersion medium tends to become lower. However, if the gel of the dispersion medium becomes excessively soft, the function of fixing the electrophoretic particles containing at least electret particles may deteriorate and the image failure may occur. It is preferable that the length of the siloxane bond is properly controlled with respect to the sol-gel transition temperatures and flexibility of the dispersion medium set for the recording medium.

A preferable length of the siloxane bond in the thermoreversible gelling agent is defined as follows. That is, it is more preferable that A, the number of silicon atoms of the siloxane bond in the molecule of the thermoreversible gelling agent, and B, the total number of the amide bonds (-NHCO-) and urethane bonds (-NHCOO-) in the molecule, meet the following Expression (1):

$$0.5 \leq A/B \leq 4.0 \cdots \text{Expression (1)}$$

When the ratio A/B is smaller than the above range (i.e., less than 0.5), there is a possibility that the sol-gel transition temperatures of the dispersion medium becomes excessively higher than sol-gel transition temperatures suitable for the recording medium, the gel becomes unstable, or the gel becomes excessively hard and the flexibility becomes smaller. When the ratio A/B is greater than the above range (i.e., more than 4.0), on the other hand, there is a possibility that the sol-to-gel transition temperature becomes excessively lower than a sol-to-gel transition temperature suitable for the recording medium, or the gel becomes excessively soft, and the dispersion medium does not turn into a gel even at a normal temperature and the image retentiveness deteriorates.

Moreover, according to the present invention, the thermoreversible gelling agent has an alkyl group having 8 or more carbon atoms and/or an alkylene group having 8 or more carbon atoms in a molecular thereof. In order to grow aggregates formed by hydrogen bonding of the amide bond or urethane bond of the thermoreversible gelling agent into fibrous form and further form a three-dimensional network structure, a structure for causing aggregates to easily interact with each other is necessary. It is believed that these long-chain alkyl group and long-chain alkylene group promote intermolecular interaction and contribute to the formation of the fibrous aggregates and three-dimensional network structure.

The number of carbon atoms in the alkyl group is more preferably 8 to 20. The number of carbon atoms in the alkylene group is more preferably 8 to 12.

As described above, any gelling agents which are thermoreversible can be used for the recording medium of the present invention. however, it is important that the thermoreversible gelling agent for use in the recording medium of the present invention can be used with a high insulating dispersion medium, sol-gel transition temperature thereof is suitable for the environment in which the recording medium is used, the thermoreversible gelling agent has high temperature responsiveness to sol-gel transition (promptly turns the dispersion medium into a liquid when heated, and immediately turns the dispersion medium into a gel when the temperature is returned to room temperature), and the thermoreversible gelling agent stably functions without being crystallized and collapsing a gel, even after sol-gel transition thereof is repeated.

Examples of the particularly preferable gelling agents for use as the thermoreversible gelling agent in the recording medium of the present invention are as follows. These are examples, and the thermoreversible gelling agent for use in the present invention is not limited thereto.

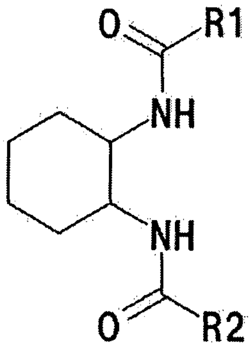

General Formula (1)

In the General Formula (1), R1 and R2 each denote an alkyl group having 8 or more carbon atoms, and R1 and R2 may be identical or different. The alkyl group has preferably 8 to 20 carbon atoms.

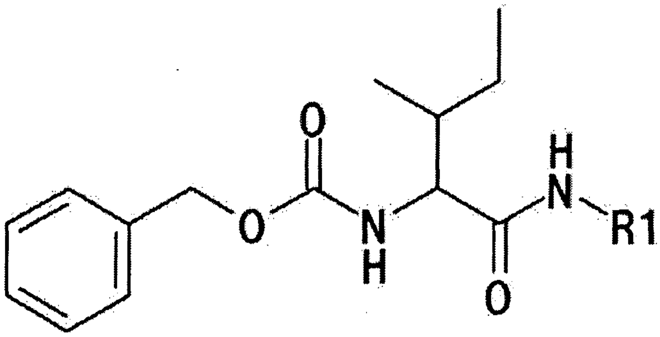

General Formula(2)

In the General Formula (2), R1 denotes an alkyl group having 8 or more carbon atoms. The alkyl group has preferably 8 to 20 carbon atoms.

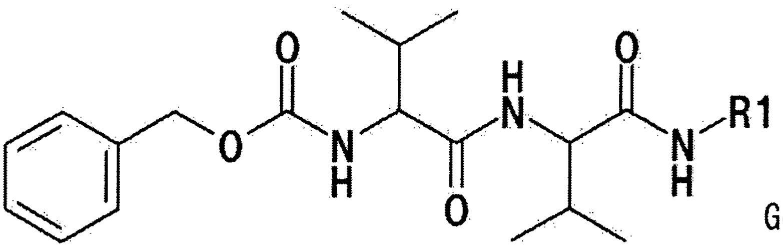

General Formula(3)

In the General Formula (3), R1 denotes an alkyl group having 8 or more carbon atoms. The alkyl group has preferably 8 to 20 carbon atoms.

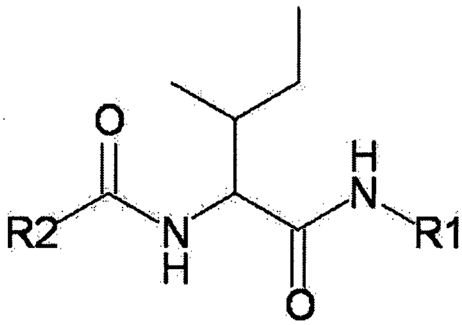

General Formula (4)

In the General Formula (4), R1 and R2 each independently denote an alkyl group having 8 or more carbon atoms. The alkyl group has preferably 8 to 20 carbon atoms.

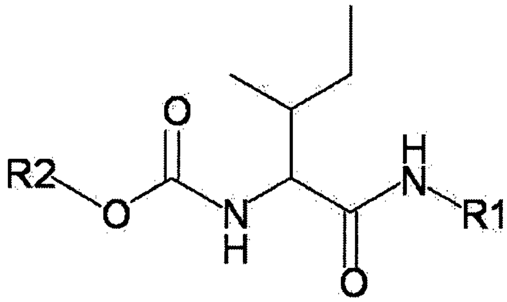

General Formula (5)

In the General Formula (5), R1 and R2 each independently denote an alkyl group having 8 or more carbon atoms. The alkyl group has preferably 8 to 20 carbon atoms.

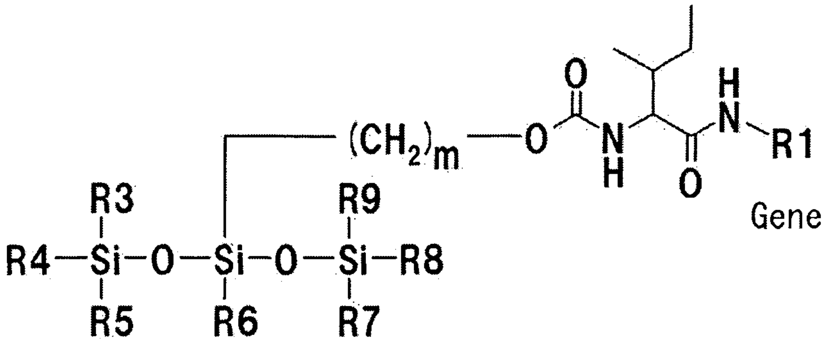

General Formula (6)

In the General Formula (6), R1 denotes a C8-C20 alkyl group; R3 to R9 each denotes a hydrogen atom, a C1-C12 alkyl group, a C1-C12 alkoxy group, or an aryl group that may have a substituent; R3 to R9 may be identical or different; and m denotes an integer of 1 to 20.

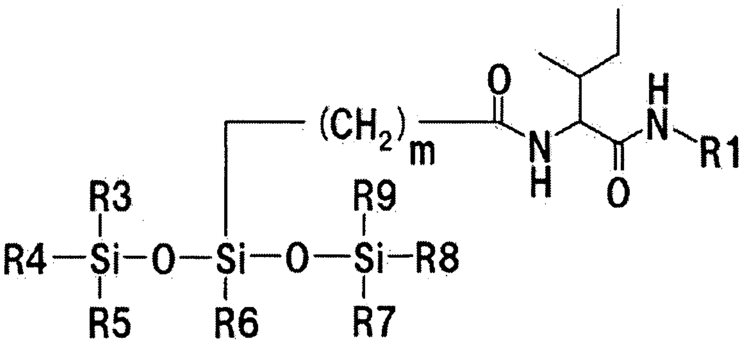

General Formula (7)

In the General Formula (7), R1 denotes a C8-C20 alkyl group; R3 to R9 each denotes a hydrogen atom, a C1-C12 alkyl group, a C1-C12 alkoxy group, or an aryl group that may have a substituent; R3 to R9 may be identical or different; and m denotes an integer of 1 to 20.

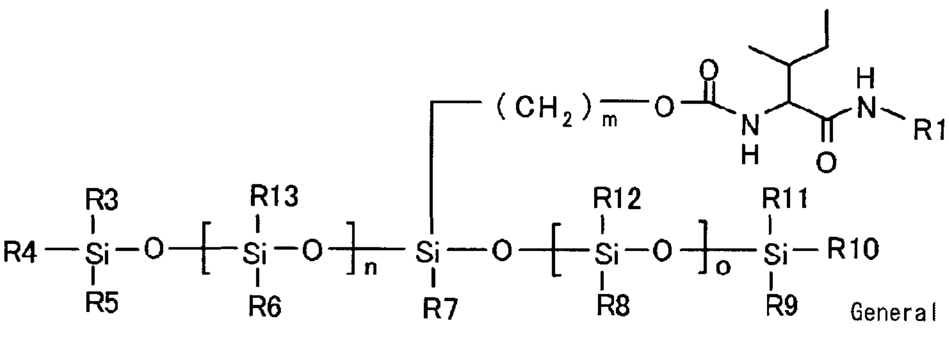

General Formula (8)

In the General Formula (8), R1 denotes a C8-C20 alkyl group; R3 to R13 each denotes a hydrogen atom, a C1-C12 alkyl group, a C1-C12 alkoxy group, or an aryl group that may have a substituent; R3 to R13 may be identical or different; and m denotes an integer of 1 to 20; n denotes an integer of 1 to 80; and n and o may be identical or different.

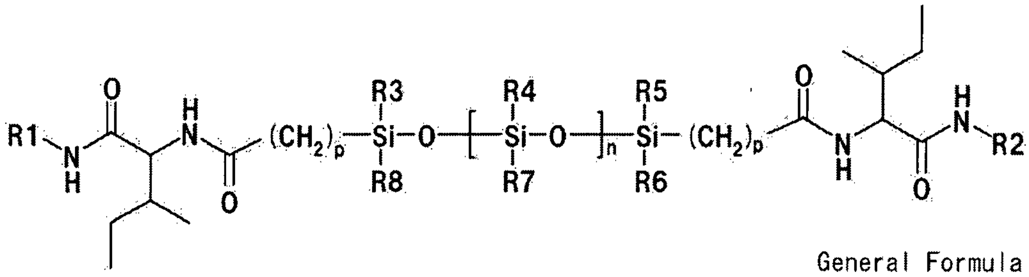

General Formula (9)

In the General Formula (9), R1 and R2 each denote a C8-C20 alkyl group; R3 to R8 each denotes a hydrogen atom, a C1-C12 alkyl group, a C1-C12 alkoxy group, or an aryl group that may have a substituent; R3 to R8 may be identical or different; n denotes an integer of 0 to 80; and p denotes an integer of 1 to 20.

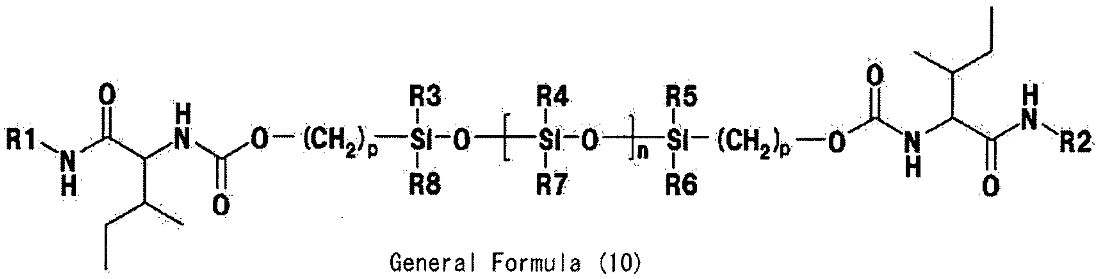

General Formula (10)

In the General Formula (10), R1 and R2 each denote a C8-C20 alkyl group; R3 to R8 each denotes a hydrogen atom, a C1-C12 alkyl group, a C1-C12 alkoxy group, or an aryl group that may have a substituent; R3 to R8 may be identical or different; n denotes an integer of 0 to 80; and p denotes an integer of 1 to 20.

An amount of the thermoreversible gelling agent contained in the image recording layer can be determined so that the dispersion medium turns into a gel during displaying an image or storing an image (for example, at room temperature), and the dispersion medium turns into a liquid when an image is recorded (written) (for example, at temperature higher than the temperature during displaying an image or storing an image). The amount of the thermoreversible gelling agent contained in the image recording layer is preferably 0.05% by mass to 50% by mass, more preferably 0.1% by mass to 10% by mass, particularly preferably 0.5% by mass to 5% by mass, relative to that of the dispersion medium. When the amount thereof is less than 0.05% by mass, the gelation of the dispersion medium is insufficient, which may impair image retentiveness. When the amount thereof is greater than 50% by mass, the viscosity of the dispersion medium may not be sufficiently reduced, or insoluble matter may be remained, when the recording medium is heated. As a result, migration of the electrophoretic particles containing at least electret particles may be inhibited to cause deterioration in image quality.

The gel-sol(liquid) transition temperature of the dispersion medium in the image recording layer are appropriately selected depending on the intended purpose without any limitation, but they are preferably 20°C to 120°C, more preferably 30°C to 100°C, and particularly preferably 40°C to 80°C.

The gel-sol transition temperature can be adjusted by appropriately selecting a type and an amount of the dispersion medium and a type and an amount of the thermoreversible gelling agent. When the gel-sol transition temperature are lower than 20°C, they cause no problem in a normal environment, however, the image retentiveness may deteriorate, as the recording medium is used outdoors where it is exposed to direct sunlight or in a sun-heated car. In particular, unlike a PLD, the recording medium is expected to be used in various environments including outdoors, so that high image retentiveness is also required in these environments. In order to stably use the recording medium, the gel-sol transition temperature of the dispersion medium is more preferably 40°C or more. When the gel-sol transition temperature are higher than 120°C, the time taken to reach the temperatures becomes longer, and thus the recording speed and image quality may be deteriorated.

Here, the gel-sol transition temperature means a temperature at which the dispersion medium is turned from a sol (liquid) into a gel, or from a gel into a sol (liquid) by a function of the thermoreversible gelling agent.

Note that, the gel transition temperature and the sol transition temperature are not necessarily the same, and there may be hysteresis between the gel transition temperature and the sol transition temperature, which is preferable

in the present invention. When the sol transition temperature is higher than the gel transition temperature, high image retentiveness can be maintained, and such dispersion medium can be effectively used. In the case where the sol transition temperature is 80°C whereas the gel transition temperature is lower than 20°C, for example, the dispersion medium is once turned into a gel by cooling after recording an image, temperature of 80°C is required to turn the dispersion medium into a sol again. In such case, it is possible to maintain image retentiveness in any environment in which use of the recording medium is expected.

Here, the gel-sol transition temperature means temperature at which the dispersion medium is turned from a sol (liquid) into a gel, or from a gel into a sol (liquid) by a function of the thermoreversible gelling agent.

A method for determining the gel-sol transition temperature of the dispersion medium containing the thermoreversible gelling agent is not particularly limited, as long as it is a method capable of determining temperature at which the dispersion medium is turned from a sol into a gel, or from a gel into a sol. For example, the following methods can be used.

One of the methods is a method using differential scanning calorimetry (DSC). As for a device, a commercially available DSC analysis device is used. When a sample containing the thermoreversible gelling agent is set and DSC measurement is performed, an endothermic peak is observed during a heating process, and an exothermic peak is observed during a cooling process. The temperature of the endothermic peak in the heating process can be regarded as the sol transition temperature, and the temperature of the exothermic peak in the cooling process can be regarded as gel transition temperature. If the heating rate and the cooling rate are too fast, heat followability becomes low, leading to a large error in the value. Therefore, the heating rate and the cooling rate are preferably slow, e.g., 5 °C/min or less, more preferably 2 °C/min or less.

Moreover, example of the aforementioned method includes a method using dynamic viscoelasticity analysis (DMA). As for a device, a device, which is generally called as a viscoelasticity measuring device, or rheometer, can be used for the measurement. When a sample containing the thermoreversible gelling agent is set and DMA measurement is performed, a region where the storage elastic modulus (G') exceeds the loss elastic modulus (G") is observed, the storage elastic modulus (G') and the loss elastic modulus (G") are crossed, and then a region where the loss elastic modulus (G") exceeds the storage elastic modulus (G') is observed. Typically, the sample is regarded as in a gel state in the region where G' is larger than G" (G' > G"), and is regarded as in a sol state in the region where G' is smaller than G" (G' < G"). The point at which G' and G" are crossed in a heating process can be regarded as the sol transition temperature, and the point at which G' and G" are crossed in a cooling process can be regarded as the gel transition temperature. If the heating rate and the cooling rate are too fast, a performance to track the heat becomes low, leading to a large error in the value. Therefore, the heating rate and the cooling rate are preferably slow, e.g., 5 °C/min or less, more preferably 3 °C/min or less. Moreover, in order to prevent evaporation of the dispersion medium in a sol state, a surrounding area of the plate to which the sample is set can be sealed with oil, which may be effective in some cases.

As other examples, various methods known in the art can be used for the measurement of the sol transition temperature and gel transition temperature, and such methods include: a method using a tuning-fork vibration viscometer, in which an oscillator is vibrated in a liquid at a constant frequency, to measure the value of electric current with which the viscous resistance of the oscillator becomes exciting-force, to thereby measure a viscosity; a method using a rigid pendulum rheometer, in which a measuring part, which is a supporting point of a pendulum, is placed on a sample, and a damping factor of the vibrations of the pendulum is measured; and a method in which a colored liquid or object is placed on a gel sample, and visually observing a change caused by heating.

<<Other Ingredients>>

Examples of other components contained in the image recording layer include a dispersing agent, and a surfactant. However, the aforementioned other components are not limited thereto, and may further contain other components.

-Dispersing Agent-

The dispersing agent is appropriately selected depending on the intended purpose without any limitation, provided that it is a dispersing agent capable of enhancing dispersibility of the electrophoretic particles containing at least electret particles in the dispersion medium, preventing aggregation of the electrophoretic particles containing at least electret particles, and allowing the electrophoretic particles containing at least electret particles to stably migrate.

The dispersing agent is preferably selected from those soluble to the dispersion medium, and having a function of preventing the electrophoretic particles containing at least electret particles from being aggregated to each other by electrostatic repulsion or steric hindrance by being adsorbed to the surfaces of the electrophoretic particles containing at least electret particles.

The dispersing agent is appropriately selected depending on the intended purpose without any limitation, but

it is preferably a dispersing agent soluble in a non-polar solvent, more preferably a polymer dispersing agent. This is because the dispersion stability of particles in a non-polar organic solvent system greatly depends on the steric effect of a polymer compound.

Examples of the polymer dispersing agent include a polymer dispersing agent having a basic group and a polymer dispersing agent having an acid group, and the former dispersing agent is more preferable. The reason for this is because it is believed that, for example, in the case where a pigment, such as carbon black, is used as electrophoretic particles, a basic polymer dispersing agent is adsorbed to the surface of the pigment and acts as a positive charge-controlling agent, and exerts an effect of positively charging the pigment surface.

The polymer dispersing agent having a basic group is appropriately selected depending on the intended purpose without any limitation. Examples of thereof include a polymer prepared from at least one of monomers having a basic group (e.g., N-methylaminoethyl(meth)acrylate, N-ethylaminoethyl(meth)acrylate, N,N-dimethylaminoethyl(meth)acrylate, N,N-diethylaminoethyl(meth)acrylate, N,N-dibutylaminoethyl acrylate, N,N-di-tert-butylaminoethyl acrylate, N-phenylaminoethyl methacrylate, N,N-diphenylaminoethyl methacrylate, amino styrene, dimethylaminostyrene, N-methylaminoethylstyrene, dimethylaminoethoxystyrene, dip he nylaminoethylstyre ne, N-phenylaminoethylstyrene, 2-N-piperidylethyl(meth)acrylate, 2-vinylpyridine, 4-vinylpyridine, and 2-vinyl-6-methylpyridine) and at least one of alkyl ester or aryl ester of (meth)acrylic acid.

As for the polymer dispersing agent having a basic group, a commercial product can be used. Examples of the commercial product include "SOLSPERSE 17000" (single polyester, anchoring site: base), "SOLSPERSE 16000" (single polyester, anchoring site: base), "SOLSPERSE 41000" (single polyester, anchoring site: acid), and "SOLSPERSE 3000" (single polyester, anchoring site: acid), all manufactured by The Lubrizol Corporation. As another example, "Disperbyk-2050", "Disperbyk-2150", "Disperbyk-160", "Disperbyk-161", "Disperbyk-162", "Disperbyk-163", "Disperbyk-164", "Disperbyk-166", "Disperbyk-167", and "Disperbyk-182" (all manufactured by BYK Japan KK) can also be used.

-Surfactant-

The surfactant is added for the purpose of improving of the dispersion stability of the electrophoretic particles containing at least electret particles, obtaining a sufficient migration speed, and enhancing image retentiveness.

The surfactant is appropriately selected depending on the intended purpose without any limitation, but it is preferably a nonionic surfactant. If a surfactant other than nonionic surfactants is used, for example, an ionic surfactant is used, the ionic surfactant is adsorbed to the surfaces of the electrophoretic particles containing at least electret particles and the behavior of the electrophoretic particles containing at least electret particles may become unstable.

Examples of the nonionic surfactant include polyoxyethylene alkyl ether, polyoxyethylene alkyl allyl ether, polyoxyethylene alkylphenyl ether, polyoxyethylene glycol ester, polyoxyethylene fatty acid amide, polyoxyethylene fatty acid ester, polyoxyethylene polyoxypropylene glycol, glycerin ester, sorbitan ester, sucrose ester, polyoxyethylene ether of glycerin ester, polyoxyethylene ether of sorbitan ester, polyoxyethylene ether of sorbitol ester, fatty acid alkanol amide, amine oxide, polyoxyethylene alkyl amine, glycerin fatty acid ester, sorbitan fatty acid ester, polyoxyethylene sorbitan fatty acid ester, polyoxyethylene sorbitol fatty acid ester, and alkyl(poly)glycoxyde. These may be used alone or in combination.

Among them, particularly preferred are sorbitan trioleate, sorbitan laurate, sorbitan palmitate, sorbitan stearate, sorbitan tristearate, sorbitan oleate, sorbitan tribehenate, and sorbitan caprylate.

A thickness of the image recording layer is appropriately selected depending on the intended purpose without any limitation, but it is preferably 5 μm to 200 μm, more preferably 10 μm to 100 μm, particularly preferably 20 μm to 60 μm. When the thickness of the image recording layer is less than 5 μm, a contrast ratio may be low. When the thickness thereof is greater than 200 μm, recording speed or resolution may reduce. Note that, the thickness of the image recording layer indicates a thickness of the thickest part of the image recording layer. For example, when the image recording layer has microcapsules arranged thereon, the length of the longest part of the image recording layer in the thickness direction is defined as a thickness of the image recording layer.

<Spacer>

The image recording layer may include a spacer, if necessary. When the image recording layer does not include cells, the spacer is effective in preventing the electrophoretic particles containing at least electret particles from being biased or keeping the thickness of the image recording layer constant.

The material of the spacer is appropriately selected depending on the intended purpose without any limitation. Examples thereof include plastic, metal oxide, glass or ceramic. Among these, plastic is preferable from the viewpoints of lightweight, high transparency and excellent workability.

Examples of the material of the plastic include a polystyrene resin, a polyester resin, or an acryl resin. Examples of the material of the metal oxide include silica or alumina.

The shape of the spacer is appropriately selected depending on the intended purpose without any limitation. For example, the spacer may have cross-sectional shapes such as a rectangular shape, a perfect circular shape, or an almost circular shape. Among these, the perfect circular spacer is preferable because the spacer can be easily disposed.

The spacer is, for example, resin particles, metal oxide particles or glass beads. When the spacer is spherical, the particle diameter thereof is appropriately selected depending on the intended purpose without any limitation, however, it is preferably the same as the thickness of the image recording layer.

The particle diameter is appropriately selected depending on the intended purpose without any limitation, however, it is preferably 5 μm to 200 μm, more preferably 10 μm to 100μm, and particularly preferably 20 μm to 60 μm. In this case, to uniformize the thickness of the image recording layer, the particle diameter distribution of these spacers is preferably sharp (narrow). As these spacers, commercially available spacers used for liquid crystal can be appropriately used.

The average thickness of the recording medium is appropriately selected depending on the intended purpose without any limitation, but it is preferably 15 μm to 1,200 μm, more preferably 30 μm to 600 μm, particularly preferably 50 μm to 260 μm.

<Production method of Recording Medium>

The recording medium of the present invention can be produced by any methods, provided that the recording medium has a configuration in which an image recording layer containing at least electret particles, a dispersion medium, and a thermoreversible gelling agent is sandwiched between bases. The recording medium can be produced, for example, as follows.

For example, the recording medium may be produced by forming the image recording layer on the base and forming another base thereon.

A dispersion liquid for forming the image recording layer can be obtained by mixing electrophoretic particles containing at least electret particles with a dispersion medium, dispersing the electrophoretic particles containing at least electret particles into the dispersion medium using known dispersing methods to thereby obtain a dispersion liquid, adding an appropriate amount of a thermoreversible gelling agent to the resultant dispersion liquid, heating the resultant to the temperature equal to or higher than the sol transition temperature of the thermoreversible gelling agent to thereby liquefy the dispersion liquid, and then stirring.

The resultant dispersion liquid for forming the image recording layer can be formed into the image recording layer on a base by various methods, such as a method in which the dispersion liquid is previously heated to the temperature equal to or higher than the sol transition temperature of the thermoreversible gelling agent, and then directly applied onto a base; a method in which the dispersion liquid which has been heated is injected into microcells which have been formed on a base; or a method in which microdroplets of the dispersion liquid are formed into microcapsules and then the microcapsules are disposed onto a base.

In the case where the dispersion liquid is directly applied onto a base, the base may also be previously heated, which is effective. Examples of a method for applying include a blade coating, a bar coater coating, a spray coating, a dipping coating, a roll coating or an air knife coating.

In the case where cells are formed on a base, the following method is effective. A resin such as a thermoplastic resin or a curable resin is applied onto a base, a mold for forming cells is pressed thereagainst to thereby emboss the resin. Thus, a plurality of cells which are disposed at the predetermined interval are formed. The following method is also effectively used. A material for forming cells is applied onto a template on which recesses are regularly formed so as to cover the recesses, and then bubbles in the recesses are allowed to expand by reducing the surrounding air pressure to thereby form the cells.

The dispersion liquid can be formed into microcapsules using known methods such as a coacervation method, an interfacial polymerization method, or an in-situ polymerization method. In the coacervation method, a polymer solution, which is a uniform single phase, is decreased in temperature to thereby separate into a dense phase which is rich in polymers and a dilute phase which has low concentration. Coacervate small droplets, which is the dense phase dispersed into the dilute phase, are adhered onto surfaces of the dispersed particles, and allowed to be fixed in this state. Thus, the microcapsules can be obtained. Example of materials used for the coacervation method includes a gelatin/gum-arabic material. In the interfacial polymerization method, hydrophobic monomers are combined with hydrophilic monomer to thereby form a film utilizing a chemical reaction at interfaces of emulsion droplets. In the in-situ polymerization method (may be referred to as an interfacial reaction method), wall film materials (e.g., monomers or prepolymers) and a polymerization catalyst are supplied to around core materials to thereby progress a polymerization reaction at surfaces (interfaces) of the core materials, resulting in forming a film. Examples of materials used for the in situ polymerization method include urea-formaldehyde or melamine- formaldehyde. Alternatively, a phase separation method, an in-liquid drying method, and an in-liquid film curing method are also known.

For example, microcapsules can be formed as follows. A dispersion liquid which contains at least electrophoretic

particles containing at least electret particles, a dispersion medium, and a thermoreversible gelling agent is heated to a liquid state. Separately, an aqueous solution in which water-soluble monomers and a surfactant are dissolved is heated to the temperature equal to or higher than the sol-transition temperature of the thermoreversible gelling agent. The dispersion liquid is added into the aqueous solution to thereby prepare emulsions. The monomers are allowed to polymerize at O/W interfaces to thereby form microcapsules. The resultant microcapsule slurry is optionally mixed with a water-soluble binder resin, and then applied onto a base. Notably, in addition to the above methods, the microcapsules can be formed by electrocoating onto a base which includes an electrically conductive layer.

After the image recording layer is formed on the base, another base is formed on the image recording layer so as to prevent air bubbles being trapped therein. Various methods can be used for forming the another base such as a method in which another base is adhered onto the image recording layer via an adhesive layer or a method in which another base is applied onto the image recording layer. The another base can be adhered onto the image recording layer by, for example, using a laminator, or by sandwiching them between a pair of rollers. The method for applying the another base is appropriately selected depending on the intended purpose without any limitation, and is, for example, a blade coating, a bar coater coating, a spray coating, a dipping coating, a roll coating, or an air knife coating. Among them, the method in which another base is applied onto the image recording layer is very advantageous for low-cost production because of the possibility of continuous production.

Notably, particles can be made to have an electret property by subjecting to treatments such as electron beam irradiation, radiation irradiation, or corona discharge. Timing for performing the treatments is not particularly limited. For example, a dispersion liquid may be produced after particles are made to have an electret property, or particles may be made to have an electret property after a dispersion liquid is produced. Alternatively, particles may be made to have an electret property after the image recording layer is formed or after the recording medium is produced.

<Structural Example of Recording Medium>

One example of the recording medium of the present invention is explained with reference to figures.

The recording medium illustrated in FIG. 2 includes a first base 1, a second base 2, and an image recording layer 7 sandwiched between the first base 1 and the second base 2. The image recording layer 7 is composed of white electret particles 4, spacer particles 5, and a colored dispersion medium 3 containing a thermoreversible gelling agent. At an end portion of the recording medium, a spacer 6 is optionally provided which bonds the first base 1 and the second base 2 together. Notably, the electret particles 4 may have a color other than white.

The recording medium illustrated in FIG. 3 includes a first base 1, a second base 2, and an image recording layer 7 sandwiched between the first base 1 and the second base 2. The image recording layer 7 is composed of white electret particles 4, black electret particles 8, spacer particles 5, and a transparent dispersion medium 3 containing a thermoreversible gelling agent.

At an end portion of the recording medium, a spacer 6 is optionally provided which bonds the first base 1 and the second base 2 together. Notably, the white electret particles 4 and the black electret particles 8 may have a color other than white and black, respectively. The white electret particles 4 or the black electret particles 8 may be electrophoretic particles which are not electret particles.

The recording medium illustrated in FIG. 4 includes a first base 1, a second base 2, and an image recording layer 7 sandwiched between the first base 1 and the second base 2. In the image recording layer 7, white electret particles 4 and a colored dispersion medium 3 containing a thermoreversible gelling agent are enclosed in microcells 9. At an end portion of the recording medium, a spacer 6 is optionally provided which bonds the first base 1 and the second base 2 together. Notably, the electret particles 4 may have a color other than white.

The recording medium illustrated in FIG. 5 includes a first base 1, a second base 2, and an image recording layer 7 sandwiched between the first base 1 and the second base 2. In the image recording layer 7, white electret particles 4, black electret particles 8, and a transparent dispersion medium 3 containing a thermoreversible gelling agent are enclosed in microcells 9. At an end portion of the recording medium, a spacer 6 is optionally provided which bonds the first base 1 and the second base 2 together. Notably, the white electret particles 4 and the black electret particles 8 may have a color other than white and black, respectively. The white electret particles 4 or the black electret particles 8 may be electrophoretic particles which are not electret particles.

The recording medium illustrated in FIG. 6 includes a first base 1, a second base 2, and an image recording layer 7 sandwiched between the first base 1 and the second base 2. In the image recording layer 7, white electret particles 4 and a colored dispersion medium 3 containing a thermoreversible gelling agent are enclosed in microcapsules 10. Notably, the electret particles 4 may have a color other than white.

The recording medium illustrated in FIG. 7 includes a first base 1, a second base 2, and an image recording layer 7 sandwiched between the first base 1 and the second base 2. In the image recording layer 7, white electret particles 4, black electret particles 8, and a transparent dispersion medium 3 containing a thermoreversible gelling agent are enclosed in microcapsules 10. Notably, the white electret particles 4 and the black electret particles 8 may have a

color other than white and black, respectively. The white electret particles 4 or the black electret particles 8 may be electrophoretic particles which are not electret particles.

The microcapsules may be those in which a cross-sectional shape of the image recording layer is a shape other than a perfect circle, such as a substantially circle and a polygon, as illustrated in FIGs. 8 and 9, which is effective. Microcapsules having various shapes may be mixed together.

Moreover, it is possible and effective that the recording medium of the present invention has a structure where an electrically conductive layer is provided between the image recording layer and the base, and the electrically conductive layer is electrically connected with an electrode formed in an exterior of the recording medium. For example, FIG. 10 illustrates an example of a recording medium having an electroconductive layer provided between one of bases and an image recording layer, in which a first electrically conductive layer 12 is provided between the first base 1 and the image recording layer 7 of the recording medium of FIG. 7.

The recording medium illustrated in FIG. 10 includes a first base 1, a second base 2, and an image recording layer 7 provided therebetween. In the image recording layer 7, a plurality of microcapsules 10 each containing white electret particles 4, black electret particles 8, and a transparent dispersion medium 3 containing a thermoreversible gelling agent are aligned, and fixed and insulated with a binder resin 11. A first electrically conductive layer 12 is provided between the image recording layer 7 and the first base 1. Moreover, the first electrically conductive layer 12 is electrically connected with a first electrode 13 formed on an exterior of the recording medium. In this case, the second base 2 onto which an electrically conductive layer has not been formed is preferably as thin as possible. Notably, the white electret particles 4 and the black electret particles 8 may have a color other than white and black, respectively. The white electret particles 4 or the black electret particles 8 may be electrophoretic particles which are not electret particles.

As another example of the recording medium different from the recording medium of FIG. 10, it is possible that a recording medium has a structure as illustrated in FIG. 11, where a second electrically conductive layer 14 is provided between the second base 2 and the image recording layer 7, and the second electrically conductive layer 14 are electrically connected with an electrode 15. Further, as another example of the recording medium different from the recording medium of FIG. 11, it is possible that a recording medium has a structure as illustrated in FIG. 11, where an electrically conductive base 16 is used instead of the second base 2.

In addition, FIG. 13 illustrates an example of the recording medium including electrically conductive layers between one base and the image recording layer and between the other base and the image recording layer, in which a first electrically conductive layer 12 is provided between the first base 1 and the image recording layer 7 of the recording medium of FIG. 7, and a second electrically conductive layer 14 is provided between the second base 2 and the image recording layer 7 thereof.

The recording medium illustrated in FIG. 13 includes a first base 1, a second base 16, and an image recording layer 7 provided therebetween. In the image recording layer 7, a plurality of microcapsules 10 each containing white electret particles 4, black electret particles 8, and a transparent dispersion medium 3 containing a thermoreversible gelling agent are aligned, and fixed as insulated with a binder resin 11. A first electrically conductive layer 12 is provided the image recording layer 7 and the first base 1, and a second electrically conductive layer 14 is provided between the image recording layer 7 and the second base 2. Moreover, the first electrically conductive layer 12 is electrically connected with a first electrode 13 formed on an exterior of the recording medium, and the second electrically conductive layer 142 is electrically connected with a second electrode 15 formed on an opposite side of the recording medium. Notably, the white electret particles 4 and the black electret particles 8 may have a color other than white and black, respectively. The white electret particles 4 or the black electret particles 8 may be electrophoretic particles which are not electret particles.

Moreover, as another example of the recording medium different from the recording medium of FIG. 13, the first electrode 13 and the second electrode 15 can be provided on the same surface, as illustrated in FIG. 14.

As another example of the recording medium different from the recording medium of FIG. 13, the recording medium may have a structure illustrated in FIG. 15.

The recording medium of FIG. 15 includes a first base 1, a second base 16, and an image recording layer 7 provided therebetween. In the image recording layer 7, a plurality of microcapsules 10 each containing white electrophoretic particles 4, black electrophoretic particles 5, and a thermoreversible gelling agent a transparent dispersion medium 3 containing are aligned, and fixed and insulated with a binder resin 11. A first electrically conductive layer 12 is provided between the image recording layer 7 and the first base 1, and the first electrically conductive layer 12 is electrically connected with a first electrode 13 formed on an exterior of the recording medium. As for the base provided an opposite side of the recording medium (second base), an electrically conductive base 16 is provided so as to be electrically connected with the image recording layer 7. Notably, the white electret particles 4 and the black electret particles 8 may have a color other than white and black, respectively. The white electret particles 4 or the black electret particles 8 may be electrophoretic particles which are not electret particles.

Note that, the "exterior of the recording medium" can be any position in the recording medium at which an electrode can be electrically connected with an electric field applying unit provided in an image recording apparatus. For

example, the exterior of the recording medium includes a surface, a back surface, and a side surface of the recording medium. Moreover, a case where the electrically conductive layer and the electrode are integrally mounted is depicted in FIGs. 10 to 15, but the electrically conductive layer and the electrode can be provided as separate units.

The recording medium illustrated in FIGs. 2 and 3 can be produced by coating a first base 1 with a dispersion liquid for forming an image recording layer which contains white electret particles 4, spacer particles 5, and a dispersion medium 3 containing a thermoreversible gelling agent (and black electret particles 8) so as to have a predetermined average thickness while the dispersion medium 3 is kept in a liquid state; bonding a second base 2 thereto, if necessary, while keeping the same temperature; and adhering an end portion of the first base 1 to an end portion of the second base 2 via a spacer 6.

The recording medium illustrated in FIGs. 4 and 5 can be produced by injecting a dispersion liquid for forming an image recording layer which contains white electret particles 4 and a dispersion medium 3 containing a thermoreversible gelling agent (and black electret particles 8) into microcells 9 which have been formed on a second base 2 while the dispersion medium 3 is kept in a liquid state; bonding a first base 1 thereto; and adhering an end portion of the first base 1 to an end portion of the second base 2 via a spacer 6.

The recording medium illustrated in FIGs. 6 to 9 can be produced by forming a dispersion liquid for forming an image recording layer which contains white electret particles 4 and a dispersion medium 3 containing a thermoreversible gelling agent (and black electret particles 8) into microcapsules; optionally mixing a slurry containing the resultant microcapsules 10 with a water-soluble binder resin; coating on a first base 1 with the slurry so as to have a predetermined average thickness; and forming a second base 2 thereon.

The recording medium illustrated in FIGs. 10, 11, 13, and 14 can be produced by forming a dispersion liquid for forming an image recording layer which contains white electret particles 4, black electret particles 8, and a dispersion medium 3 containing a thermoreversible gelling agent into microcapsules; optionally mixing a slurry containing the resultant microcapsules 10 with a water-soluble binder resin; coating a first base 1 with the slurry so as to have a predetermined average thickness; and forming a second base 2 thereon. Notably, in this case, either or both of the first base 1 and the second base 2 include an electrically conductive layer 12 and an electrically conductive layer 1 14, which are electrically connected with electrodes 13 and 15 provided in an exterior of the recording medium, respectively.

The recording medium illustrated in FIGs. 12 and 15 can be produced by forming a dispersion liquid for forming an image recording layer which contains white electret particles 4, black electret particles 8, and a dispersion medium 3 containing a thermoreversible gelling agent into microcapsules; optionally mixing a slurry containing the resultant microcapsules 10 with a water-soluble binder resin; coating a first base 1 with the slurry so as to have a predetermined average thickness; and forming an electrically conductive base 16 thereon. Notably, in FIG. 15, the electrically conductive layer 12 is formed on the first base 1 and electrically connected with the electrode 13 provided in an exterior of the recording medium.

The recording medium of the present invention can be easily produced, so that it is suitable for a roll-to-roll system with excellent productivity. An example thereof is described with reference to FIGs. 16 and 17.

In FIG. 16, while a dispersion liquid for forming an image recording layer 21 which contains a thermoreversible gelling agent, a dispersion medium (liquid), and electrophoretic particles containing at least electret particles is heated to the temperature equal to or higher than the sol transition temperature of the dispersion medium, a first base 24 is coated with the dispersion liquid for forming an image recording layer 21 by a coating device 22. Then, while keeping the same temperature by a heating unit 23, the first base 24 on which the dispersion liquid for forming an image recording layer 21 has been applied is bonded to a second base 25 by rollers 26 so as not to trap air bubbles therein and so that the dispersion liquid for forming an image recording layer 21 is sandwiched by the first base 24 and the second base 25 Thus, the recording medium is produced.

The recording medium including microcapsules can also be produced by using a slurry which contains water, a water-soluble binder resin, and microcapsules each containing a thermoreversible gelling agent, a dispersion medium, and electrophoretic particles containing at least electret particles instead of the dispersion liquid for forming an image recording layer 21 in FIG. 16.

In FIG. 17, while a dispersion liquid for forming an image recording layer 21 which contains a thermoreversible gelling agent, a dispersion medium (liquid), and electrophoretic particles containing at least electret particles is heated to the temperature equal to or higher than the sol transition temperature of the dispersion medium, a first base 24 is coated with the dispersion liquid for forming an image recording layer 21 by a coating device 22. The resultant image recording layer is cooled to thereby turn into a gel, and then coated with a coating liquid for forming a second base 28 by the coating device 22. The resultant second base is solidified by a drier or a curing device 29. Thus, the recording medium is produced.

The recording medium including microcapsules can also be produced by using a slurry which contains water, a water-soluble binder resin, and microcapsules each containing a thermoreversible gelling agent, a dispersion medium, and electrophoretic particles containing at least electret particles instead of the dispersion liquid for forming an image recording layer 21 in FIG. 17.

(Image recording apparatus, Image Recording Method, and Image Recording Set)

An image recording apparatus used for recording an image on the recording medium of the present invention, and includes at least a heating unit and an electric field applying unit. The image recording apparatus preferably further includes an image erasing unit, and may further include other units, if necessary.

In accordance to the image recording method of the present disclosure, an area of the image recording layer of the recording medium which is heated is an entire image recording area of the recording medium, and larger than an area of the image recording layer of the recording medium to which an electric field is applied. Alternatively, an area of the image recording layer of the recording medium to which an electric field is applied is an entire image recording area of the recording medium, and larger than an area of the image recording layer of the recording medium which is heated. Alternatively, an area of the image recording layer of the recording medium which is heated is equal to an area of the image recording layer of the recording medium to which an electric field is applied. In the case where an entire image recording area of the recording medium is heated, for example, used is a system where an entire area of the recording medium is heated to turn the dispersion medium therein into a sol, and an image pattern is recorded by applying an electric field. In the case where an electric field is applied to an entire image recording area of the recording medium, an electric field is applied an entire area of the recording medium, and an image pattern is recorded by applying heat. Further, in the case where an area of the image recording layer of the recording medium which is heated is equal to an area of the image recording layer of the recording medium to which an electric field is applied, for example, used is a system where heat and electric field are applied to an area of the recording medium to which an image is recorded.

The image recording set of the present invention includes at least a recording medium and an image recording apparatus, and may further include other members, if necessary. The recording medium is a recording medium of the present invention.

<Image recording apparatus>

The image recording apparatus is an image recording apparatus used for recording an image on the recording medium, and includes at least a heating unit and an electric field applying unit. The image recording apparatus preferably further includes an image erasing unit, and may further include other units, if necessary.

The heating unit, the electric field applying unit, and the image erasing unit are not necessarily provided in this order in the image recording apparatus, and they can be arbitrarily provided.

An image recording method used in the present invention (first image recording method) includes at least a heating step which is a step of heating an entire image recording area, and an electric field applying step. The first image recording method preferably further includes an image erasing step, and may further include other steps, if necessary.

The heating step, the electric field applying step, and the image erasing step do not need to be performed in this order, and the order thereof can be appropriately performed.

The image recording method used in the present invention (second image recording method) includes at least an electric field applying step which is a step of applying an electric field to an entire image recording area, and a heating step. The second image recording method preferably further includes an image erasing step, and may further include other steps, if necessary.

The electric field applying step, the heating step, and the image erasing step do not need to be performed in this order, and the order thereof can be appropriately performed.

The image recording method can be suitably performed by the image recording apparatus.

The image recording apparatus is not integrated with the recording medium, and is a so-called externally driven image recording apparatus. However, an embodiment in which a recording medium and an image recording apparatus are used as a set and are integrated together is also included in the scope of the present invention.

«Heating Unit and Heating Step»

The heating unit is appropriately selected depending on the intended purpose without any limitation, provided that it is a unit configured to heat the recording medium and capable of heating the recording medium to the temperature equal to or higher than a sol (liquid) transition temperature of the dispersion medium in the image recording layer.

The heating unit is used differently in the case where an entire area of the image recording layer of the recording medium is heated, and in the case where a part of the image recording layer is heated, depending on the image recording method. For example, the former is used in a case where an entire area of the image recording layer is heated to turn the recording medium into a sol, followed by applying an electric field to at least a part of the image recording layer to thereby record (form) an image, and the latter is used in a case where, after (or while) an electric field is applied to an entire area of the image recording layer, at least a part of the image recording layer is heated to thereby turn the dispersion medium into a sol and record (form) an image.

In the case where the entire area of the image recording layer is heated, for example, a fixing device used for electrophotographic copiers or printers can be suitably used as the heating unit. Specifically, examples thereof include a heat roller.

The heating step is appropriately selected depending on the intended purpose without any limitation, provided that it is a step of heating the recording medium. Example thereof includes a step of heating an entire area of the image recording layer in the recording medium. The heating step can be carried out by the heating unit.

FIG. 18 illustrates one example of the heating unit using a heat roller. The heating unit of FIG. 18 includes a heat roller 32 inside of which a heat source 31 is provided, a pressure roller 33, a high speed response thermistor 34, and a thermostat 35 for preventing over heating. Examples of the heat source 31 include a halogen heater, and a ceramic heater. The heating roller 32 preferably has a configuration in which Si rubber is covered on a core metal with high rigidity such as iron and SUS. As the pressure roller 33, a coating with a thickness of approximately 100 μm of, for example, Si rubber, fluororubber or fluorine resin is coated on a core metal for smoothly feeding and preventing twining of a transfer material. In addition, it is preferable that a pressure arm is provided on an end portion of the pressure roller 33, and spring suspension is provided to allow a load to be applied between the pressure roller and the heat roller 32. A method is also possible that the pressure roller 33 is a heat roller enclosing a heater so as to heat the recording medium from both of the recording surface side and the back surface side, which is effective for increasing the recording speed of the recording medium 30.

As illustrated in FIG. 19, moreover, a unit including a belt-shaped film rotator 39 disposed in contact with the recording medium 30, and a heat source 31 fixed on the inner side of the film so as to face the recording medium 30 can be used. This has advantages such as shortening the warm-up time and reducing the power consumption. In this heating unit, the belt-shaped film rotator 39 is rotated by a roller 37 and a roller 38. Moreover, the recording medium 30 is pressurized by the pressure roller 33. Furthermore, the temperature of the heat source 31 is controlled by a temperature sensor 36.

The heating unit may be an IH (Electromagnetic Induction Heater) type device. In the IH type device, when a high-frequency power source (inverter) is connected to an exciting coil and a high-frequency current is supplied to the exciting coil, a high-frequency magnetic field is generated around an IH coil, and due to this magnetic field, an eddy current passes through a magnetic metal member and Joule heat is generated, whereby performing heating.

On the other hand, for recording an image on the recording medium by heating a part of the image recording layer, a thermal head can be used. The thermal head is a device that performs recording on a recording medium by selectively applying a potential according to image data to be recorded to thereby heat aligned heating resistors.

The thermal head is appropriately selected depending on the intended purpose without any limitation, provided that it can heat the recording medium to temperature equal to or higher than the sol transition temperature. Examples thereof include conventional thermal heads used for a thermosensitive printer, such as a direct thermal printer and a thermal transfer printer. The thermal head is light in weight and small in size, requires low consumption power, and is capable of straight pass, hence is very suitable as an image forming unit used for the recording medium of the present invention. The recording medium of the present invention uses the thermoreversible gelling agent, and therefore temperature responsiveness to sol-gel transition is high, and sol-gel transition of the dispersion medium can be sufficiently induced by the thermal head. Thus, image formation can be performed not only by an electric field, but also by heat, which is very effective and useful.

As another method, moreover, a method using laser light can be used. In this method, heating is performed using thermal energy of laser light, which is a non-contact heating system unlike recording by a thermal head. With this method, recording can be performed from a position away from the recording medium.

«Electric Field Applying Unit and Application of Electric Field»

The image recording apparatus has an electric field applying unit configured to apply an electric field to the recording medium.

-Electric Field Applying Unit-

The electric field applying unit is appropriately selected depending on the intended purpose without any limitation, provided that it is a unit configured to apply an electric field to the recording medium.

The electric field applying unit is used differently in the case where an electric field is applied to an entire area of the image recording layer of the recording medium, and in the case where an electric field is applied to a part of the image recording layer, depending on the image recording method. The former is used in a case where, after (or while) an electric field is applied to an entire area of the image recording layer, an image is recorded (formed) by the heating unit, and the latter is used in a case where, after an entire area of the image recording layer is heated by the heating unit, an electric field is applied to a part of the image recording layer to record (form) an image.

As for the electric field applying unit configured to apply an electric field to an entire area of the image recording layer of the recording medium, various chargers or dischargers are used. Examples thereof include a corona charger, a roller charger, a solid discharger, a brush charger, and a blade charger.

The corona charger is a member that charges the recording medium by applying a high voltage to a wire, ionizing the air around the wire, and moving the ions to the surface of the recording medium, and has advantages of non-contact, high-speed followability, and high charge uniformity. The corona charger is formed by laying discharge wires such as tungsten wires and stainless steel wires with a diameter of 40 $\mu$m to 100 $\mu$m in 1 to 3 rows in a shield case provided with corrosion resistance, and gold-plated discharge wires are used for reducing discharge unevenness in many cases. As the corona charger, there are a corotron type without a grid and a scorotron type using metal thin wires or punching metal as a grid (control grid or suppressor grid). The discharge state is different between the case where a positive voltage is applied to the discharge wire and the case where a negative voltage is applied to the discharge wire. When a positive voltage is applied, discharge occurs uniformly along the wire, and on the other hand, when a negative voltage is applied, discharge becomes point-like. Therefore, when a positive voltage is applied, charging becomes substantially uniform even without a grid, and on the other hand, when a negative voltage is applied, charge unevenness assuming linear shading occurs without a grid, so that a scorotron type provided with a grid is preferable for uniform charging.

The roller charger is provided so as to electrically connect with or in proximity to the recording medium, and can charge an entire surface of the recording medium while rolling accompanied with the movement of the recording medium. The roller charger is typically composed of two layers of an elastic layer and an outermost layer provided on a core metal. Particularly for the elastic layer, middle-resistant rubber such as hydrin rubber or urethane rubber is used. In such rubber, a resistance control material such as carbon, graphite, activated carbon fiber, and an ionic conductor is dispersed to control the volume resistivity to $10^5$ $\Omega$·cm to $10^8$ $\Omega$·cm. The roller charger produces less ozone and NOx and allows setting of a low applied voltage, so that it is effective for reducing power consumption.

Moreover, it is also possible to use an electric field applying unit, other than a charger utilizing discharge. Such electric field applying unit is particularly suitably used for a recording medium, in which an electrically conductive layer is provided between a base and an image recording layer, or an electrically conductive base is used as a base. Use of these recording media is particularly preferable, because driving voltage can be significantly reduced, and it does not require a charger utilizing discharge.

In the case of the recording medium in which an electrically conductive layers or electrically conductive bases are provided on the both surfaces of the image recording layer, an electric field can be applied thereto by giving a difference between the voltage applied to the electrically conductive layer or electrically conductive base provided at the side from which the recording medium is viewed, and the voltage applied to the electrically conductive layer or electrically conductive base provided at the opposite side to the side from which the recording medium is viewed. For example, an electric field of 100 V can be applied to the image recording layer by applying voltage of 100 V to the electrically conductive layer provided at the side from which the recording medium is viewed, via an electrode of the recording medium electrically connected with the electrically conductive layer, and electrically connecting with earth the electrode, which is electrically connected with the electrically conductive layer provided at the opposite side to the side from which the recording medium is viewed. An electric field of -100 V can be applied to the image recording layer by the reverse connection thereof.

In this case, as for the electric field applying unit, any unit can be used, as long as it can electrically connect with an electrode or electrically conductive base, and can apply an electric field to the recording medium of the present invention to thereby form an image. For example, a brush-shaped or roller-shaped member having electric conductivity is preferably used. Specifically, a brush formed of electrically conductive fibers or plated metal, or a rubber formed of electrically conductive rubber or metal can be used.

The electric field applying unit configured to apply an electric field to a part of the image recording layer of the recording medium is appropriately selected depending on the intended purpose without any limitation, provided that it is capable of forming a latent electrostatic image, and can form an image by applying an electric field to the recording medium of the present invention.

As for a system for forming the latent electrostatic image, an electrophotographic system, and an ion irradiating system have been known, and these systems can be effectively used in the present invention. In order to apply an electric field, a counter electrode is provided at the position opposite to the electric field applying unit via the recording medium.

--Electrophotographic Electric Field Applying Unit --

The electrophotographic electric field applying unit is appropriately selected depending on the intended purpose without any limitation, and examples thereof include a unit configured to charge an image bearing member, and then exposing light corresponded to an image pattern to the image bearing member to form a latent electrostatic image on a surface of the image bearing member.

An image can be recorded on the recording medium of the present invention by contacting with a surface of the image bearing member on which a latent electrostatic image has been formed.

The electrophotographic electric field applying unit includes at least an image bearing member, preferably further a charger and an exposing unit, and, if necessary, may further include other members such as a charge-eliminating unit. In order to apply an electric field to the recording medium, a counter electrode is provided at the position opposite to the image bearing member serving as the electric field applying unit via the recording medium.

---Image Bearing Member---

The image bearing member is appropriately selected depending on the intended purpose without any limitation, provided that it is capable of forming a latent electrostatic image. For example, the image bearing member may be a single-layer image bearing member which is composed of a single-layer photosensitive layer containing a mixture of a charge generating material and a charge transporting material, provided on an electrically conductive support formed of an aluminum or nickel element tube or a belt, or may be a laminate image bearing member, in which a charge generating layer and a charge transporting layer are laminated on top of another. Further, the image bearing member may be a high durable image bearing member, in which a protective layer is provided at an outermost surface thereof.

The image bearing member can be used both by positively charged and by negatively charged. Because there are more hole transporting materials than electron transporting materials, a negative charging system (in this case, black electrophoretic particles are positively charged) is more preferable in view of electrostatic properties. However, a positive charging system may be used in case of the single-layer image bearing member, because electron transportation and hole transportation are possible.

---Charger---

The charger is appropriately selected depending on the intended purpose without any limitation, provided that it is capable of charging the image bearing member. Examples of the charger include a corona charger, a roller charger, a solid discharger, and a brush charger. Among them, preferred are a corona charger, and a roller charger.

---Exposing Unit---

The exposing unit is appropriately selected depending on the intended purpose without any limitation, provided that it is capable of forming a latent electrostatic image on a surface of the image bearing member, and examples thereof include a semiconductor laser (LD), a light emitting diode (LED), and an electroluminescence (EL). Among these, a semiconductor laser (LD) and a light emitting diode (LED) are particularly preferable.

---Charge-eliminating Unit---

The charge-eliminating unit is appropriately selected depending on the intended purpose without any limitation, provided that it is capable of totally erasing the latent electrostatic image formed on the surface of the image bearing member, and examples thereof include a semiconductor laser (LD), a light emitting diode (LED), an electroluminescence (EL), a fluorescent light, a tungsten lamp, and a halogen lamp. Among these, a light emitting diode (LED) is preferable.

---Other Units---

Examples of the other units include a cleaning unit, and a lubricating substance applying unit. These are used, if necessary.

The cleaning unit is used for the purpose of removing foreign matter and discharge product deposited on the surface of the image bearing member.

The cleaning unit is appropriately selected depending on the intended purpose without any limitation, and examples thereof include a blade, and a brush. The cleaning unit is preferably disposed so as to be in contact with the image bearing member.

The lubricating substance applying unit is used for the purpose of enhancing releasability of the surface of the image bearing member or removing a discharge product in combination with the cleaning unit.

The lubricating substance applying unit is appropriately selected depending on the intended purpose without any limitation, and examples thereof include a brush. The lubricating substance applying unit is preferably disposed so as to be in contact with the image bearing member and a solidified lubricating substance. In the case where the lubricating substance applying unit is a brush, the lubricating substance is applied to the surface of the image bearing member by rotating the brush.

Examples of the lubricating substance include waxes, a fluorine-containing resin, a silicone resin, a polyolefin-based resin, and fatty acid metal salt. Among them, fatty acid metal salt is preferable, and zinc stearate is more preferable.

---Counter Electrode---

The counter electrode is provided at the position opposite to the image bearing member via the recording medium.

A material of the counter electrode is appropriately selected depending on the intended purpose without any limitation, provided that it conducts electricity, and examples thereof include metal such as platinum, gold, silver, copper, aluminum, zinc, nickel, titanium, and bismuth, alloys of these metals and carbon.

The counter electrode needs to be increased in adhesion to the recording medium, so that, for example, an electrically conductive roll member with elasticity is effectively used as the counter electrode.

FIG. 20 illustrates an example of an electric field applying unit using an image bearing member in the image recording apparatus. At the recording side of the recording medium 30, an image bearing member 40 is provided to be in contact with the recording medium 30. At the back surface side of the recording medium 30, a counter electrode 44 is provided at the position opposite to the image bearing member 40 via the recording medium 30. In the surrounding area of the image bearing member 40, provided are at least a charger 41 configured to charge the image bearing member 40, an exposing unit 42 configured to form a latent electrostatic image on a surface of the image bearing member 40, and a charge-eliminating unit 43 configured to erase the latent electrostatic image on the surface of the image bearing member 40.

--Ion Irradiation Type Electric Field Applying Unit--

The ion irradiation type electric field applying unit includes, for example, an ion flow generating section generally made of a discharge body, an electrode that controls the generated ion flow, and an opening for releasing the ion flow. The flow volume of ions generated in the ion flow generating section is controlled by an electric field.

With the ion irradiation type, under an atmosphere in which ion generation is possible such as in the atmosphere, a latent electrostatic image can be directly formed by irradiation of ions generated by discharge from a discharge electrode, so that an image can be directly recorded on the recording medium.

As the ion irradiation type, for example, a heating discharge type is known in which discharge is generated by selectively heating discharge electrodes in a state where a voltage (discharge control voltage) that does not generate discharge only by being applied to the discharge electrodes but generates discharge by further heating is being applied (see JP-B No. 3725092). This type includes discharge electrodes and heating elements disposed corresponding to the respective discharge electrodes, and discharge is not generated only by applying a voltage to the discharge electrodes, and discharge is generated by further heating. Therefore, presence/absence of ion generation can be controlled by the heating elements, and lower-voltage driving, cost reduction, and downsizing of the device can be realized.

Specific example of the ion irradiation type electric field applying unit includes an ion irradiation head having the aforementioned mechanism. The ion irradiation head includes a discharge body, and optionally a heating member and other members. Moreover, a counter electrode is provided at the position opposite to the ion irradiation head via the recording medium.

Since image recording to the recording medium of the present invention is realized by heating and liquidizing the dispersion medium of the image recording layer, the aforementioned system, in which heating is performed at the time of image recording, is very suitable for the present invention. In the image recording apparatus, it is also possible that this one ion irradiation device (ion irradiation head) is used to serve as both of the heating unit and the electric field applying unit, and this is effective for cost reduction, reduction in power consumption, and downsizing of the device, however, the recording speed and the image quality may deteriorate, so that it must be used depending on the intended use.

FIG. 21 illustrates one example of the ion irradiation type electric field applying unit. In FIG. 21, at the position opposite to the ion irradiation head, a counter electrode 44 is provided to as to be in contact with the back surface of the recording medium 30. The ion irradiation head 45 is provided in contact with or in proximity to the recording surface of the recording medium 30. Inside the ion irradiation head 45, a discharger (not illustrated), and optionally a heating member are provided. In the case of heating discharge system, a voltage is applied to a region in which discharge is generated by heating, and presence/absence of ion irradiation is controlled by temperature control by using the heating member.

Ions that have passed through the opening of the ion irradiation head are adhered to the recording medium according to an electric field formed between the ion irradiation head and the counter electrode, to thereby record an image.

«Image Erasing Unit and Image Erasing Step»

The image erasing unit is appropriately selected depending on the intended purpose without any limitation, provided that it is a unit configured to apply an electric field to the recording medium to erase the image recorded on the recording medium.

The image erasing step is appropriately selected depending on the intended purpose without any limitation, provided that it is a step of applying an electric field to the recording medium to erase the image recorded on the recording medium. For example, the image erasing step can be carried out by the image erasing unit.

--Unit for Erasing Image by Applying Electric Field-

The unit for erasing an image by applying an electric field is appropriately selected depending on the intended purpose without any limitation. Example thereof includes an image erasing unit including a counter electrode, a charger or a discharger, and an electrically conductive brush or electrically conductive roller.

Examples of the counter electrode include the counter electrode mentioned in the descriptions of the electrophotographic electric field applying unit.

Examples of the charger or the discharger include an electric field applying unit mentioned in the descriptions of the electrophotographic electric field applying unit such as a corona charger, a roller charger, and a solid discharger. The electrically conductive brush and the electrically conductive roller which are the electric field applying unit used at the time of recording an image can also be used as the image erasing unit.

<<Other Units and Other Steps>>

Examples of the other units include a cooling unit.

Examples of the other steps include a cooling step.

-Cooling Unit and Cooling Step-

The cooling unit is appropriately selected depending on the intended purpose without any limitation, provided that it is a unit capable of cooling the image recording layer of the recording medium to the temperature equal to or lower than the gel transition temperature of the dispersion medium. Examples of the cooling unit include a cooling fan, a cooling roller, and a cooling belt. As the cooling roller and the cooling belt, for example, a water-cooling system inside of which water is circulated can be adopted.

The cooling step is appropriately selected depending on the intended purpose without any limitation, provided that it is a step of cooling the recording medium. For example, the cooling step can be carried out by the cooling unit or by natural cooling.

By the cooling unit and the cooling step, the dispersion medium is turned into a gel soon after image recording, and image defects can be prevented, so that higher image quality is realized.

Note that, the image recording apparatus of the image recording set of the present invention includes at least a heating unit, and an electric field applying unit, preferably further includes an image erasing unit. However, two or more units of the heating unit, the electric field applying unit, and the image erasing unit can be combined and used as one unit, which is effective in cost saving, consumption power saving, and down sizing of the device.

Specifically, it is possible to apply an electric field while heating by integrating the heating unit with the electric field applying unit. For example, the ion irradiation head may be provided with a heating member, or a drum heater may be mounted on the image bearing member capable of forming a latent electrostatic image.

It is also possible that the image erasing unit is integrated with the electric field applying unit so that image recording is performed subsequently to total image erasing.

For example, after totally erasing the image on the recording medium by the electric field applying unit, an image can be used by means of the same electric field applying unit.

Similarly, it is also possible to integrate the heating unit with the electric field applying unit and the image erasing unit.

For example, an image on the recording medium can be erased by initially outputting a solid pattern on the entire surface of the recording medium by the image bearing member equipped with a drum heater as the heating member, followed by outputting an image pattern.

As described above, as for the image recording apparatus of the image recording set of the present invention, the heating unit, the image erasing unit, and/or the electric field applying unit can be combined for use, and all combinations are included in the scope of the present invention.

The number of each of the heating unit, the image erasing unit, and the electric field applying unit is not limited

to one, and a plurality of each of these units may be provided. In particular, by installing a plurality of the heating units, the image quality may be improved. For example, an image can be stably formed in any temperature environment by maintaining the temperature of the recording medium with a plurality of the heating units from the time when the recording medium is passed through the first heating unit to the time when an image is recorded. In the case where an image bearing member is used as the electric field applying unit, especially, if the image bearing member serving as the electric field applying unit is cold, the dispersion medium may begin to be turned into a gel when the recording medium is in contact with the image bearing member even when the recording medium has been heated by the heating unit in advance. Therefore, it may be effective to provide a drum heater serving as the heating member to the image bearing member to thereby maintain the temperature of the recording medium high until image recording is completed.

One example of the electrophoretic image recording method using the recording medium of the present invention is explained with reference to FIGs. 22 and 23. However, the present invention is not limited to these examples.

The image recording apparatus depicted in FIG. 22 includes a heating unit equipped with heating rollers 32 each containing a heat source 31 provided with respect to both a recording surface and back surface of the recording medium 30; a image erasing unit 46 configured to charge an entire recording surface of the recording medium 30 by a corona charger to erase all the recorded image; an ion irradiation head 45 configured to apply an electric field to the recording medium 30; and a counter electrode 44 which is disposed so as to be in contact with back surface of the recording medium 30 when the recorded image is all erased and when an electric field is applied to form an image. The heating unit further includes a high speed response thermistor 34 and a thermostat 35.

The image recording apparatus depicted in FIG. 23 includes a heating unit configured to heat the recording medium 30 via a belt-shaped film rotator 39 that is stretched so as to be in contact with a heat source 31; a image erasing unit 46 configured to charge an entire recording surface of the recording medium 30 by a corona charger to erase all the recorded image; an electric field applying unit including an image bearing member 40 to which a latent electrostatic image can be repeatedly formed by means of a charger 41, an exposing unit 42, and a charge-eliminating unit 43; and a counter electrode 44 which is disposed so as to be in contact with back surface of the recording medium 30 when the recorded image is all erased and when an electric field is applied to form an image. In the heating unit, the belt-shaped film rotator 39 is rotated by a roller 37, and roller 38. Moreover, the recording medium 30 is pressed by a pressure roller 33. Furthermore, temperature of the heat source 31 is controlled by a temperature sensor 36.

As illustrated in FIGs. 22 and 23, when the recording medium 30 is heated by the heating unit, the dispersion medium contained in the recording medium is turned into a liquid by an action of the thermoreversible gelling agent contained in the dispersion medium, so that the electrophoretic particles dispersed in the dispersion medium are allowed to migrate. Next, the image erasing unit 46 configured to totally erase images recorded on the recording medium 30 applies a voltage uniformly to the entire surface of the recording medium 30, so that the recording surface side of the recording layer is filled with electrophoretic particles with the same polarity and the same color, whereby images recorded on the recording medium are totally erased. For example, in the case where negatively charged white electrophoretic particles and positively charged black electrophoretic particles are contained in the dispersion medium, when the image erasing unit 46 applies positive voltage, the recording surface side is filled with the negatively charged white electrophoretic particles, and the entire surface of the recording medium 30 is turned into white. Subsequently, a latent electrostatic image corresponding to an image pattern is formed on the recording medium 30, to thereby record the image pattern on the recording medium 30. In the case where a latent electrostatic image in which an imaging area is negatively charged is formed on the recording medium 30, the positively charged black electrophoretic particles are migrated to the recording surface side in the imaging area, but no movement of the particles occurs in an non-imaging area, so that a black image pattern is recorded on the recording medium 30. Thereafter, when the recording medium 30 is cooled to room temperature, the dispersion medium in the recording medium 30 is turned into a gel by an action of the thermoreversible gelling agent, so that the electrophoretic particles contained in the dispersion medium cannot migrate. Moreover, the formed image is stably maintained even when stimuli is externally applied over a long period of time.

Another example of an electrophoretic image recording method using the recording medium of the present invention will be explained with reference to FIGs. 24 and 25. Note that the present invention is not limited thereto.

The image recording set depicted in FIG. 24 includes a thermal head 47 serving as an image forming unit configured to heat a certain area of the recording medium 30 of the present invention; an electric field applying unit 48 configured to be in contact with a first electrode 13 formed on an exterior of the recording medium and to apply an electric field to the image recording layer in the recording medium; and an electric field applying unit 49 configured to electrically connect with a second electrode 14 or an electrically conductive base 16 (not illustrated) formed on a back surface of the recording medium, and to apply an electric field to the image recording layer in the recording medium.

FIG. 25 illustrates the image recording set in FIG. 24 viewed from the side, and as for the recording medium, the recording medium illustrated as one example in FIG. 15 is used. Once the recording medium 30 is set in the image recording apparatus and is transported therein, the first electrode 13 formed on the exterior of the recording medium 30 is electrically connected with the roller-shaped electric field applying unit 48 equipped with the image recording apparatus. Similarly, the electrode conductive base 16 formed on the back surface of the recording medium 30 is electrically

connected with the roller-shaped electric field applying unit 49 equipped with the image recording apparatus. When voltage of the electric field applying unit 48 is different from that of the electric field applying unit 49, the electric field is applied to the entire image recording layer 7. Note that, the first electrically conductive layer 12 and the electrically conductive base 16 are not electrically connected to each other, and they are insulated with the image recording layer 7. Moreover, as for other structural examples of FIG. 25, there are structures illustrated in FIGs. 26 and 27.

At the same time as the electric field is applied to the entire image recording layer 7, the predetermined area of the image recording layer 7 is heated by the thermal head 47. The area heated by the thermal head 47 is liquidized by a function of the thermoreversible gelling agent contained in the dispersion medium in the recording medium. The electret particles or the electrophoretic particles therein are allowed to move because the electric field has already been applied to the entire area of the image recording layer 7.

When the recorded image in the entire area of the recording medium 30 is erased, the entire area of the image recording layer 7 is heated by the thermal heat 47, while applying an electric field to the entire area of the image recording layer 7, to thereby liquidize the dispersion medium. As a result, the electret particles or the electrophoretic particles contributing to image formation are migrated to the opposite side to the side of the image recording layer from which it is viewed, to thereby erase the entire area of the recording medium. In the case where positively charged black electret particles or electrophoretic particles are contained in the dispersion medium, for example, the black electret particles or electrophoretic particles are migrated to the opposite side to the side from which it is viewed by positively charging the side of the image recording layer 7 from which it is viewed by means of the electric field applying units 48 and 49. In the case where negatively charged white electret particles or electrophoretic particles are further contained in addition to the black electret particles or electrophoretic particles, the white electret particles or electrophoretic particles are migrated to the side from which it is viewed. As a result, the entire surface turned into white so that a state where an image is erased can be created.

When an image pattern is recorded on the recording medium 30, the predetermined area of the image recording layer is heated by the thermal head 47 while an electric field is applied to the entire image recording layer 7 to thereby liquidize only the dispersion medium contained in the heated area, so that the electrophoretic particles contributing to image formation are migrated to the side of the image recording layer 7 from which it is viewed. In the case where negatively charged white electret particles or electrophoretic particles are contained in addition to the black electret particles or electrophoretic particles, the white electret particles or electrophoretic particles are migrated to the opposite side to the side from which it is viewed. As a result, the predetermined image pattern can be recorded. In the case where positively charged black electret particles or electrophoretic particles are contained in the dispersion medium, for example, from the initial state that the entire area of the image recording layer 7 is in white, the black electret particles or electrophoretic particles are migrated to the side from which it is viewed by negatively charging the side of the image recording layer 7 from which it is viewed by means of the electric field applying units 48 and 49. In the case where negatively charged white electret particles or electrophoretic particles are contained in addition to the black electret particles or electrophoretic particles, moreover, the white electret particles or electrophoretic particles are migrated to the opposite side to the side from which it is viewed. As a result, the predetermined black image pattern with the white background can be recorded.

When the recording medium, on which recording or erasing has been performed in the aforementioned manner, is cooled, the dispersion medium in the recording medium 30 is turned into a gel by a function of the thermoreversible gelling agent, so that the electret particles or electrophoretic particles contained the dispersion medium cannot migrate. Therefore, an image on the recording medium is stably maintained, even when the recording medium is stored over a long period, or stimuli is externally applied thereto.

The image recording apparatus using the thermal head 47 has a very simple structure, and therefore it is very effective in downsizing, reducing the weight thereof, cost waving, and powder saving. Moreover, the recording medium having an electrode or electrically conductive base, which is used for the aforementioned image recording apparatus, is as thin as paper, and an electric field is directly applied to the image recording layer while maintaining flexibility. Therefore, it is possible to record a high contrast image thereon with low driving voltage, which is particularly useful in the present invention. The image recording set is very useful as a portable rewritable printer.

The image recording set of the present invention includes the aforementioned recording medium; and an image recording apparatus equipped with a heating unit configured to heat the recording medium, and an electric field applying unit configured to apply an electric field to the recording medium. The image recording set of the present invention include, not only an embodiment where a recording medium and an image recording apparatus, which are separately existed, are used as a set, but also an embodiment where a recording medium and an image recording apparatus are integrated. Examples of the integrated image recording set will be illustrated in FIGs. 28 and 29.

FIG. 28 is the image recording set of the present invention, equipped with a heating unit 47 configured to perform recording and erasing of an image on the recording medium 30, and an electric field applying unit 51, which are integrally mounted with the recording medium 30 of the present invention. Note that, as for the electric field applying unit, the image recording set is further equipped with a electric field applying unit 52, which is not illustrated. Moreover,

the image recording set includes other units, such as an image erasing unit, and a cooling unit.

In the image recording set depicted in FIG. 28, the recording medium 30 is fixed, and an image can be recorded on and erased from the recording medium 30, by moving the heating unit 47, and the electric field applying units 51 and 52 (not illustrated), which had been integrated with the recording medium, over an outer surface of the recording medium 30.

Moreover, another example, which is different from FIG. 28, is depicted in FIG. 29. FIG. 29 illustrates the image recording set of the present invention equipped with a heating unit 47 configured to record and erase an image on the recording medium 30, and an electric field applying unit 51, which are integrally mounted with the recording medium 30 of the present invention. Note that, as for the electric field applying unit, the image recording set is further equipped with an electric field applying unit 52, which is not illustrated. Moreover, the image recording set may further include other units, such as an image erasing unit, and a cooling unit.

In the image recording set depicted in FIG. 29, the heating unit 47, and the electric field applying units 51 and 52 (not illustrated) are fixed, and an image can be recorded on and erased from the recording medium 30 by moving the recording medium 30 while being in contact with these units.

These integrated image recording sets can be used for a signboard, advertising, and guide display, in which a still image is mainly displayed, and are very effective.

## Examples

The present invention will be explained with reference to Examples but the present invention is not limited thereto. Note that, in Examples and Comparative Examples, "part(s)" means "part(s) by mass."

### <Sol-gel Transition Temperature>

First, a method for measuring sol-gel transition temperatures is described below.

A thermoreversible gelling agent was added into a dispersion medium, followed by melt-heating with stirring, and cooling to thereby obtain a 5% by mass gel. The resultant gel was measured for sol-gel transition temperatures by a differential scanning calorimetry (DSC, measuring device: DSC Q200 manufactured by TA Instruments). The measurement was made in cycles in which the gel was heated from 10°C to 90°C at a rate of 2°C/min, and cooled in the same manner at a rate of 2°C/min. The endothermic peak temperature in the heating obtained by DSC measurement was determined as the sol transition temperature, and the exothermic peak temperature in the cooling was determined as the gel transition temperature.

### (Production Example of Electrophoretic Particles)

### <Production of Electret Particles 1>

Electret particles 1 were prepared as follows.

An emulsified liquid was prepared by mixing ion exchanged water and polyvinyl alcohol (PVA224 manufactured by KURARAY CO., LTD.) at a mass ratio of 9:1. To this, were added 6.2 parts by mass of tetrafluoroethylene-vinyl monomer copolymer (trade name: ZEFFLE GK-510, manufactured by DAIKIN INDUSTRIES, LTD), 0.5 parts by mass of a pigment (carbon black #3, manufactured by Mitsui Chemicals, Inc.), 1.5 parts by mass of isocyanate curing agent (trade name: DESMODUR L75, manufactured by Sumika Bayer Urethane Co., Ltd.), and 61.7 parts by mass of a 5% by mass solution of vinylidene fluoride-hexafluoropropylene-tetrafluoroethylene terpolymer (trade name: VT470, manufactured by DAIKIN INDUSTRIES, LTD) in ethyl acetate, followed by stirring at 6,000 rpm for 6 min using a homo mixer. Thereafter, the resultant was heated at 80°C with stirring at 300 rpm for 8 hours using a dissolver to thereby obtain a suspension liquid in which particles were dispersed.

The resultant suspension liquid was irradiated with electron beam using an electron beam accelerator to thereby make the particles to have an electret property. Then, the resultant electret particles were subjected to solid-liquid separation to thereby obtain black negatively charged electret particles 1. Notably, the electron beam was irradiated under the following conditions: accelerating voltage of 300 kV, exposure does of 500 kGy, and temperature of 140°C.

### <Production of Electret Particles 2>

Electret particles 2 were prepared as follows.

As a raw material of a core portion which was capable of dispersing a pigment therein, 9.0 parts by mass of tetrafluoroethylene-vinyl monomer copolymer (trade name: ZEFFLE GK-510, manufactured by DAIKIN INDUSTRIES, LTD), and 1.0 part by mass of a pigment (Symuler fast yellow 4G0, manufactured by DIC Corporation) were charged

into a beaker, followed by stirring at 500 rpm for 30 min using a dissolver. For the purpose of pulverizing the pigment, zirconia beads (diameter: 0.3 mm) were added thereto, followed by stirring at 2,000 rpm for 60 min. The resultant was sieved with a mesh (#250) to remove the zirconia beads to thereby obtain a pigment dispersion.

The resultant pigment dispersion and 60.0 parts by mass of vinylidene fluoride-hexafluoropropylene-tetrafluoroethylene terpolymer (trade name: VT470, manufactured by DAIKIN INDUSTRIES, LTD) were charged into a beaker, followed by stirring at 700 rpm for 30 min using a dissolver. To this, 2.0 parts by mass of an isocyanate curing agent (trade name: DESMODUR L75, manufactured by Sumika Bayer Urethane Co., Ltd.), followed by stirring at 1,000 rpm for 60 min. The resultant was added to 200 parts by mass of a 5% by mass aqueous solution of polyvinyl alcohol (PVA224, manufactured by KURARAY CO., LTD.) serving as an emulsifier which had been being stirred using a homo mixer, followed by stirring at 6,000 rpm for 6 min. The resultant was stirred by means of a propeller at 600 rpm for 4 hours in a hot-water bath at 50°C to 80°C, diluted with ion exchanged water, and then subjected to solid-liquid separation at 2,000 rpm for 10 min using a centrifugal separator. The resultant precipitate was repeatedly washed for 4 times. The washed precipitate was dried in a thermostatic chamber at 50°C, followed by pulverizing to thereby obtain electret particle precursor. The resultant electret particle precursor was charged into an aluminium cup so as to spread thereover, followed by being irradiated with electron beam using an electron beam accelerator to thereby make the electret particle precursor to have an electret property. Thus, yellow negatively charged electret particles 2 each having a core-shell structure were obtained. Notably, the electron beam was irradiated in the air under the following conditions: accelerating voltage of 800 kV, exposure does of 100 kGy, and temperature of 120°C.

<Production of Electret Particles 3>

Electret particles 3 were prepared as follows.

As a raw material of a core portion which was capable of dispersing a pigment therein, 30.0 parts by mass of methyl methacrylate monomer (reagent), and 6.0 part by mass of a pigment (FASTOGEN SUPER MAGENTA RG, manufactured by DIC Corporation) were charged into a beaker, followed by stirring at 500 rpm for 30 min using a dissolver. For the purpose of pulverizing the pigment, zirconia beads (diameter: 0.3 mm) were added thereto, followed by stirring at 2,000 rpm for 60 min. The resultant was sieved with a mesh (#250) to remove the zirconia beads to thereby obtain a pigment dispersion. The resultant pigment dispersion and 30.0 parts by mass of vinylidene fluoride-hexafluoropropylene-tetrafluoroethylene terpolymer (trade name: VT470, manufactured by DAIKIN INDUSTRIES, LTD) were charged into a beaker, followed by stirring at 700 rpm for 30 min using a dissolver. To this, was added 0.4 parts by mass of azobisisobutyronitrile (reagent) serving as a polymerization initiator, followed by stirring at 1,000 rpm for 60 min. The resultant was added to 200 parts by mass of a 5% by mass aqueous solution of polyvinyl alcohol (PVA224, manufactured by KURARAY CO., LTD.) serving as an emulsifier which had been being stirred using a homo mixer, followed by stirring at 6,000 rpm for 6 min. The resultant was stirred by means of a propeller at 600 rpm for 4 hours in a hot-water bath at 50°C to 80°C, diluted with ion exchanged water, and then subjected to solid-liquid separation at 2,000 rpm for 10 min using a centrifugal separator. The resultant precipitate was repeatedly washed for 4 times. The washed precipitate was dried in a thermostatic chamber at 50°C, followed by pulverizing to thereby obtain electret particle precursor. The resultant electret particle precursor was charged into an aluminium cup so as to spread thereover, followed by being irradiated with electron beam using an electron beam accelerator to thereby make the electret particle precursor to have an electret property. Thus, magenta negatively charged electret particles 3 each having a core-shell structure were obtained. Notably, the electron beam was irradiated in a nitrogen atmosphere under the following conditions: accelerating voltage of 800 kV, exposure does of 100 kGy, and temperature of 140°C.

<Production of Electret Particles 4>

Negatively charged electret particles 4 were produced in the same manner as in <Production of Electret Particles 1>, except that vinylidene fluoride-tetrafluoroethylene copolymer (trade name: VP100, manufactured by DAIKIN INDUSTRIES, LTD) was used instead of vinylidene fluoride-hexafluoropropylene-tetrafluoroethylene terpolymer (trade name: VT470, manufactured by DAIKIN INDUSTRIES, LTD).

<Production of Electret Particles 5>

Negatively charged electret particles 5 were produced in the same manner as in <Production of Electret Particles 1>, except that fluorine-containing methacrylate copolymer (trade name: OPTOOL FM450, manufactured by DAIKIN INDUSTRIES, LTD) was used instead of vinylidene fluoride-hexafluoropropylene-tetrafluoroethylene terpolymer (trade name: VT470, manufactured by DAIKIN INDUSTRIES, LTD).

<Production of Electrophoretic Particles 1>

A reaction vessel equipped with a stirrer was charged with a mixed solvent consisting of 30 parts by mass of ethanol and 3 parts by mass of water, and the solvent was adjusted to pH 9.5 with ammonium chloride. Then, 4 parts by mass of 3-(trimethoxysilyl)propylamine was added thereto and allowed to be dissolved, followed by adding 2.5 parts by mass of titanium oxide. The resulting mixture was stirred for 10 min.
Subsequently, 180 parts by mass of ethanol was added, and stirred. A solid content collected from the mixture by centrifugal separation was left to stand for a whole day and night, followed by vacuum drying for 4 hours at 70°C, to thereby obtain surface-treated titanium oxide.
Next, a reaction vessel equipped with a stirrer, a thermometer, and a reflux condenser was charged with 2.5 parts by mass of toluene, and 3 parts by mass of ethylhexyl methacrylate, followed by being allowed to be dissolved. To the resulting solution, 2.5 parts by mass of the surface-treated titanium oxide, and 0.01 parts by mass of toluene in which 0.03 parts by mass of azobisisobutyronitrile had been dissolved were added, and the resulting mixture was heated and stirred for 7 hours at 70°C under nitrogen atmosphere. The solid content was washed with tetrahydrofuran by repeatedly performing centrifugal separation, and the resultant was vacuum-dried for 4 hours a 70°C, to thereby obtain white positively charged electrophoretic particles (average particle diameter: 400 nm).

<Production of Electrophoretic Particles 2>

A solution of 8 parts by mass of ethylene glycol dimethacrylate, 10 parts by mass of methacryloxypropyl-modified silicone (SILAPLANE FM-0711 manufactured by Chisso Corporation), 2 parts by mass of dimethylaminoethyl methacrylate (reagent), and 0.1 parts by mass of azobisisobutyronitrile (reagent) serving as a polymerization initiator was slowly added to 180 parts by mass of silicone oil (KF-96L 1cs, manufactured by Shin-Etsu Chemical Co., Ltd.) which had been heated to 85°C, followed by stirring for 4 hours under a nitrogen atmosphere, heating to 95°C, and further stirring for 1 hour. After completion of the reaction, the resultant white solid content was collected, washed with silicone oil, and then dried under a reduced pressure to thereby a dispersing agent A.
Next, in a reaction vessel equipped with a stirrer, a thermometer, and a reflux condenser, 1 part by mass of the dispersing agent A, 1.5 parts by mass of carbon black, and 200 parts by mass of silicone oil (KF96, manufactured by Shin-Etsu Chemical Co., Ltd.) were combined, and irradiated with ultrasonic waves for 1 hour by a homogenizer while being cooled with ice, to thereby disperse the carbon black. To the resultant, 6 parts by mass of methyl methacrylate, 3 parts by mass of methacryloxypropyl-modified silicone (SILAPLANE FM-0725, manufactured by Chisso Corporation), 0.1 parts by mass of N,N-dimethylaminopropylacryl amide, and 0.05 parts by mass of azobis dimethylvaleronitrile serving as a polymerization initiator were added, and the resulting mixture was allowed to react for 6 hours at 60°C under a nitrogen atmosphere. After completion of the reaction, only a solid component was collected, and dried, to thereby obtain the intended black positively charged electrophoretic particles (average particle diameter: 300 nm).

<Production of Electrophoretic Particles 3>

To a reaction vessel equipped with a stirrer, a thermometer, and a reflux condenser, 100 parts by mass of water, 4 parts by mass of a monoazo pigment (PY-74), 0.1 parts by mass of 37% by mass hydrochloric acid, and 0.1 parts by mass of 4-vinylaniline were added and stirred.
Then, a solution of sodium nitrite (0.05 parts by mass) in water (0.35 parts by mass) was added dropwise thereto for about 1 hour. The resultant was heated to 65°C, stirred for 3 hours, cooled to a room temperature, and then stirred for a whole day and night.
Then, solid content thereof was collected by centrifugation, and dispersed into water. Again, solid content thereof was collected by centrifugation, left to stand for a whole day and night, and then vacuum dried at 40°C for 4 hours to thereby a surface-treated monoazo pigment.
Next, to a reaction vessel equipped with a stirrer, a thermometer, and a reflux condenser, 50 parts by mass of the surface-treated monoazo pigment, 100 parts by mass of toluene, 100 parts by mass of 2-ethylhexyl methacrylate, and 0.65 parts by mass of azobisisobutyronitrile were added and stirred. Then, the resultant was heated and stirred at 70°C for 7 hours under a nitrogen atmosphere, followed by cooling to a room temperature. Further, 500 parts by mass of tetrahydrofuran was added thereto, followed by stirring. To this, 3,000 parts by mass of methanol was added, allowed to re-precipitate, followed by subjecting to suction filtration to thereby collect a solid content. The resultant solid content was washed with tetrahydrofuran by repetitive centrifugation, followed by vacuum drying at 70°C for 4 hours, to thereby obtain yellow positively charged electrophoretic particles (average particle diameter: 400 nm).

(Example 1)

<Production of Dispersion Liquid for Forming Image Recording Layer>

First, 25 parts by mass of the electret particles 1 was added to a solution obtained by mixing 0.5 parts by mass of a blue dye (OIL BLUE 2N, manufactured by Orient Chemical Industries Co., Ltd.), 0.5 parts by mass of an non-ionic surfactant (sorbitan monolaurate SPAN 20, reagent), and 74 parts by mass of an isoparaffin-based hydrocarbon solvent (trade name: ISOPAR G, manufactured by ExxonMobil Chemical), followed by subjected to ultrasonic dispersion for 120 min. The resultant dispersion liquid was heated to 70°C. To this, 3 parts by mass of the thermoreversible gelling agent represented by the following Structural Formula (1) was added and stirred, followed by subjected to ultrasonic dispersion for 60 min while keeping the same temperature to thereby produce a dispersion liquid for forming an image recording layer.

Notably, the isoparaffin-based hydrocarbon solvent was turned into a sol at 51°C and turned into a gel at 41°C by an action of the thermoreversible gelling agent.

The thermoreversible gelling agent represented by the following Structural Formula (1) was synthesized with reference to a method for synthesizing a silicone derivative described in Synthetic Example 3 in JP-A No. 2005-232108.

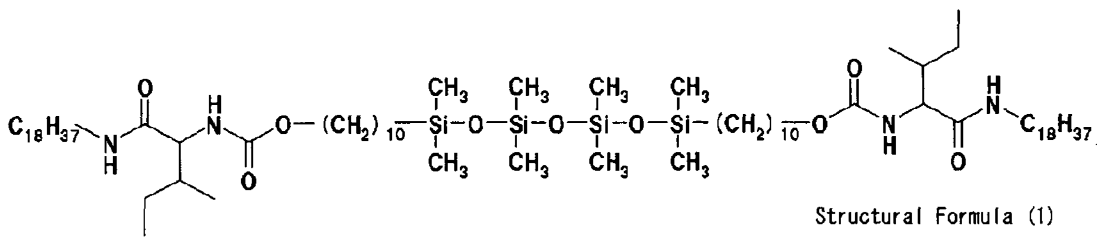

Structural Formula (1)

<Formation of Image Recording Layer>

Gelatin was added to water, and the resulting mixture was heated to 40°C and stirred for 30 min, to thereby obtain 100 parts by mass of a 2.5% by mass gelatin aqueous solution. Next, the temperature of the gelatin aqueous solution was raised to 55 °C, which is the temperature equal to or higher than the sol transition temperature of the thermoreversible gelling agent. To this, 15 parts by mass of the dispersion liquid for forming an image recording layer, which had been heated to 60°C, was gently added below a liquid surface of the gelatin aqueous solution, with stirring. Next, 25 parts by mass of a 5% by mass gum arabic aqueous solution was added thereto, and a resulting mixture was further stirred for 30 min. Thereafter, to the aqueous solution, a 10% by mass acetic acid aqueous solution was added dropwise until pH became 3.5, and the mixture was further stirred for 30 min. Next, the temperature of the resultant was set to 5°C, and the temperature was maintained the same for 60 min. To this, 1.2 parts by mass of a 25% by mass glutaraldehyde aqueous solution was slowly added dropwise, and the mixture was further stirred for 30 min. Next, a 10% by mass sodium hydroxide aqueous solution was slowly added dropwise until pH became 9.0, and the mixture was further stirred for 30 min. Thereafter, the temperature of the resultant was raised to 40°C, and the resultant was stirred for 120 min, followed by cooling to room temperature and stirred for a whole day and night. Finally, the resulting capsule slurry was repeatedly washed until pH of washing water became 5.0, followed by carrying out classification using a sieve, to thereby obtain a microcapsule slurry.

<Production of Recording Medium>

The microcapsule slurry was mixed with a urethane resin for heat seal and applied onto a polyester base (thickness: 50 μm) serving as the first base by a blade coating to thereby form an image recording layer. The resultant image recording layer was air-dried, followed by drying at 70°C for 30 min. Then, an ultraviolet curing resin (PHOTOLEC A785, manufactured by SEKISUI CHEMICAL CO.; LTD.) was applied onto the image recording layer by a blade coating to thereby form a film having a thickness so as to cover the microcapsules. The ultraviolet curing resin was cured by ultraviolet, followed by drying at 80°C for 30 min to thereby form a second base. Thus, the recording medium of the present invention was produced. The resultant recording medium was confirmed that it was returned to its original shape without damage even after being rolled up, that is, it had a flexibility.

<Electrophoresis Test of Recording Medium>

An electrophoresis test of recording medium was performed by means of the image recording apparatus having

the following configuration. The charging device includes a corona charger and is configured to apply an electric field by moving the corona charger on the recording medium. A hot plate which can heat a predetermined area was provided at the position at which the recording medium was set. A metal plate which has been grounded serving as a counter electrode was mounted on the hot plate. The recording medium was set on the counter electrode, and the hot plate was heated to 70°C. Thereafter, the recording medium was positively or negatively charged by the corona charger, during which the image recording layer was observed for a color change.

Thus produced recording medium was heated to 70°C to thereby turn the dispersion medium therein into a liquid. While keeping the same temperature, the entire surface of the recording medium was positively charged, so that the entire surface immediately turned into black. Then, the entire surface of the recording medium was negatively charged, so that the entire surface immediately turned into blue. After the hot plate was turned off and the recording medium was cooled, the entire surface of the recording medium was positively charged again, so that the entire surface of the recording medium remained blue, which confirmed that the dispersion medium was turned into a gel immediately after cooling to thereby retain the image. Subsequently, only a half surface of the recording medium was heated by the hot plate and the entire surface of the recording medium was positively charged, so that a heated area was turned into black, but a non-heated area remained blue, which confirmed that only an area which had been turned into a sol by heating was changed in color. Any image distortion was not occurred even when the heated area was touched with a hand after cooling. Further, when the recording medium was repeatedly positively and negatively charged while heating on the hot plate, the recording medium was also repeatedly changed in color corresponding to the charging, which confirmed that the recording medium was rewritable.

The recording medium was again subjected to the electrophoresis test in the same manner as described above after being left to stand for 6 months under an environment of normal temperature and normal humidity. As a result, the recording medium was confirmed to change in color similar to the test before being left to stand, which confirmed that the electret particles 1 were semipermanently charged.

(Example 2)

The recording medium was produced in the same manner as in Example 1, except that the electret particles 1 were changed to electret particles 2, and the thermoreversible gelling agent was changed to the thermoreversible gelling agent represented by the following Structural Formula (2).

Notably, the isoparaffin-based hydrocarbon solvent was turned into a sol at 59°C and turned into a gel at 24°C by an action of the thermoreversible gelling agent.

The thermoreversible gelling agent represented by the following Structural Formula (2) was synthesized with reference to a method for synthesizing a silicone derivative described in Example 7 in JP-A No. 2004-182697.

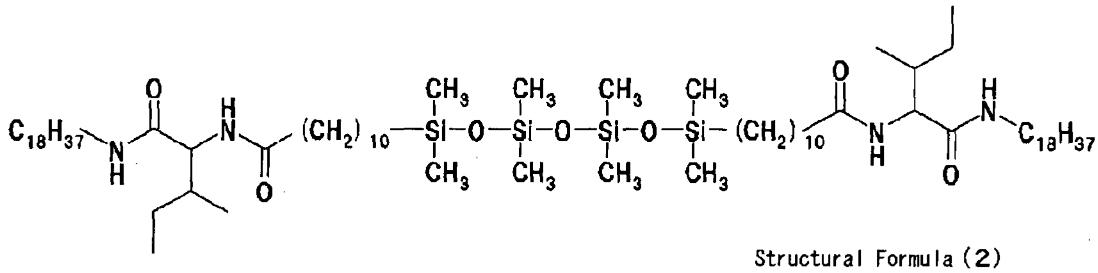

Structural Formula (2)

<Formation of Image Recording Layer>

The image recording layer was formed in the same manner as in Example 1.

<Production of Recording Medium>

The recording medium was produced in the same manner as in Example 1. The resultant recording medium was confirmed that it was returned to its original shape without damage even after being rolled up, that is, it had a flexibility.

<Electrophoresis Test of Recording Medium>

The electrophoresis test of the recording medium was performed in the same manner as in Example 1. The recording medium was heated to 70°C to thereby turn the dispersion medium therein into a liquid. While keeping the same temperature, the entire surface of the recording medium was positively charged, so that the entire surface immediately turned into yellow. Then, the entire surface of the recording medium was negatively charged, so that the entire surface immediately turned into blue. After the hot plate was turned off and the recording medium was cooled, the entire surface of the recording medium was positively charged again, so that the entire surface of the recording medium remained blue, which confirmed that the dispersion medium was turned into a gel immediately after cooling to thereby retain the image. Subsequently, only a half surface of the recording medium was heated by the hot plate and the entire surface of the recording medium was positively charged, so that a heated area was turned into yellow but a non-heated area remained blue, which confirmed that only an area which had been turned into a sol by heating was changed in color. Any image distortion was not occurred even when the heated area was touched with a hand after cooling. Further, when the recording medium was repeatedly positively and negatively charged while heating on the hot plate, the recording medium was also repeatedly changed in color corresponding to the charging, which confirmed that the recording medium was rewritable.

The recording medium was again subjected to the electrophoresis test in the same manner as described above after being left to stand for 6 months under an environment of normal temperature and normal humidity. As a result, the recording medium was confirmed to change in color similar to the test before being left to stand, which confirmed that the electret particles 2 were semipermanently charged.

(Comparative Example 1)

The recording medium was produced in the same manner as in Example 2, except that the electret particles 2 were changed to the electret particles 3. The resultant recording medium was confirmed that it was returned to its original shape without damage even after being rolled up, that is, it had a flexibility.

<Electrophoresis Test of Recording Medium>

The electrophoresis test of the recording medium was performed in the same manner as in Example 2. The recording medium was heated to 70°C to thereby turn the dispersion medium therein into a liquid. While keeping the same temperature, the entire surface of the recording medium was negatively charged, so that the surface immediately turned into yellow, but the surface was uneven in color. Then, the entire surface of the recording medium was positively charged, so that the surface immediately turned into blue, but the surface was uneven in color. After the hot plate was turned off and the recording medium was cooled, the entire surface of the recording medium was negatively charged again, so that the recording medium was not changed in color, which confirmed that the dispersion medium was turned into a gel immediately after cooling to thereby retain the image. Subsequently, only a half surface of the recording medium was heated by the hot plate and the entire surface of the recording medium was negatively charged, so that a heated area was turned into yellow but a non-heated area remained blue, which confirmed that only an area which had been turned into a sol by heating was changed in color. However, the recording medium remained uneven in color. Any image distortion was not occurred even when the heated area was touched with a hand after cooling. Further, when the recording medium was repeatedly positively and negatively charged while heating on the hot plate, the recording medium was also repeatedly changed in color corresponding to the charging, which confirmed that the recording medium was rewritable. However, the recording medium remained uneven in color.

The recording medium was again subjected to the electrophoresis test in the same manner as described above after being left to stand for 6 months under an environment of normal temperature and normal humidity. As a result, the recording medium was confirmed to change in color, but remained uneven in color.

(Comparative Example 2)

Non-electret particles 2 were produced in the same manner as in the <Production of electret particles 2>, except that electron beam irradiation was not performed.

The recording medium was produced in the same manner as in Example 2, except that the electret particles 2 were changed to the non-electret particles 2. The resultant recording medium was confirmed that it was returned to its original shape without damage even after being rolled up, that is, it had a flexibility.

<Electrophoresis Test of Recording Medium>

The electrophoresis test of the recording medium was performed in the same manner as in Example 1. The recording medium was heated to 70°C to thereby turn the dispersion medium therein into a liquid. While keeping the same temperature, the entire surface of the recording medium was positively charged, so that the particles contained in the image recording layer did not migrate and the recording medium was not substantially changed in color. Then, the entire surface of the recording medium was negatively charged, so that the recording medium was also not substantially changed in color. After the hot plate was turned off and the recording medium was cooled, the entire surface of the recording medium was positively charged again, so that the particles contained in the image recording layer did not migrate and the recording medium was not substantially changed in color, which confirmed that the dispersion medium was turned into a gel immediately after cooling to thereby retain the image. Subsequently, only a half surface of the recording medium was heated by the hot plate and the entire surface of the recording medium was positively charged, so that the image recording layer was not substantially changed in color. Any image distortion was not occurred even when the heated area was touched with a hand after cooling. Further, although the recording medium was repeatedly positively and negatively charged while heating on the hot plate, the image was not changed. It was confirmed that particles were not made to have an electret property and could not electrophoretically migrate unless the electron beam irradiation was performed.

(Comparative Example 3)

The recording medium was produced in the same manner as in Example 2, except that thermoreversible gelling agent was not added. The resultant recording medium was confirmed that it was returned to its original shape without damage even after being rolled up, that is, it had a flexibility.

<Electrophoresis Test of Recording Medium>

The electrophoresis test of the recording medium was performed in the same manner as in Example 2. The recording medium was heated to 70°C to thereby turn the dispersion medium therein into a liquid. While keeping the same temperature, the entire surface of the recording medium was positively charged, so that the entire surface immediately turned into yellow. Then, the entire surface of the recording medium was negatively charged, so that the entire surface immediately turned into blue. After the hot plate was turned off and the recording medium was cooled, the entire surface of the recording medium was positively charged again, so that the entire surface of the recording medium immediately turned into yellow, that is, the image was not retained. Subsequently, only a half surface of the recording medium was heated by the hot plate and the entire surface of the recording medium was negatively charged, so that the entire surface immediately turned into blue, which reconfirmed that the recording medium could not retain the image thereon. Image distortion was observed due to static electricity when the heated area was touched with a hand after cooling. Further, when the recording medium was repeatedly positively and negatively charged while heating on the hot plate, the recording medium was also repeatedly changed in color corresponding to the charging, which confirmed that the recording medium was rewritable.

The recording medium was again subjected to the electrophoresis test in the same manner as described above after being left to stand for 6 months under an environment of normal temperature and normal humidity. As a result, the particles contained in the image recording layer migrated, but the image before the migration had been greatly changed in color compared to that of before being left to stand, which revealed low image retentiveness.

(Example 3)

<Production of Dispersion Liquid for Forming Image Recording Layer>

Firstly, 40 parts by mass of the electret particles 3, 2,5 parts by mass of the electrophoretic particle 2, 0.5 parts by mass of an non-ionic surfactant (sorbitan trioleate SPAN 85, reagent), and 57 parts by mass of silicone oil (KF-96L 1cs, manufactured by Shin-Etsu Chemical Co., Ltd.) were mixed, followed by subjected to ultrasonic dispersion for 120 min to thereby obtain a dispersion liquid. The resultant dispersion liquid was heated to 70°C. To this, 5 parts by mass of the thermoreversible gelling agent represented by the following Structural Formula (3) was added and stirred, followed by subjected to ultrasonic dispersion for 60 min while keeping the same temperature to thereby produce a dispersion liquid for forming an image recording layer.

Notably, the silicone oil was turned into a sol at 66°C and turned into a gel at 41°C by an action of the thermoreversible gelling agent.

The thermoreversible gelling agent represented by the following Structural Formula (3) was synthesized with reference to a method for synthesizing a silicone derivative described in Synthetic Example 3 in JP-A No. 2005-232108.

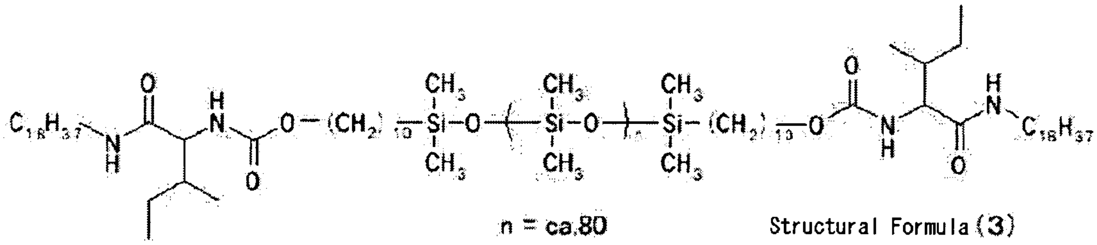

n = ca.80

Structural Formula (3)

<Formation of Image Recording Layer>

Gelatin was added to water, followed by heating to 40°C and stirring for 30 min to thereby obtain 100 parts by mass of a 2.5% by mass gelatin aqueous solution. The resultant solution was heated to 70°C, which is the temperature equal to or higher than the sol transition temperature. Then, 15 parts by mass of the dispersion liquid for forming an image recording layer, which had been heated to 80°C, was gently added below a liquid surface of the gelatin aqueous solution while stirring. Then, 25 parts by mass of a 5% by mass gum arabic aqueous solution was added thereto, followed by further stirring for 30 min. Thereafter, a 10% by mass acetic acid aqueous solution was added dropwise thereto until pH became 3.5, followed by further stirring for 30 min. Next, the temperature of the resultant was set to 5°C, and the temperature was maintained the same for 60 min. To this, 1.2 parts by mass of a 25% by mass glutaraldehyde aqueous solution was slowly added dropwise, and the mixture was further stirred for 30 min. Next, a 10% by mass sodium hydroxide aqueous solution was slowly added dropwise thereto until pH became 9.0, and the mixture was further stirred for 30 min. Thereafter, the resultant was heated to 40°C, and stirred for 120 min, followed by cooling to room temperature and stirred for a whole day and night. Finally, the resulting capsule slurry was repeatedly washed until pH of washing water became 5.0, followed by carrying out classification using a sieve, to thereby obtain a microcapsule slurry.

<Production of Recording Medium>

The recording medium was produced in the same manner as in Example 1. The resultant recording medium was confirmed that it was returned to its original shape without damage even after being rolled up, that is, it had a flexibility.

<Electrophoresis Test of Recording Medium>

The electrophoresis test of the recording medium was performed in the same manner as in Example 1. The recording medium was heated to 80°C to thereby turn the dispersion medium therein into a liquid. While keeping the same temperature, the entire surface of the recording medium was positively charged, so that the entire surface immediately turned into magenta. Then, the entire surface of the recording medium was negatively charged, so that the entire surface immediately turned into black. After the hot plate was turned off and the recording medium was cooled, the entire surface of the recording medium was positively charged again, so that the entire surface of the recording medium remained black, which confirmed that the dispersion medium was turned into a gel immediately after cooling to thereby retain the image. Subsequently, only a half surface of the recording medium was heated by the hot plate and the entire surface of the recording medium was positively charged, so that a heated area was turned into magenta but a non-heated area remained black, which confirmed that only an area which had been turned into a sol by heating was changed in color. Image distortion was slightly occurred when the heated area was touched with a hand after cooling. However, any image distortion was not occurred when the heated area was touched with a hand again after being left to stand for several tens of seconds. Further, when the recording medium was repeatedly positively and negatively charged while heating on the hot plate, the recording medium was also repeatedly changed in color corresponding to the charging, which confirmed that the recording medium was rewritable.

The recording medium was again subjected to the electrophoresis test in the same manner as described above after being left to stand for 6 months under an environment of normal temperature and normal humidity. As a result, the recording medium was confirmed to change in color similar to the test before being left to stand, which confirmed that the electret particles 3 were semipermanently charged.

(Example 4)

<Production of Dispersion Liquid for Forming Image Recording Layer>

Firstly, 40 parts by mass of the electret particles 2, 2.5 parts by mass of the electrophoretic particle 2, 0.5 parts by mass of a dispersing agent (SOLSPERSE 17000, manufactured by Lubrizol Corporation), 0.5 parts by mass of an

non-ionic surfactant (sorbitan trioleate SPAN 85, reagent), and 56.5 parts by mass of an isoparaffin-based hydrocarbon solvent (ISOPAR G, manufactured by ExxonMobil Chemical) were mixed, followed by subjected to ultrasonic dispersion for 120 min to thereby obtain a dispersion liquid. The resultant dispersion liquid was heated to 70°C. To this, 3 parts by mass of the thermoreversible gelling agent represented by the following Structural Formula (4) was added and stirred, followed by subjected to ultrasonic dispersion for 60 min while keeping the same temperature to thereby produce a dispersion liquid for forming an image recording layer.

Notably, the isoparaffin-based hydrocarbon solvent was turned into a sol at 45°C and turned into a gel at 30°C by an action of the thermoreversible gelling agent.

The thermoreversible gelling agent represented by the following Structural Formula (4) was synthesized with reference to a method for synthesizing a silicone derivative described in Synthetic Example 4 in JP-A No. 2005-232108.

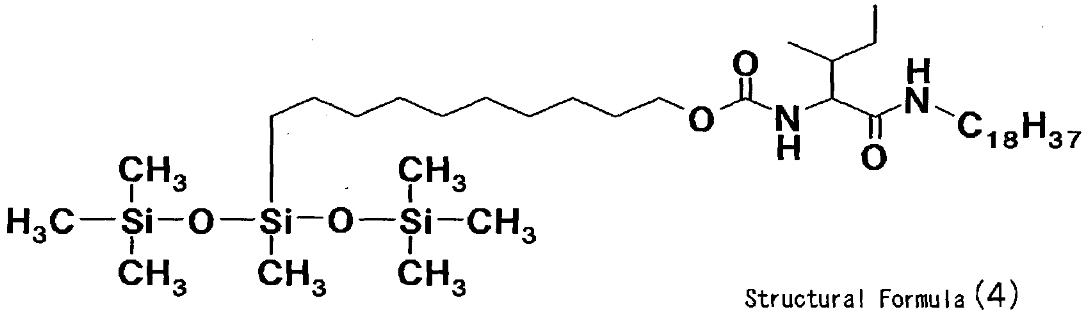

Structural Formula (4)

<Formation of Image Recording Layer>

The image recording layer was formed in the same manner as in Example 1.

<Production of Recording Medium>

The recording medium was produced in the same manner as in Example 1. The resultant recording medium was confirmed that it was returned to its original shape without damage even after being rolled up, that is, it had a flexibility.

<Electrophoresis Test of Recording Medium>

The electrophoresis test of the recording medium was performed in the same manner as in Example 1. The recording medium was heated to 70°C to thereby turn the dispersion medium therein into a liquid. While keeping the same temperature, the entire surface of the recording medium was positively charged, so that the entire surface immediately turned into yellow. Then, the entire surface of the recording medium was negatively charged, so that the entire surface immediately turned into black. After the hot plate was turned off and the recording medium was cooled, the entire surface of the recording medium was positively charged again, so that the entire surface of the recording medium remained black, which confirmed that the dispersion medium was turned into a gel immediately after cooling to thereby retain the image. Subsequently, only a half surface of the recording medium was heated by the hot plate and the entire surface of the recording medium was positively charged, so that a heated area was turned into yellow but a non-heated area remained black, which confirmed that only an area which had been turned into a sol by heating was changed in color. Any image distortion was not occurred even when the heated area was touched with a hand after cooling. Further, when the recording medium was repeatedly positively and negatively charged while heating on the hot plate, the recording medium was also repeatedly changed in color corresponding to the charging, which confirmed that the recording medium was rewritable.

(Comparative Example 4)

<Production of Dispersion Liquid for Forming Image Recording Layer>

At first, 1 part by mass of a blue dye (OIL BLUE 2N, manufactured by Orient Chemical Industries Co., Ltd.), 0.5 parts by mass of a dispersing agent (oleic acid), 5 parts by mass of paraffin wax (melting point: 50°C), and 78.5 parts by mass of dodecylbenzene were mixed to obtain a mixture. To the resultant mixture, 15 parts by mass of the electret particles 1, followed by stirring for 60 min with a homogenizer while heating at 200°C to thereby produce a dispersion liquid for forming an image recording layer.

<Formation of Image Recording Layer>

The image recording layer was formed in the same manner as in Example 1.

<Production of Recording Medium>

The recording medium was produced in the same manner as in Example 1. The resultant recording medium was confirmed that it was returned to its original shape without damage even after being rolled up, that is, it had a flexibility.

<Electrophoresis Test of Recording Medium>

The electrophoresis test of the recording medium was performed in the same manner as in Example 1. The recording medium was heated to 70°C to thereby turn the dispersion medium therein into a liquid. While keeping the same temperature, the entire surface of the recording medium was positively charged, so that the entire surface gradually turned into black. However, the recording medium was taken for a long lime to be changed in color, and could not be completely changed in color. Additionally, some black spots were visually observed, which is possibly resulted from aggregation of particles. Then, the entire surface of the recording medium was negatively charged, so that the entire surface gradually turned into blue. However, the recording medium was taken for a long lime to be changed in color, and could not be completely changed in color. Additionally, some black spots remained on a part of the surface of the recording medium. After the hot plate was turned off and the recording medium was cooled, the entire surface of the recording medium was positively charged again, so that the recording medium was not changed in color, which confirmed that the image was retained by cooling. Subsequently, only a half surface of the recording medium was heated by the hot plate and the entire surface of the recording medium was positively charged, so that only a heated area was gradually turned into black. However, the recording medium was taken for a long lime to be changed in color, and could not be completely changed in color. A non-heated area was not changed in color. Image distortion was occurred when the heated area was touched with a hand immediately after heating. However, the image distortion was disappeared after sufficient cooling for a long time. Further, when the recording medium was repeatedly positively and negatively charged while heating on the hot plate, the recording medium was also repeatedly changed in color corresponding to the charging, which confirmed that the recording medium was rewritable. However, when heated for a short time, the recording medium was unsatisfactory changed in color, which indicates low temperature responsiveness.

(Example 5)

The recording medium of Example 5 was produced in the same manner as in Example 4, except that the thermoreversible gelling agent represented by the Structural Formula (4) was changed to the thermoreversible gelling agent represented by the following Structural Formula (5). The resultant recording medium was confirmed that it was returned to its original shape without damage even after being rolled up, that is, it had a flexibility.

The thermoreversible gelling agent represented by the following Structural Formula (5) was found to have an endothermic peak temperature in the heating of 46.0°C and an exothermic peak temperature in the cooling of 30.1°C as measured in the same manner as in Example 1.

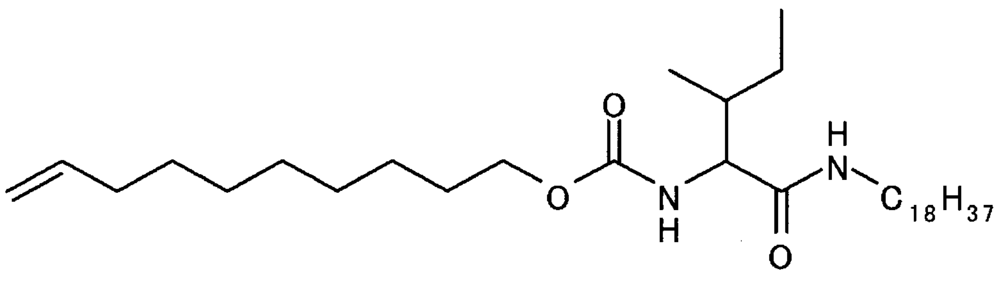

Structural Formula (5)

<Electrophoresis Test of Recording Medium>

The electrophoresis test of the recording medium was performed in the same manner as in Example 1. The recording medium was heated to 70°C to thereby turn the dispersion medium therein into a liquid. While keeping the same temperature, the entire surface of the recording medium was positively charged, so that the entire surface immediately turned into yellow. Then, the entire surface of the recording medium was negatively charged, so that the entire surface immediately turned into black. After the hot plate was turned off and the recording medium was cooled, the entire surface of the recording medium was positively charged again, so that the entire surface of the recording medium remained black, which confirmed that the dispersion medium was turned into a gel immediately after cooling to thereby retain the image. Subsequently, only a half surface of the recording medium was heated by the hot plate and the entire surface of the recording medium was positively charged, so that a heated area was turned into yellow but a non-heated area remained black, which confirmed that only an area which had been turned into a sol by heating was changed in color. Any image distortion was not occurred even when the heated area was touched with a hand after cooling. Further, when the recording medium was repeatedly positively and negatively charged while heating on the hot plate, the recording medium was also repeatedly changed in color corresponding to the charging, which confirmed that the recording medium was rewritable.

(Example 6)

The recording medium of Example 6 was produced in the same manner as in Example 4, except that the thermoreversible gelling agent represented by the Structural Formula (4) was changed to the thermoreversible gelling agent represented by the following Structural Formula (6). The resultant recording medium was confirmed that it was returned to its original shape without damage even after being rolled up, that is, it had a flexibility.

The thermoreversible gelling agent represented by the following Structural Formula (6) was found to have an endothermic peak temperature in the heating of 52.8°C and an exothermic peak temperature in the cooling of 21.1°C as measured in the same manner as in Example 1.

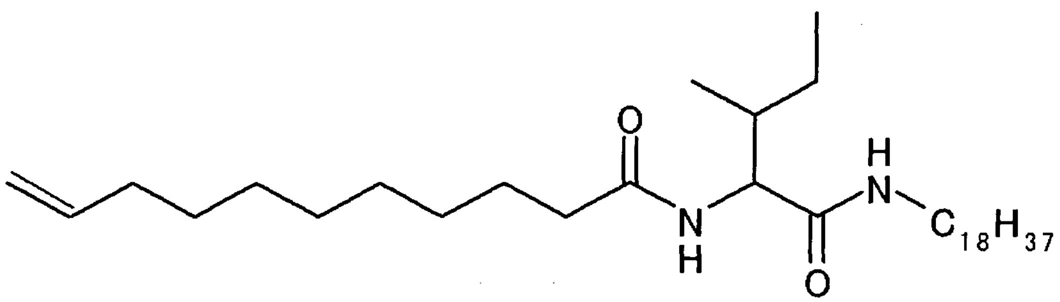

Structural Formula (6)

<Electrophoresis Test of Recording Medium>

The electrophoresis test of the recording medium was performed in the same manner as in Example 1. The recording medium was heated to 70°C to thereby turn the dispersion medium therein into a liquid. While keeping the same temperature, the entire surface of the recording medium was positively charged, so that the entire surface immediately turned into yellow. Then, the entire surface of the recording medium was negatively charged, so that the entire surface immediately turned into black. After the hot plate was turned off and the recording medium was cooled, the entire surface of the recording medium was positively charged again, so that the entire surface of the recording medium remained black, which confirmed that the dispersion medium was turned into a gel immediately after cooling to thereby retain the image. Subsequently, only a half surface of the recording medium was heated by the hot plate and the entire surface of the recording medium was positively charged, so that a heated area was turned into yellow but a non-heated area remained black, which confirmed that only an area which had been turned into a sol by heating was changed in color. Any image distortion was not occurred even when the heated area was touched with a hand after cooling. Further, when the recording medium was repeatedly positively and negatively charged while heating on the hot plate, the recording medium was also repeatedly changed in color corresponding to the charging, which confirmed that the recording medium was rewritable.

(Example 7)

The recording medium was produced in the same manner as in Example 1, except that the electret particles 1 were changed to the electret particles 4. The resultant recording medium was confirmed that it was returned to its original shape without damage even after being rolled up, that is, it had a flexibility.

<Electrophoresis Test of Recording Medium>

The electrophoresis test of the recording medium was performed in the same manner as in Example 1. The recording medium was heated to 70°C to thereby turn the dispersion medium therein into a liquid. While keeping the same temperature, the entire surface of the recording medium was positively charged, so that the entire surface immediately turned into black. Then, the entire surface of the recording medium was negatively charged, so that the entire surface immediately turned into blue. After the hot plate was turned off and the recording medium was cooled, the entire surface of the recording medium was positively charged again, so that the entire surface of the recording medium remained blue, which confirmed that the dispersion medium was turned into a gel immediately after cooling to thereby retain the image. Subsequently, only a half surface of the recording medium was heated by the hot plate and the entire surface of the recording medium was positively charged, so that a heated area was turned into black but a non-heated area remained blue, which confirmed that only an area which had been turned into a sol by heating was changed in color. Any image distortion was not occurred even when the heated area was touched with a hand after cooling. Further, when the recording medium was repeatedly positively and negatively charged while heating on the hot plate, the recording medium was also repeatedly changed in color corresponding to the charging, which confirmed that the recording medium was rewritable. However, black solid image was visually observed to be slightly uneven in concentration compared to that of Example 1, which was not problematic in use.

The recording medium was again subjected to the electrophoresis test in the same manner as described above after being left to stand for 6 months under an environment of normal temperature and normal humidity. As a result, the recording medium was confirmed to change in color similar to the test before being left to stand, which confirmed that the electret particles 4 were semipermanently charged.

(Example 8)

The recording medium was produced in the same manner as in Example 1, except that the electret particles 1 were changed to the electret particles 5. The resultant recording medium was confirmed that it was returned to its original shape without damage even after being rolled up, that is, it had a flexibility.

<Electrophoresis Test of Recording Medium>

The electrophoresis test of the recording medium was performed in the same manner as in Example 1. The recording medium was heated to 70°C to thereby turn the dispersion medium therein into a liquid. While keeping the same temperature, the entire surface of the recording medium was positively charged, so that the entire surface immediately turned into black. Then, the entire surface of the recording medium was negatively charged, so that the entire surface immediately turned into blue. After the hot plate was turned off and the recording medium was cooled, the entire surface of the recording medium was positively charged again, so that the entire surface of the recording medium remained blue, which confirmed that the dispersion medium was turned into a gel immediately after cooling to thereby retain the image. Subsequently, only a half surface of the recording medium was heated by the hot plate and the entire surface of the recording medium was positively charged, so that a heated area was turned into black but a non-heated area remained blue, which confirmed that only an area which had been turned into a sol by heating was changed in color. Any image distortion was not occurred even when the heated area was touched with a hand after cooling. Further, when the recording medium was repeatedly positively and negatively charged while heating on the hot plate, the recording medium was also repeatedly changed in color corresponding to the charging, which confirmed that the recording medium was rewritable. However, black solid image was visually observed to be slightly uneven in concentration compared to that of Example 1, which was not problematic in use.

The recording medium was again subjected to the electrophoresis test in the same manner as described above after being left to stand for 6 months under an environment of normal temperature and normal humidity. As a result, the recording medium was confirmed to change in color similar to the test before being left to stand, which confirmed that the electret particles 5 were semipermanently charged.

(Example 9)

The image recording layer and the recording medium were produced using the dispersion liquid for forming an image recording layer obtained in Example 4 as follows.

<Formation of Image Recording Layer>

Onto a second base, which was a polyester base having a thickness of 38 μm, a curable epoxy resin was

applied, and turned into a semi-cured state. Thereafter, the epoxy resin was embossed by pattern embossing, to thereby form a group of cells where hexagonal recesses each having a side of about 150 μm were arrayed in a matrix. The epoxy resin was irradiated with UV light and cured, to thereby provide the group of cells having the thickness of 50 μm on the base.

<Production of Recording Medium>

A spacer, which had a thickness of 38 μm and had adhesive surfaces on both surfaces thereof, was bonded to the perimeter of the group of the cells in the shape of a frame. The resultant was set on a hot plate, heated to 65°C. Then, the dispersion liquid for forming an image recording layer, which had been heated to 65°C, was injected thereto. Thereafter, the dispersion liquid for forming an image recording layer was quickly leveled by a squeegee to fill the cells, and a first base, which was a polyester film having a thickness of 38 μm, was bonded thereon using a roller so as not to trap air bubbles therein. Thereafter, a UV curable sealant was injected between the two polyester bases, and spread by a roller. Then the UV curable sealant was cured by applying UV light to seal, to thereby produce a recording medium of the present invention. The resultant recording medium was confirmed that it was returned to its original shape without damage even after being rolled up, that is, it had a flexibility. However, when the recording medium was excessively bended, the recording medium did not change in color at a bended portion locally.

<Electrophoresis Test of Recording Medium>

The electrophoresis test of the recording medium was performed in the same manner as in Example 1. The recording medium was heated to 70°C to thereby turn the dispersion medium therein into a liquid. While keeping the same temperature, the entire surface of the recording medium was positively charged, so that the entire surface immediately turned into yellow. Then, the entire surface of the recording medium was negatively charged, so that the entire surface immediately turned into black. After the hot plate was turned off and the recording medium was cooled, the entire surface of the recording medium was positively charged again, so that the entire surface of the recording medium remained black, which confirmed that the dispersion medium was turned into a gel immediately after cooling to thereby retain the image. Subsequently, only a half surface of the recording medium was heated by the hot plate and the entire surface of the recording medium was positively charged, so that a heated area was turned into yellow but a non-heated area remained black, which confirmed that only an area which had been turned into a sol by heating was changed in color. Any image distortion was not occurred even when the heated area was touched with a hand after cooling. Further, when the recording medium was repeatedly positively and negatively charged while heating on the hot plate, the recording medium was also repeatedly changed in color corresponding to the charging, which confirmed that the recording medium was rewritable.

<Image Retentiveness Test of Recording Medium>

After completion of the electrophoresis tests, the recording media of Examples 1 to 9 and Comparative Examples 1 to 4 were left to stand for 3 months at 23°C and 55%RH. The image density (ID) of each of the recording media before and after being left to stand was measured to thereby determine a difference in image density. The ID value was obtained by measuring image densities at 5-points on the image recording layer area using a portable spectrophotometer (X-RITE 939 manufactured by X-Rite, Inc.), and taking average thereof. The difference in image density (ΔID) was calculated according to the following equation:

$$\Delta ID(\%) = \frac{\left|\text{ID before being lest to stand for 3 months} - \text{ID after being lest to stand for 3 months}\right|}{\text{ID before being lest to stand for 3 months}} \times 100$$

For evaluation of the image retentiveness, A was defined as a level at which ΔID was considered to be within the measurement error range, B was defined as a level at which ΔID was slightly large but not problematic in use, C was defined as a level at which ΔID was too large to be problematic in some applications, and D was defined as a level at which ΔID was significantly large and image retentiveness was poor. The recording media were taken photograph before and after being left to stand for 3 months and visually compared therebetween. The results are shown in Table 2.

Table 1

| | Electrophoretic Particles | Dispersion Medium | Thermoreversible Gelling Agent | Cell |
|---|---|---|---|---|
| Ex. 1 | Electret Particles 1 | Isoparaffin-Based Hydrocarbon | Structural Formula (1) | Microcapsule |
| Ex. 2 | Electret Particles 2 (Core-Shell Structure) | Isoparaffin-Based Hydrocarbon | Structural Formula (2) | Microcapsule |
| Comp. Ex. 1 | Electrophoretic Particles 3 | Isoparaffin-Based Hydrocarbon | Structural Formula (2) | Microcapsule |
| Comp. Ex. 2 | Non-electret Particles 2 (Core-Shell Structure) | Isoparaffin-Based Hydrocarbon | Structural Formula (2) | Microcapsule |
| Comp. Ex. 3 | Electret Particles 2 (Core-Shell Structure) | Isoparaffin-Based Hydrocarbon | None | Microcapsule |
| Ex. 3 | Electret Particles 3 (Core-Shell Structure) | Silicone Oil | Structural Formula (3) | Microcapsule |
| | Electrophoretic Particles 2 | | | |
| Ex. 4 | Electret Particles 2 (Core-Shell Structure) | Isoparaffin-Based Hydrocarbon | Structural Formula (4) | Microcapsule |
| | Electrophoretic Particles 2 | | | |
| Comp. Ex. 4 | Electret Particles 1 | Dodecylbenzene | None | Microcapsule |
| Ex. 5 | Electret Particles 2 (Core-Shell Structure) | Isoparaffin-Based Hydrocarbon | Structural Formula (5) | Microcapsule |
| | Electrophoretic Particles 2 | | | |
| Ex. 6 | Electret Particles 2 (Core-Shell Structure) | Isoparaffin-Based Hydrocarbon | Structural Formula (6) | Microcapsule |
| | Electrophoretic Particles 2 | | | |
| Ex. 7 | Electret Particles 4 | Isoparaffin-Based Hydrocarbon | Structural Formula (1) | Microcapsule |
| Ex. 8 | Electret Particles 5 | Isoparaffin-Based Hydrocarbon | Structural Formula (1) | Microcapsule |
| Ex. 9 | Electret Particles 2 (Core-Shell Structure) | Isoparaffin-Based Hydrocarbon | Structural Formula (4) | Microcell |
| | Electrophoretic Particles 2 | | | |

Table 2

| | Color | Image Retentiveness | | Visual Observation Result |
|---|---|---|---|---|
| | | Difference in image density (ΔID) | Evaluation | |
| Ex. 1 | Black | 2.0% | A | A: Color was not substantially changed. |
| Ex. 2 | Blue | 3.0% | A | A: Color was not substantially changed. |
| Comp. Ex. 1 | Blue | 3.6% | A | A: Color was not substantially changed. |
| Comp. Ex. 2 | Not measured | Not measured | | Not evaluated (because the recording medium was not change in color). |

(continued)

| | Color | Image Retentiveness | | Visual Observation Result |
|---|---|---|---|---|
| | | Difference in image density (ΔID) | Evaluation | |
| Comp. Ex. 3 | Blue | 25.7% | D | D: Color was greatly changed, which was problematic. |
| Ex. 3 | Black | 3.9% | A | A: Color was not substantially changed. |
| Ex. 4 | Black | 2.9% | A | A: Color was not substantially changed. |
| Comp. Ex. 4 | Black | 13.3% | C | C: Color change was easily visually recognized. |
| Ex. 5 | Black | 3.8% | A | A: Color was not substantially changed. |
| Ex. 6 | Black | 5.8% | B | B: Color was slightly changed, but not problematic. |
| Ex. 7 | Black | 4.9% | A | A: Color was not substantially changed. |
| Ex. 8 | Black | 5.6% | B | B: Color was slightly changed, but not problematic. |
| Ex. 9 | Black | 3.8% | A | A: Color was not substantially changed. |

The color described in the column "Color" of Table 2 is a color at the time point when the image retentiveness test was initiated and is a darker color of two colors.

<Printing test of Recording Medium>

The entire surface of each of the image recording layers in the recording media of Examples 1 to 9 and Comparative Examples 1 to 4 was positively charged while heating on the hot plate, followed by allowing the recording media to change in color (allowing an image thereon to be erased). Thereafter, the printing test was performed using the following image recording apparatus.

«Image recording apparatus»

The image recording apparatus was designed to linearly convey the recording medium, and equipped with a charging unit using a corotron, which was configured to apply an electric field to the recording medium, a heating unit using a thermal head, which was configured to heat the recording medium, and a cooling unit using a brass roller.

The heating unit was set so that a surface temperature of the recording medium became equal to or higher than the sol transition temperature of the thermoreversible gelling agent contained in the recording medium. As for an image pattern for the thermal head, various image patterns such as characters, lattices or solid were input. To the charging unit, a counter electrode was provided at the position facing the charging unit via the recording medium. Evaluation criteria for each of evaluation items are as follows. The results are shown in Table 3.

[Evaluation criteria of character visibility]

A: Even small-sized characters could be read, which was not problematic in use.
B: Characters were blurred when being enlarged, which was not problematic in reading.
C: Characters were difficult to be read and visibility was clearly poor.
D: Characters could not be read.

[Rewritability]

A: Image quality was not problematic even after repetitive rewriting for 50 times.
B: Image quality was slightly deteriorated after repetitive rewriting for 50 times, which was not problematic.
C: Image quality was clearly deteriorated after repetitive rewriting for 50 times, which was problematic.
D: Rewriting could not be performed for 50 times.

[Image Retentiveness]

A: Image deterioration was not visually recognized even when the recording medium was brought into contact with a charged PET film.
B: Image was slightly deteriorated when the recording medium was brought into contact with a charged PET film, which was not problematic.
C: Image was clearly deteriorated when the recording medium was brought into contact with a charged PET film, and characters printed thereon were difficult to be read.
D: Characters printed on the recording medium could not be read when the recording medium was brought into contact with a charged PET film.

[Color unevenness]

A: Color unevenness was not visually recognized and color uniformity was high.
B: Color unevenness was slightly recognized, which was not problematic.
C: Color unevenness was clearly recognized, which was problematic.
D: Color unevenness was remarkable, which is difficult to be use.

Table 3

| | Visibility | Rewritability | Image retentiveness | Color unevenness |
|---|---|---|---|---|
| Ex. 1 | B | A | A | A |
| Ex. 2 | B | A | A | A |
| Comp. Ex. 1 | B | A | A | D |
| Comp. Ex. 2 | D | D | - | D |
| Comp. Ex. 3 | B | A | D | B |
| Ex. 3 | A | A | A | A |
| Ex. 4 | A | A | A | A |
| Comp. Ex. 4 | C | C | B | C |
| Ex. 5 | A | A | A | A |
| Ex. 6 | A | A | B | A |
| Ex. 7 | B | A | A | B |
| Ex. 8 | B | A | A | B |
| Ex. 9 | B | B | A | A |

(Example 10)

<Production of Dispersion Liquid for Forming Image Recording Layer>

The dispersion liquid for forming an image recording layer of Example 10 was produced in the same manner as in Example 4, except that the thermoreversible gelling agent represented by the Structural Formula (4) was changed to the thermoreversible gelling agent represented by the Structural Formula (1).

<Formation of Image Recording Layer>

The image recording layer was formed in the same manner as in Example 1.

<Production of Recording Medium>

The microcapsule slurry was mixed with a urethane resin for heat seal and applied onto an indium tin oxide (ITO) film which had been formed on one surface of a second base, a polyester base (thickness: 50 μm), by a blade coating, followed by drying at 70°C for 30 min to thereby form an image recording layer. Then, an ultraviolet curing resin (PHOTOLEC A785, manufactured by SEKISUI CHEMICAL CO., LTD.) was applied onto the image recording layer by a blade coating to thereby form a film having a thickness so as to cover the microcapsules. The ultraviolet curing resin was cured by ultraviolet, followed by drying at 80°C for 30 min to thereby form a first base. Thus, the recording medium was produced which has a configuration illustrated in FIG. 11. The resultant recording medium was confirmed that it was returned to its original shape without damage even after being rolled up, that is, it had a flexibility.

<Image recording apparatus>

As for an image recording apparatus, a modified electrophotographic device was used. As for an electrophotographic photoconductor, a negatively charged photoconductor was used. Moreover, a heating unit was equipped with a heating unit, a sheet-shaped heater configured to heat an entire surface of the recording medium, was mounted inside a drum of the photoconductor. A system was employed in which heating and application of an electric field were performed at the same time by bringing the recording medium into contact with the electrophotographic photoconductor. Further, a cooling unit composed of a fan was provided. The heating unit was set so that a surface temperature of the recording medium would become equal to or higher than the sol transition temperature of the dispersion medium containing the thermoreversible gelling agent. To the electrophotographic photoconductor, a scorotron configured to charge the electrophotographic photoconductor, an exposing unit configured to form a latent electrostatic image, and an charge-eliminating unit configured to erase the latent electrostatic image were provided in this order. Moreover, a roller-shaped counter electrode was provided at the position facing the electrophotographic photoconductor via the recording medium.

<Printing Test of Recording Medium>

The recording medium had been previously heated and positively charged using a hot plate and a corona charger to thereby turn the entire surface thereof into yellow. Next, the recording medium was set in the image recording apparatus, and heated to the temperature higher than the sol-transition temperature of the dispersion medium by the heating unit to thereby liquidize the dispersion medium. At the same time, the photoconductor was negatively charged by the charging unit to thereby form a latent electrostatic image having a checker pattern. In this state, the recording medium was brought into contact with the photoconductor, followed by cooling the entire image recording area to the temperature equal to or lower than the gel-transition temperature of the dispersion medium by means of the cooling unit. It was confirmed that a black checker pattern with a yellow background was clearly recorded.

The recording medium was heated and positively charged again using the hot plate and the corona charger, so that the checker pattern was erased to thereby turn the entire surface thereof into yellow. As described above, an image was repeatedly recorded and erased, which was confirmed the recording medium was rewritable.

<Image Retentiveness of Recording Medium>

After recording an image on the recording medium, the recording medium was brought into contact with a finger, metal, and an electrostatically-charged object. As a result, no change was observed in image quality and image density, and it was confirmed that the recording medium had excellent image retentiveness. Moreover, the recording medium was left to stand for 3 months at 23°C and 55%RH, and measured for image density before and after being left to stand. The difference in image density (ΔID) was found to be 2.2%.

(Example 11)

<Production of Dispersion Liquid for Forming Image Recording Layer>

The dispersion liquid for forming an image recording layer was produced in the same manner as in Example 10.

<Formation of Image Recording Layer>

The image recording layer was produced in the same manner as in Example 10.

<Production of Recording Medium>

The microcapsule slurry was mixed with a urethane resin for heat seal and applied onto an indium tin oxide (ITO) film which had been formed on one surface of a first base, a polyester base (thickness: 50 μm), by a blade coating, followed by drying at 70°C for 30 min to thereby form an image recording layer. Then, an insulating thermosetting resin was applied onto the surface of the image recording layer so that the ITO film was partially left exposed and the microcapsules were covered. Before drying, a second base which is a polyester base (thickness: 50 μm) on which an ITO film is formed was adhered thereto so that the ITO films of the bases were adhered to each other, and a roller was pressed against the resultant to remove the air therein, followed by drying at 80°C for 30 min, to thereby cure. A metal foil tape was adhered to an end portion on which the image recording layer and resin were not applied and the ITO film was left exposed. Then, the metal foil tape was bended to thereby form an area which was electrically connected with a surface of the polyester base, which was used as an electrode. Another electrode was similarly formed on the back surface. Finally, an insulating tape was adhered so that the ITO film or the metal foil tape on one surface was not electrically connected with the ITO film or the metal foil tape on the other surface. Thus, the recording medium having the configuration illustrated in FIG. 13 was produced. The resultant recording medium was confirmed that it was returned to its original shape without damage even after being rolled up, that is, it had a flexibility.

<Image recording apparatus>

As for an image recording apparatus, the image recording apparatus illustrated in FIGs. 24 and 26 was used. Specifically, the image recording apparatus was designed to linearly convey the recording medium. On the side of the recording medium from which it is viewed, a heating unit composed of a thermal head, and a roller-shaped electric field applying unit configured to be electrically connected with the electrode of the recording medium and apply an electric field thereto were provided. At the opposite side to the side of the recording medium from which it is viewed, a platen which is capable of applying an electric field was provided.

<Printing Test of Recording Medium>

The image recording apparatus was set so that the electric field applying unit (thermal head) provided at the side of the recording medium from which it is viewed (first base side) was 50 V, and the electric field applying unit (platen) provided at the back surface side (second base side) was 0 V, and an entire surface solid image pattern was input in the heating unit composed of the thermal head. In this state, printing was performed on the recording medium. As a result, the electric field of +50 V was applied to the entire surface of the image recording layer through the electrode of the recording medium, and by heating the entire surface of the recording medium, the electret particles were migrated to the side from which it is viewed (the electrophoretic particles were migrated to the back surface side), to thereby turn the entire surface of the recording medium into yellow. Within a few seconds from the time point when the image recording was completed to the time point when the recording medium was taken out in hands, gelation of the dispersion medium was observed.

Next, the image recording apparatus was set so that the electric field applying unit provided at the side of the recording medium from which it is viewed was 0 V, and the electric field applying unit provided at the back surface side was 50 V, and a checker pattern was input in the heating unit composed of the thermal head. In this state, printing was performed on the recording medium. As a result, the electric field of -50 V was applied to the entire surface of the image recording layer through the electrode of the recording medium. In addition, only the checker pattern area was heated. As a result, it was confirmed that a black image pattern with a yellow background was clearly recorded. The resultant image had high contrast and was clearly.

The electric field of +50 V was applied to the entire surface of the image recording layer through the electrode of the recording medium, and the entire surface of the recording medium was heated, so that the entire surface of the recording medium was turned into yellow. Thereafter, the electric field of -50 V was applied to the entire surface of the image recording layer through the electrode of the recording medium, and a character image pattern was input in the heating unit composed of the thermal head. As a result, it was confirmed that fine characters with the yellow background were clearly recorded. As described above, an image was repeatedly recorded and erased, which was confirmed the recording medium was rewritable.

<Image Retentiveness of Recording Medium>

After recording an image on the recording medium, the recording medium was brought into contact with a finger, metal, and an electrostatically-charged object. As a result, no change was observed in image quality and image density, and it was confirmed that the recording medium had excellent image retentiveness. Moreover, the recording medium was left to stand for 3 months at 23°C and 55%RH, and measured for image density before and after being left to stand. The difference in image density ($\Delta$ID) was found to be 1.0%.

(Example 12)

<Production of Dispersion Liquid for Forming Image Recording Layer>

The dispersion liquid for forming an image recording layer was produced in the same manner as in Example 10.

<Formation of Image Recording Layer>

The image recording layer was produced in the same manner as in Example 10.

<Production of Recording Medium>

The microcapsule slurry was mixed with a urethane resin for heat seal and applied onto an indium tin oxide (ITO) film which had been formed on one surface of a first base, a polyester base (thickness: 50 $\mu$m), by a blade coating, followed by drying at 70°C for 30 min to thereby form an image recording layer. Then, an insulating thermosetting resin was applied onto the surface of the image recording layer so that the ITO film was partially left exposed and the insulating thermosetting resin is as thin as to cover the microcapsules, followed by drying at 80°C for 30 min to thereby cure. Silver filler containing electrically conductive resin material (DOTITE D-550, manufactured by Fujikura Kasei Co., Ltd.) was applied thereon by a blade coating so as to have substantially the same area as the image recording layer to thereby form an electrically conductive base having a thickness of about 20 $\mu$m. A metal foil tape was adhered to an end portion on which the image recording layer and resin were not applied and the ITO film was left exposed. Then, the metal foil tape was bended to thereby form an area which was electrically connected with a surface of the polyester base, which was used as an electrode. Finally, an insulating tape was adhered so that the ITO film or the metal foil tape on one surface was not electrically connected with the ITO film or the metal foil tape on the other surface. Thus, the recording medium having the configuration illustrated in FIG. 15 was produced. The resultant recording medium was confirmed that it was returned to its original shape without damage even after being rolled up, that is, it had a flexibility.

<Image recording apparatus>

As for an image recording apparatus, the image recording apparatus illustrated in FIGs. 24 and 25 was used. Specifically, the image recording apparatus was designed to linearly convey the recording medium. On the side of the recording medium from which it is viewed, a heating unit composed of a thermal head, and a roller-shaped electric field applying unit configured to be electrically connected with the electrode of the recording medium and apply an electric field thereto were provided. At the opposite side to the side of the recording medium from which it is viewed, a platen which is capable of applying an electric field was provided.

<Printing Test of Recording Medium>

The image recording apparatus was set so that the electric field applying unit (thermal head) provided at the side of the recording medium from which it is viewed (first base side) was 50 V, and the electric field applying unit (platen) provided at the back surface side (second base side) was 0 V, and an entire surface solid image pattern was input in the heating unit composed of the thermal head. In this state, printing was performed on the recording medium. As a result, the electric field of +50 V was applied to the entire surface of the image recording layer through the electrode of the recording medium, and by heating the entire surface of the recording medium, the electret particles were migrated to the side from which it is viewed (the electrophoretic particles were migrated to the back surface side), to thereby turn the entire surface of the recording medium into yellow. Within a few seconds from the time point when the image recording was completed to the time point when the recording medium was taken out in hands, gelation of the dispersion medium was observed.

Next, the image recording apparatus was set so that the electric field applying unit provided at the side of the recording medium from which it is viewed was 0 V, and the electric field applying unit provided at the back surface side

was 50 V, and a checker pattern was input in the heating unit composed of the thermal head. In this state, printing was performed on the recording medium. As a result, the electric field of -50 V was applied to the entire surface of the image recording layer through the electrode of the recording medium. In addition, only the checker pattern area was heated. As a result, it was confirmed that a black image pattern with a yellow background was clearly recorded. The resultant image had high contrast and was clearly.

The electric field of +50 V was applied to the entire surface of the image recording layer through the electrode of the recording medium, and the entire surface of the recording medium was heated, so that the entire surface of the recording medium was turned into yellow. Thereafter, the electric field of -50 V was applied to the entire surface of the image recording layer through the electrode of the recording medium, and a character image pattern was input in the heating unit composed of the thermal head. As a result, it was confirmed that fine characters with the yellow background were clearly recorded. As described above, an image was repeatedly recorded and erased, which was confirmed the recording medium was rewritable.

<Image Retentiveness of Recording Medium>

After recording an image on the recording medium, the recording medium was brought into contact with a finger, metal, and an electrostatically-charged object. As a result, no change was observed in image quality and image density, and it was confirmed that the recording medium had excellent image retentiveness. Moreover, the recording medium was left to stand for 3 months at 23°C and 55%RH, and measured for image density before and after being left to stand. The difference in image density ($\Delta$ID) was found to be 1.0%.

It has been revealed from the above results that the recording medium of the present invention is less uneven in color and concentration, had excellent image quality, and also had excellent rewritability and image retentiveness. Electret particles used in the present invention are made to have an electret property by mean of electron beam irradiation, radiation irradiation and corona discharge, so that the particles are very uniform in charge amount, which is believed to effective for preventing unevenness. Also, electret particles having various colors can be obtained only by incorporating colored pigments, which is effective for improving visibility or expressiveness of a recording medium.

The thermoreversible gelling agent for use in the present invention had very high response to gel- or sol-transition temperature. Therefore, printing could be performed by the thermal head, and an image having less image failure and high image quality could be achieved. Moreover, the thermoreversible gelling agent for use in the present invention can directly turn the dispersion medium, which is suitable for dispersing electret particles or electrophoretic particles therein, into sol or gel, and therefore high dispersibility of the particles can be maintained when the dispersion medium is turned into a gel. Aggregation of the electret particles or electrophoretic particles causes electrophoresis thereof to be impaired, and results in low temperature-responsiveness and adhesion of particles, which are factors for largely deteriorating durability to repetitive use, as well as initial image properties. Therefore, the present invention is very effective.

Furthermore, the recording medium of the present invention can have a configuration in which electrically conductive layers or electrically conductive bases are provided above and below the image recording layer, and the electrically conductive layers or electrically conductive bases are electrically connected with an external electrode of the recording medium. When the recording medium is electrically connected with the electric field applying unit of a printer, an image of high contrast can be attained with extremely low driving voltage, and initial image properties and durability to repetitive use can be further improved.

The recording medium of the present invention is a useful recording medium from the viewpoints of high image quality and image retentiveness and the possibility of recording with various colors. The recording medium of the present invention can be used not only in an image forming system using an electric field, but also in an image forming system using heat with a thermal head. This is because an expensive pixel electrode or TFT base is not required in the recording medium, and a complicated and expensive electric field applying unit is not required in the image recording apparatus. Therefore, the recording medium of the present invention is effective in cost saving, and reducing a weight and size of the device.

The recording medium of the present invention has high image retentiveness and image stability for repetitive rewriting; and can store for a long period of time or repeatedly record an image having a high visibility. Accordingly, the recording medium can be suitably used as a replacement of paper.

Reference Signs List

1 First Base
2 Second Base

3 Dispersion Medium
4 White Electrophoretic Particles (Electret Particles)
5 Spacer Particles
6 Spacer
7 Image Recording Layer
8 Black Electrophoretic Particles (Electret Particles)
9 Cell
10 Microcapsules
11 Binder Resin
12 First Electrically conductive Layer
13 First Electrode
14 Second Electrically conductive Layer
15 Second Electrode
16 Electrically conductive Base
20 Roller
21 Dispersion Liquid for Forming Image Recording Layer
22 Coating Device
23 Heating Unit
24 First Base
25 Second Base
26 Roller
27 Roller
28 Coating Liquid for Forming Second Base
29 Heating Unit or Curing Unit
30 Recording Medium
31 Heat Source
32 Heat Roller
33 Pressure Roller
34 High Speed Response Thermistor
35 Thermostat
36 Temperature Sensor
37 Roller
38 Roller
39 Belt-Shaped Film Rotator
40 Image Bearing Member
41 Charger
42 Exposing Unit
43 Charge-Eliminating Unit
44 Counter Electrode
45 Ion Irradiation Head
46 Image Erasing Unit
47 Thermal Head
48 Electric Field Applying Unit
49 Electric Field Applying Unit
50 Platen
51 Electric Field and/or Magnetic Field Applying Unit
52 Electric Field and/or Magnetic Field Applying Unit

## Claims

**1.** A recording medium comprising:

a first base (1);
a second base (2); and
an image recording layer (7) provided between the first base (1) and the second base (2),
wherein the image recording layer (7) contains electrophoretic particles (4, 8), a dispersion medium (3), and a thermoreversible gelling agent,

**characterised in that**:

at least one type of the electrophoretic particles (4, 8) is electret particles, wherein the electret particles are permanently charged particles, and
the thermoreversible gelling agent has an amide bond and at least one selected from the group consisting of an alkyl group having 8 or more carbon atoms and an alkylene group having 8 or more carbon atoms in a molecule thereof.

2. The recording medium according to claim 1, wherein the electret particles (4, 8) contain a fluorine-containing compound.

3. The recording medium according to claim 1 or 2, wherein the electret particles (4, 8) are made to have an electret property by means of electron beam irradiation, radiation irradiation, corona discharge or any combination thereof.

4. The recording medium according to any one of claims 1 to 3, wherein each of the electret particles (4, 8) has a core-shell structure comprising a core and a shell.

5. The recording medium according to any one of claims 1 to 4, wherein the electret particles (4, 8) contain a pigment.

6. The recording medium according to any one of claims 1 to 5, wherein the image recording layer (7) comprises a plurality of microcapsules (10), and wherein each of the microcapsules (10) contains the electret particles (4, 8), the dispersion medium (3), and the thermoreversible gelling agent.

7. The recording medium according to any one of claims 1 to 6, wherein the first base (1) or the second base (2) is an electrically conductive base (16).

8. The recording medium according to any one of claims 1 to 6, further comprising:

an electrically conductive layer (12, 14) provided between the first base (1) and the image recording layer (7), or between the second base (2) and the image recording layer (7); and
an electrode (13, 15) provided in an exterior of the recording medium,

wherein the electrically conductive layer (12, 14) is electrically connected with the electrode (13, 15).

9. The recording medium according to any one of claims 1 to 6, further comprising:

a first electrically conductive layer (12) provided between the first base (1) and the image recording layer (7); and
a first electrode (13) provided in an exterior of the recording medium,
wherein the second base (2) is an electrically conductive base, and
wherein the first electrically conductive layer (12) is electrically connected with the first electrode (13).

10. The recording medium according to any one of claims 1 to 6, further comprising:

a first electrically conductive layer (12) provided between the first base (1) and the image recording layer (7);
a second electrically conductive layer (14) provided between the second base (2) and the image recording layer (7); and
a first electrode (13) and a second electrode (15) provided in an exterior of the recording medium,
wherein the first electrically conductive layer (12) is electrically connected with the first electrode (13), and
wherein the second electrically conductive layer (14) is electrically connected with the second electrode (15).

11. An image recording set comprising: the recording medium according to any one of claims 1 to 10; and an image recording apparatus which comprises a heating unit (29) configured to heat the recording medium, and an electric field applying unit (48, 49) configured to apply an electric field to the the recording medium.

12. The image recording set according to claim 11, wherein the heating unit is a thermal head (47).

13. The image recording set according to claim 11 or 12, wherein the electric field applying unit (48, 49) is electrically connected with the electrically conductive base (16), the electrode (13, 15), or both thereof formed in the recording

medium according to any one of claims 7 to 10, to thereby generate an electric field in the image recording layer (7).

**14.** The image recording set according to claim 11, wherein the image recording apparatus further comprises an image erasing unit (46) configured to heat and apply an electric field to the recording medium to thereby erase an image recorded in the recording medium.

## Patentansprüche

**1.** Aufzeichnungsmedium, umfassend:

eine erste Basis (1);
eine zweite Basis (2); und
eine zwischen der ersten Basis (1) und der zweiten Basis (2) bereitgestellte Bildaufzeichnungsschicht (7),
wobei die Bildaufzeichnungsschicht (7) elektrophoretische Teilchen (4, 8), ein Dispersionsmedium (3) und einen thermoreversiblen Gelbildner enthält,

**dadurch gekennzeichnet, dass**:

zumindest eine Art der elektrophoretischen Teilchen (4, 8) Elektretteilchen ist, wobei die Elektretteilchen permanent geladene Teilchen sind, und
der thermoreversible Gelbildner Folgendes aufweist: eine Amidbindung und zumindest eine aus der Gruppe bestehend aus einer Alkylgruppe, die 8 oder mehr Kohlenstoffatome aufweist, und einer Alkylengruppe, die 8 oder mehr Kohlenstoffatome in einem Molekül davon aufweist, ausgewählte Komponente.

**2.** Aufzeichnungsmedium nach Anspruch 1, wobei die Elektretteilchen (4, 8) eine fluorhaltige Verbindung enthalten.

**3.** Aufzeichnungsmedium nach Anspruch 1 oder 2, wobei die Elektretteilchen (4, 8) durch Elektronenstrahlbestrahlung, Strahlungsbestrahlung, Koronaentladung oder eine beliebige Kombination davon mit einer Elektreteigenschaft versehen werden.

**4.** Aufzeichnungsmedium nach einem der Ansprüche 1 bis 3, wobei jedes der Elektretteilchen (4, 8) eine Kern-Schale-Struktur aufweist, die einen Kern und eine Schale umfasst.

**5.** Aufzeichnungsmedium nach einem der Ansprüche 1 bis 4, wobei die Elektretteilchen (4, 8) ein Pigment enthalten.

**6.** Aufzeichnungsmedium nach einem der Ansprüche 1 bis 5, wobei die Bildaufzeichnungsschicht (7) eine Vielzahl von Mikrokapseln (10) umfasst und wobei jede der Mikrokapseln (10) die Elektretteilchen (4, 8), das Dispersionsmedium (3) und den thermoreversiblen Gelbildner enthält.

**7.** Aufzeichnungsmedium nach einem der Ansprüche 1 bis 6, wobei die erste Basis (1) oder die zweite Basis (2) eine elektrisch leitende Basis (16) ist.

**8.** Aufzeichnungsmedium nach einem der Ansprüche 1 bis 6, ferner umfassend:

eine zwischen der ersten Basis (1) und der Bildaufzeichnungsschicht (7) oder zwischen der zweiten Basis (2) und der Bildaufzeichnungsschicht (7) bereitgestellte elektrisch leitende Schicht (12, 14); und
eine an einer Außenseite des Aufzeichnungsmediums bereitgestellte Elektrode (13, 15),

wobei die elektrisch leitende Schicht (12, 14) elektrisch mit der Elektrode (13, 15) verbunden ist.

**9.** Aufzeichnungsmedium nach einem der Ansprüche 1 bis 6, ferner umfassend:

eine erste, zwischen der ersten Basis (1) und der Bildaufzeichnungsschicht (7) bereitgestellte elektrisch leitende Schicht (12); und
eine erste, an einer Außenseite des Aufzeichnungsmediums bereitgestellte Elektrode (13),
wobei die zweite Basis (2) eine elektrisch leitende Basis ist und wobei die erste elektrisch leitende Schicht (12) elektrisch mit der ersten Elektrode (13) verbunden ist.

**10.** Aufzeichnungsmedium nach einem der Ansprüche 1 bis 6, ferner umfassend:

eine erste, zwischen der ersten Basis (1) und der Bildaufzeichnungsschicht (7) bereitgestellte elektrisch leitende Schicht (12);
eine zweite, zwischen der zweiten Basis (2) und der Bildaufzeichnungsschicht (7) bereitgestellte elektrisch leitende Schicht (14); und
eine erste und eine zweite, an einer Außenseite des Aufzeichnungsmediums bereitgestellte Elektrode (13, 15),
wobei die erste elektrisch leitende Schicht (12) elektrisch mit der ersten Elektrode (13) verbunden ist und
wobei die zweite elektrisch leitende Schicht (14) elektrisch mit der zweiten Elektrode (15) verbunden ist.

**11.** Bildaufzeichnungssatz, umfassend: das Aufzeichnungsmedium nach einem der Ansprüche 1 bis 10; und eine Bildaufzeichnungsvorrichtung, die eine Heizeinheit (29), die konfiguriert ist, um das Aufzeichnungsmedium zu erhitzen, und eine Einheit zum Anlegen eines elektrischen Feldes (48, 49) umfasst, die konfiguriert ist, um ein elektrisches Feld an dem Aufzeichnungsmedium anzulegen.

**12.** Bildaufzeichnungssatz nach Anspruch 11, wobei die Heizeinheit ein Thermokopf (47) ist.

**13.** Bildaufzeichnungssatz nach Anspruch 11 oder 12, wobei die Einheit zum Anlegen eines elektrischen Feldes (48, 49) elektrisch mit der elektrisch leitenden Basis (16), der Elektrode (13, 15) oder beiden davon verbunden ist, die nach einem der Ansprüche 7 bis 10 in dem Aufzeichnungsmedium gebildet sind, um dadurch ein elektrisches Feld in der Bildaufzeichnungsschicht (7) zu erzeugen.

**14.** Bildaufzeichnungssatz nach Anspruch 11, wobei die Bildaufzeichnungsvorrichtung ferner eine Bildlöscheinheit (46) umfasst, die konfiguriert ist, um das Aufzeichnungsmedium zu erhitzen und ein elektrisches Feld daran anzulegen, um dadurch ein in dem Aufzeichnungsmedium aufgezeichnetes Bild zu löschen.

## Revendications

**1.** Milieu d'enregistrement comprenant:

une première base (1);
une seconde base (2); et
une couche d'enregistrement d'image (7) prévue entre la première base (1) et la seconde base (2),
dans lequel la couche d'enregistrement d'image (7) contient des particules électrophorétiques (4, 8), un milieu de dispersion (3), et un agent gélifiant thermoréversible,

**caractérisé en ce que**:

au moins un type de particules électrophorétiques (4, 8) sont des particules d'électret, où les particules d'électret sont des particules chargées de manière permanente, et
l'agent gélifiant thermoréversible possède une liaison amide et au moins l'un sélectionné dans le groupe constitué d'un groupe alkyle ayant 8 atomes de carbone ou plus et un groupe alcylène ayant 8 atomes de carbone ou plus dans une molécule de celui-ci.

**2.** Milieu d'enregistrement selon la revendication 1, dans lequel les particules d'électret (4, 8) contiennent un composé contenant du fluor.

**3.** Milieu d'enregistrement selon la revendication 1 ou 2, dans lequel les particules d'électret (4, 8) sont fabriquées pour présenter une propriété électret à l'aide d'une irradiation par faisceau d'électrons, d'une irradiation de rayons, de décharge couronne ou de n'importe quelle combinaison de celles-ci.

**4.** Milieu d'enregistrement selon l'une quelconque des revendications 1 à 3,
dans lequel chacune des particules d'électret (4, 8) présente une structure type noyau-enveloppe comprenant un noyau et une enveloppe.

**5.** Milieu d'enregistrement selon l'une quelconque des revendications 1 à 4, dans lequel les particules d'électret (4, 8) contiennent un pigment.

6. Milieu d'enregistrement selon l'une quelconque des revendications 1 à 5,
dans lequel la couche d'enregistrement d'image (7) comprend une pluralité de microcapsules (10), et dans lequel chacune des microcapsules (10) contient les particules d'électret (4, 8), le milieu de dispersion (3), et l'agent gélifiant thermoréversible.

7. Milieu d'enregistrement selon l'une quelconque des revendications 1 à 6,
dans lequel la première base (1) ou la seconde base (2) est une base électriquement conductrice (16).

8. Milieu d'enregistrement selon l'une quelconque des revendications 1 à 6, comprenant en outre:

une couche électriquement conductrice (12, 14) prévue entre la première base (1) et la couche d'enregistrement d'image (7), ou entre la seconde base (2) et la couche d'enregistrement d'image (7); et
une électrode (13, 15) prévue dans un extérieur du milieu d'enregistrement,
la couche électriquement conductrice (12, 14) étant électriquement connectée à l'électrode (13, 15).

9. Milieu d'enregistrement selon l'une quelconque des revendications 1 à 6, comprenant en outre:

une première couche électriquement conductrice (12) prévue entre la première base (1) et la couche d'enregistrement d'image (7); et
une première électrode (13) prévue dans un extérieur du milieu d'enregistrement,
la seconde base (2) étant une base électriquement conductrice, et
la première couche électriquement conductrice (12) étant électriquement connectée à la première électrode (13).

10. Milieu d'enregistrement selon l'une quelconque des revendications 1 à 6, comprenant en outre:

une première couche électriquement conductrice (12) prévue entre la première base (1) et la couche d'enregistrement d'image (7);
une seconde couche électriquement conductrice (14) prévue entre la seconde base (2) et la couche d'enregistrement d'image (7); et
une première électrode (13) et une seconde électrode (15) prévues dans un extérieur du milieu d'enregistrement,
la première couche électriquement conductrice (12) étant électriquement connectée à la première électrode (13), et
la seconde couche électriquement conductrice (14) étant électriquement connectée à la seconde électrode (15).

11. Ensemble d'enregistrement d'image comprenant: le milieu d'enregistrement selon l'une quelconque des revendications 1 à 10; et un appareil d'enregistrement d'image qui comprend un dispositif de chauffage (29) configuré pour chauffer le milieu d'enregistrement, et un dispositif d'application de champ électrique (48, 49) configuré pour appliquer un champ électrique au milieu d'enregistrement.

12. Ensemble d'enregistrement d'image selon la revendication 11, dans lequel le dispositif de chauffage est une tête thermique (47).

13. Ensemble d'enregistrement d'image selon la revendication 11 ou 12,
dans lequel le dispositif d'application de champ électrique (48, 49) est électriquement connecté à la base électriquement conductrice (16), à l'électrode (13, 15), ou aux deux formées dans le milieu d'enregistrement selon l'une quelconque des revendications 7 à 10, pour générer de là un champ électrique dans la couche d'enregistrement d'image (7).

14. Ensemble d'enregistrement d'image selon la revendication 11, dans lequel l'appareil d'enregistrement d'image comprend en outre un dispositif d'effacement d'image (46) configuré pour chauffer et appliquer un champ électrique au milieu d'enregistrement pour effacer de là une image enregistrée dans le milieu d'enregistrement.

FIG. 1A

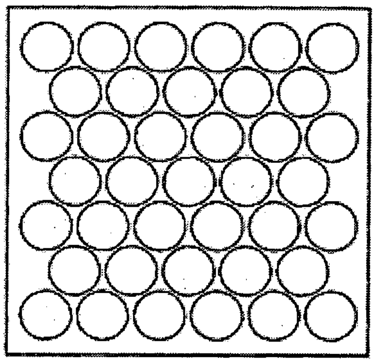

FIG. 1B

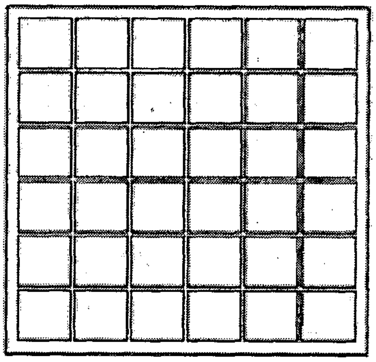

FIG. 1C

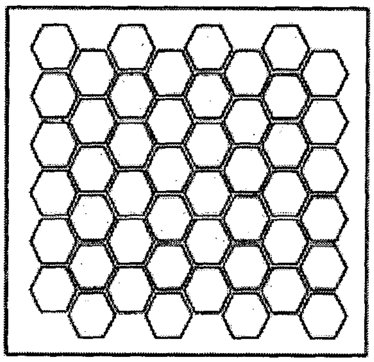

FIG. 2

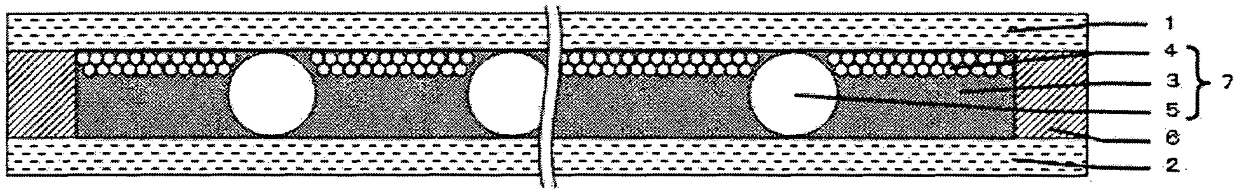


FIG. 3

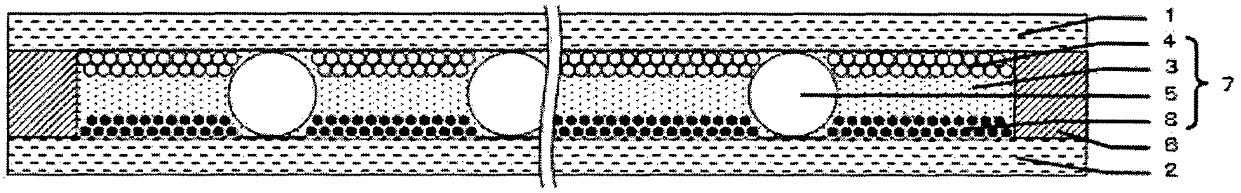


FIG. 4

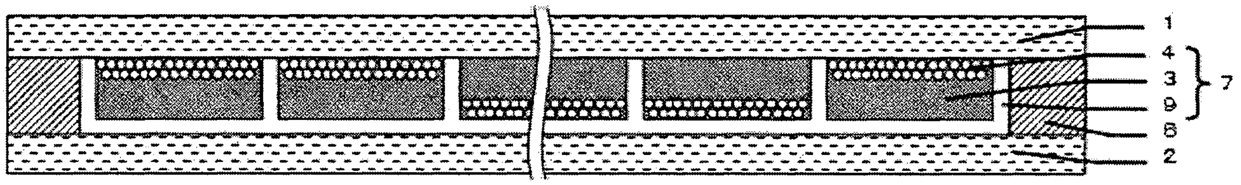


FIG. 5

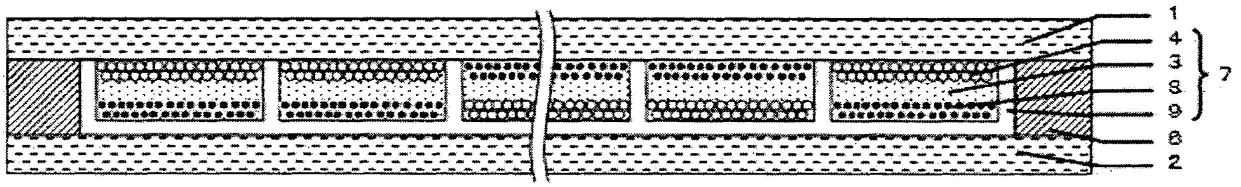

FIG. 6

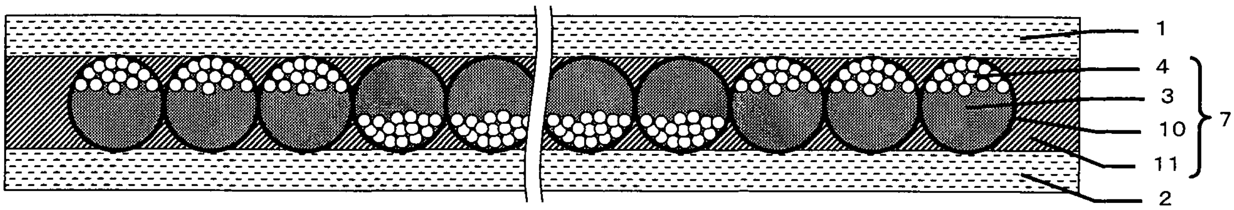


FIG. 7

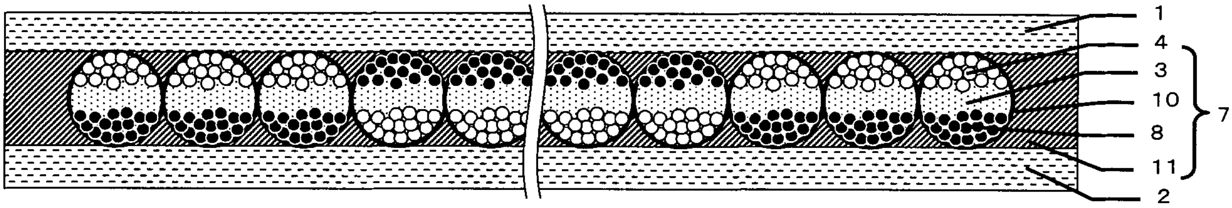


FIG. 8

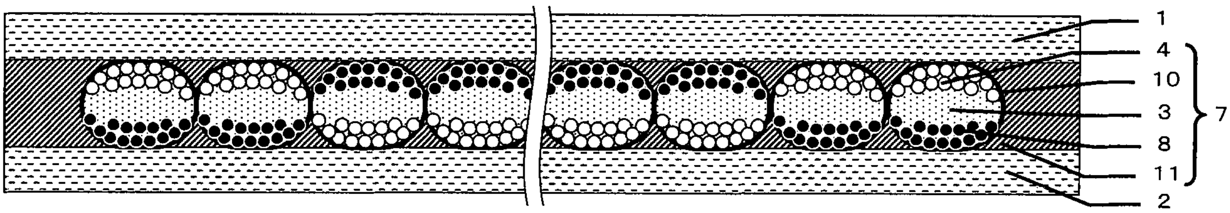


FIG. 9

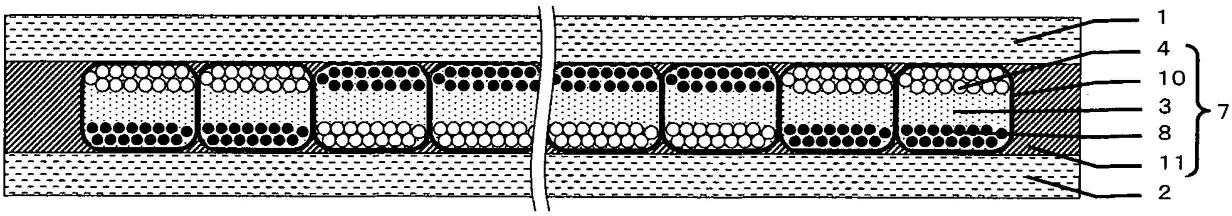

FIG. 10

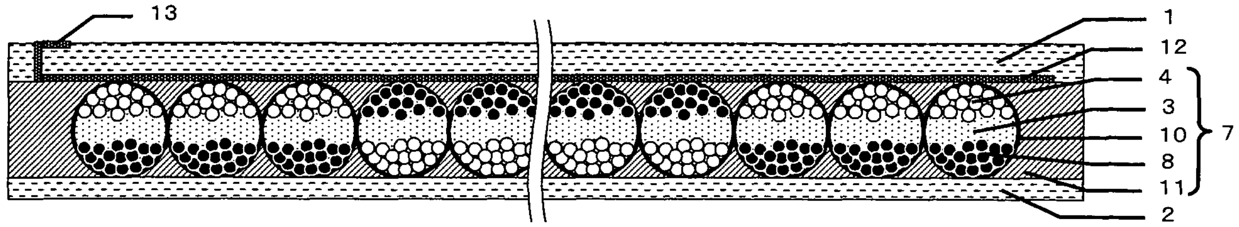


FIG. 11

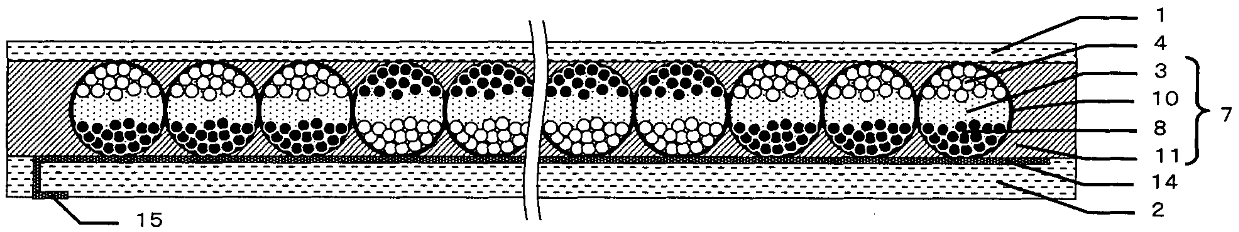


FIG. 12

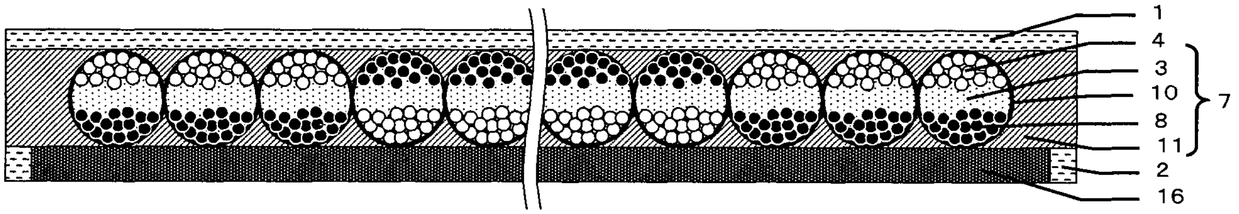


FIG. 13

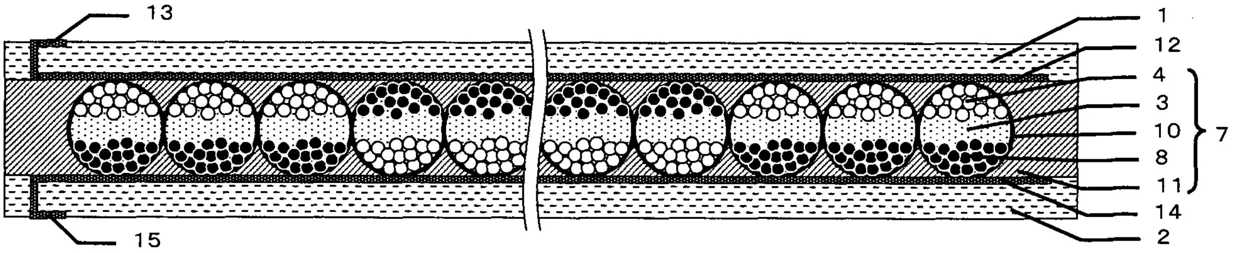

FIG. 14

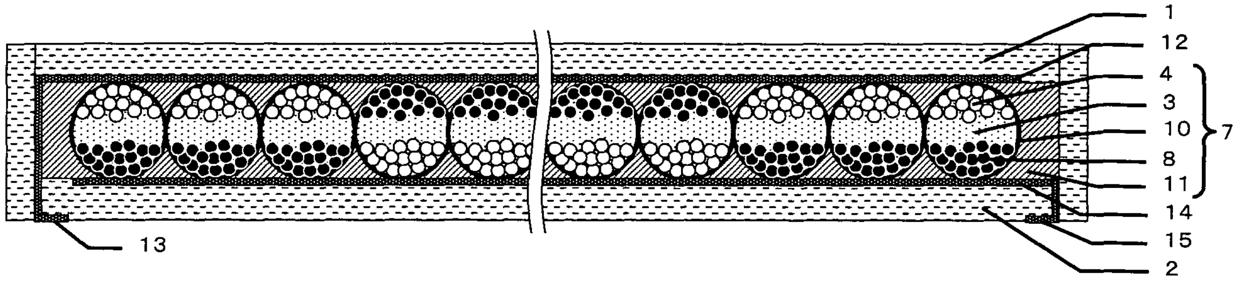


FIG. 15

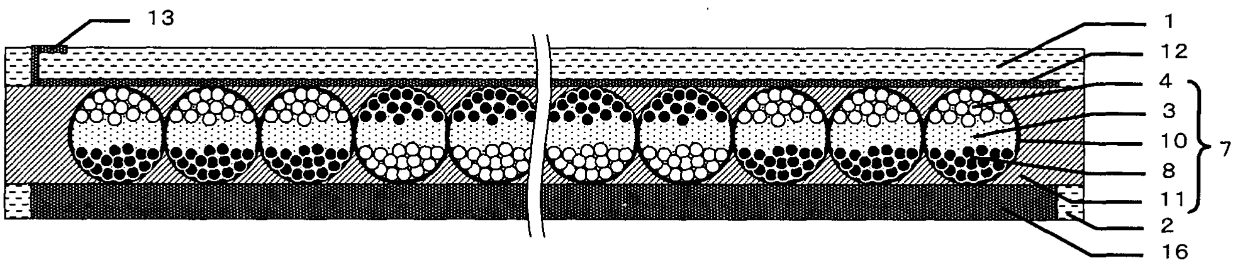


FIG. 16

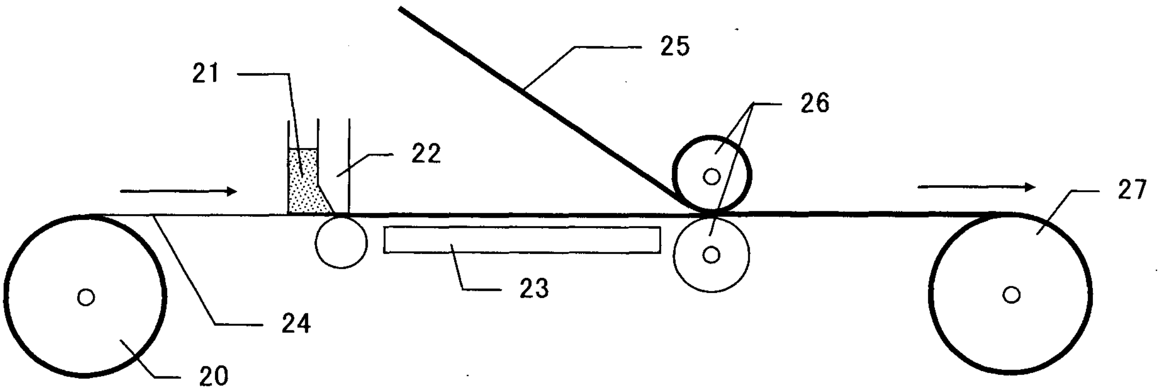

FIG. 17

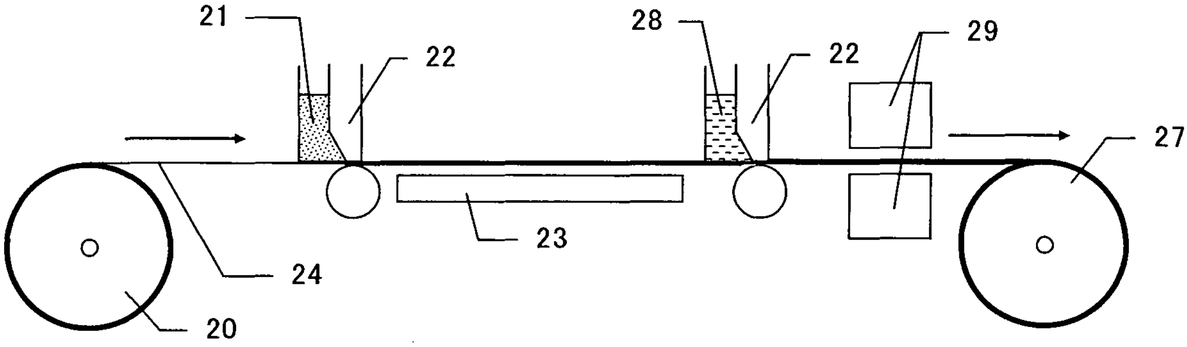


FIG. 18

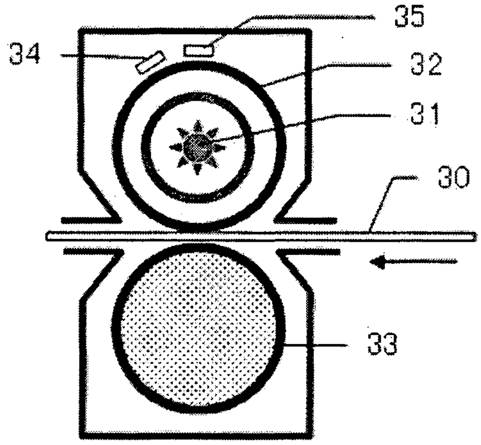


FIG. 19

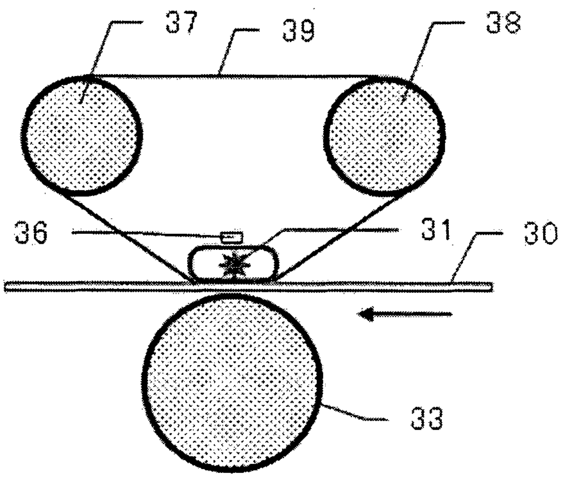

FIG. 20

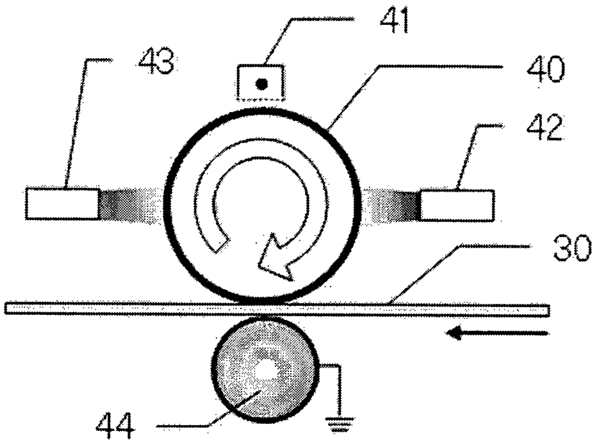


FIG. 21

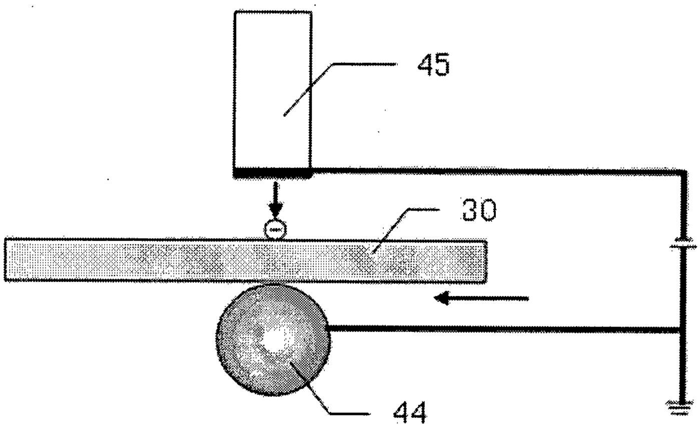

FIG. 22

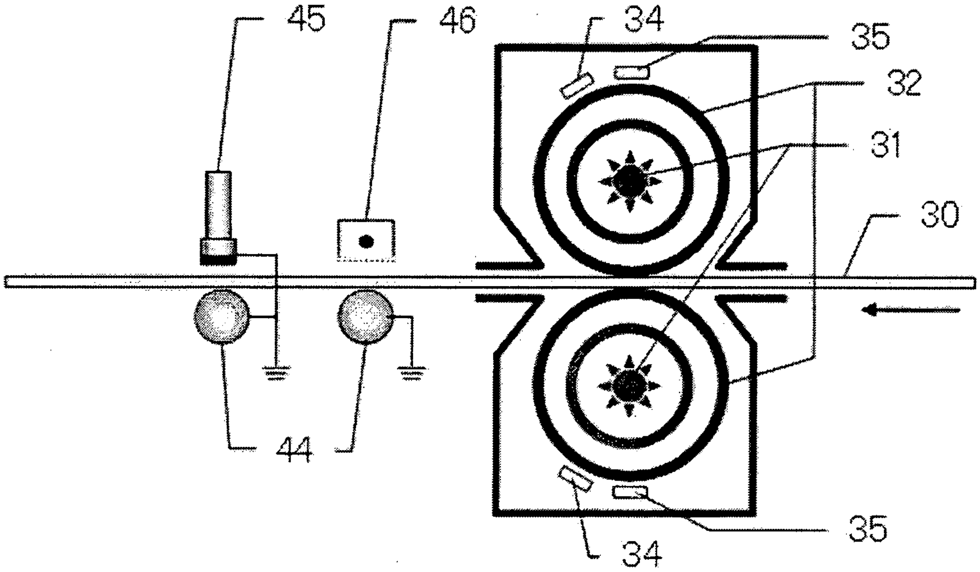


FIG. 23

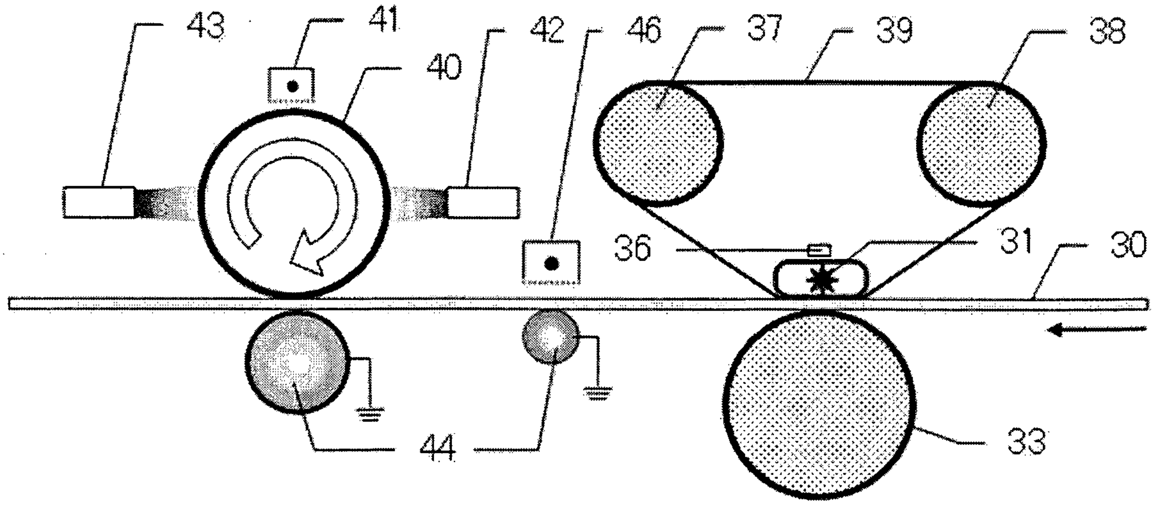

FIG. 24

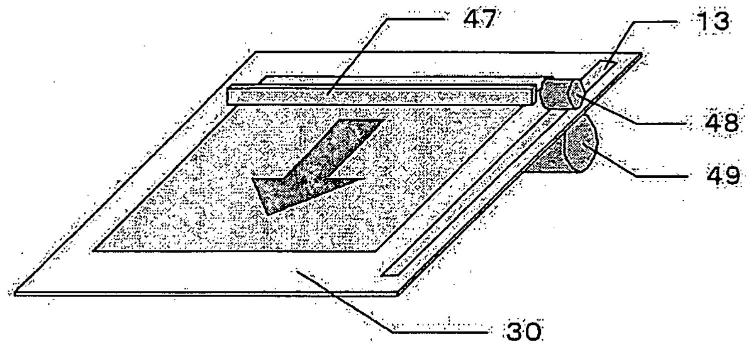


FIG. 25

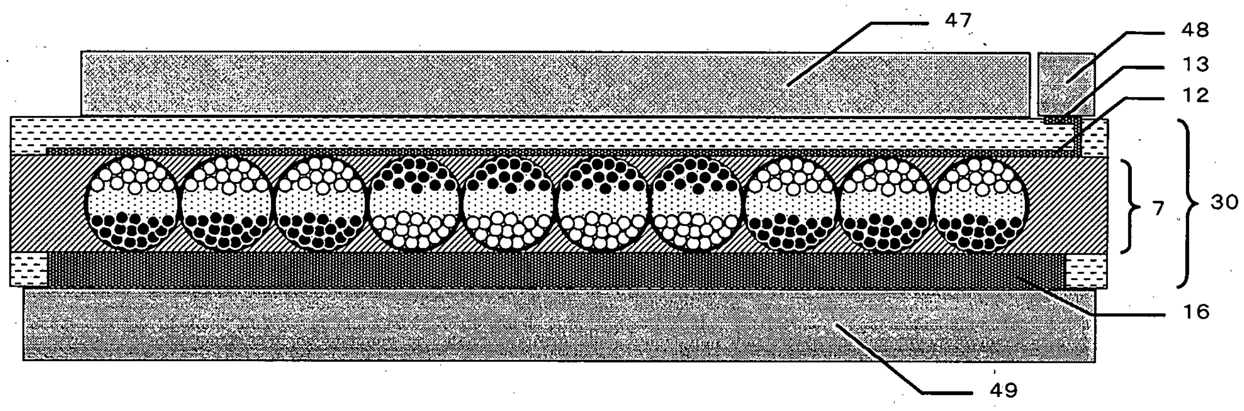


FIG. 26

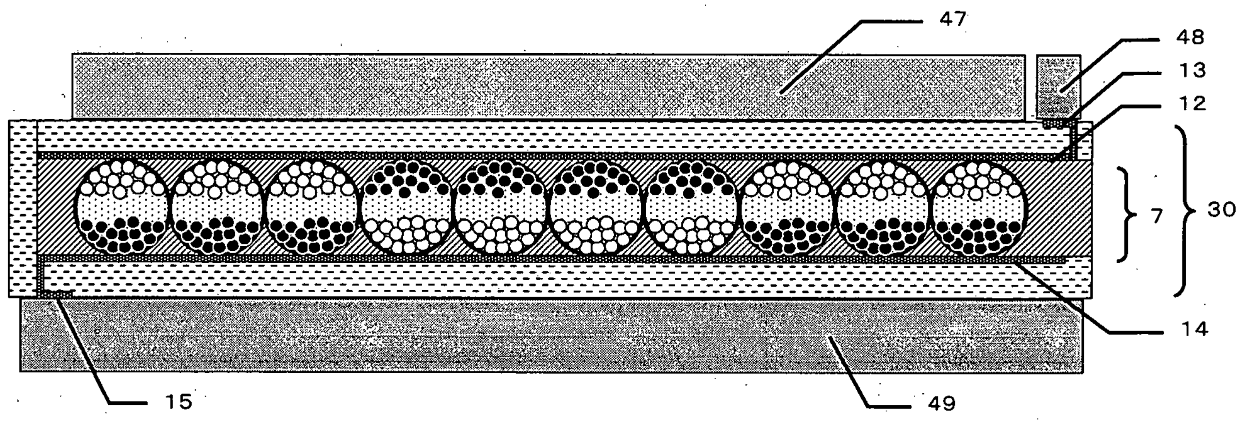

FIG. 27

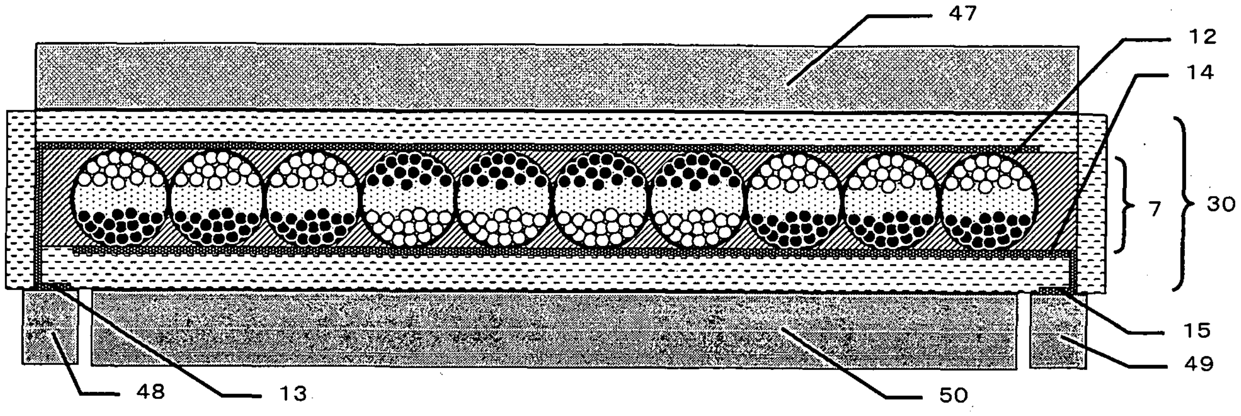


FIG. 28

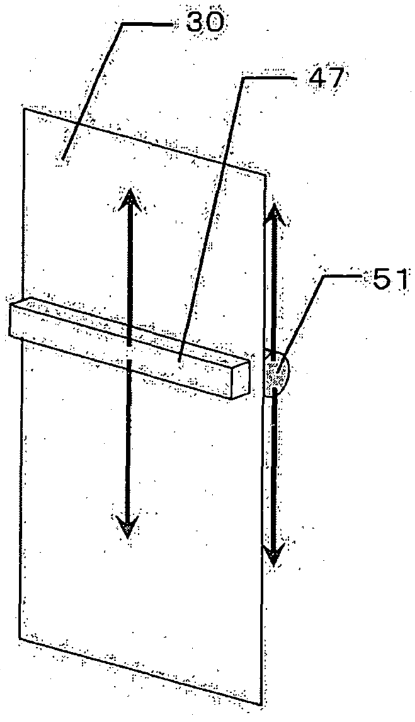

FIG. 29

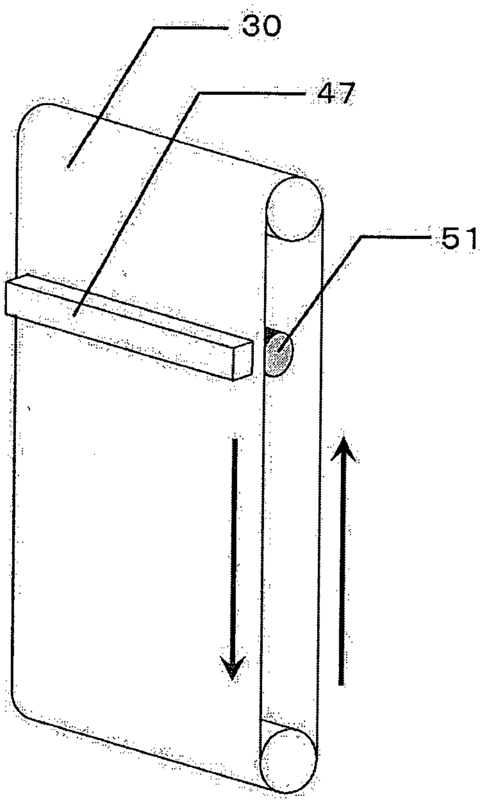

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2007002428 A1
- JP 5014507 B
- JP 50015115 B
- JP 2551783 B
- JP 4410135 B
- JP 2007286124 A
- JP 2010002933 A
- JP 4168556 B
- JP 2001301325 A
- JP 4114374 B
- JP 2003091022 A
- JP 2007140367 A
- JP 2196227 A
- JP 2003149691 A
- JP 2007011342 A
- JP 2005031189 A
- JP 2007206570 A
- JP 3725092 B
- JP 2005232108 A
- JP 2004182697 A